# EUROPEAN PATENT APPLICATION

(11) **EP 4 742 712 A1**
(43) Date of publication of application: **13.05.2026**
(21) Application number: 24853611.2
(22) Date of filing: 06.08.2024
(51) Int. Cl.: H04W 8/02

(54) **INFORMATION PROCESSING METHOD AND APPARATUS, COMMUNICATION DEVICE, AND STORAGE MEDIUM**

(30) Priority: 11.08.2023 CN 202311014854; 21.08.2023 CN 202311056116
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Zehao, Beijing 100032 (CN); WANG, Dan, Beijing 100032 (CN)
(74) Representative: J A Kemp LLP
(86) International application number: PCT/CN2024/110051
(87) International publication number: WO 2025/036200

(57) **Abstract**

Disclosed in the embodiments of the present disclosure are an information processing method and apparatus, a communication device, and a storage medium. The method comprises: obtaining an identifier of an edge application server; and determining that the identifier of the edge application server matches or does not match first information, wherein the first information comprises a first identifier, and the first identifier is one or more identifiers, or, the first identifier is the range of identifiers.

## Description

### CROSS-REFERENCE TO RELATED APPLICATION

This application claims a priority of Chinese Patent Application No. 202311014854.0, filed on August 11, 2023, and a priority of Chinese Patent Application No. 202311056116.2, filed on August 21, 2023, the entire contents of which are incorporated herein by reference.

### TECHNICAL FIELD

The present disclosure relates to the technical field of communication, and particularly relates to a method and an apparatus for processing information, a communication device, and a storage medium.

### BACKGROUND

In Edge Computing (EC) deployment scenarios, there may be multiple Application Servers (ASs) deployed at various edges or centralized locations. These application servers may have a same domain name and different Internet Protocols (IPs) address. Therefore, User Equipment (UE) needs to acquire an IP address of an appropriate Edge Application Server (EAS), which is local service discovery, or EAS discovery.

In a roaming scenario, a control and an anchor of a session are both on a Home Public Land Mobile Network (HPLMN), and a user plane of the session also ends at the HPLMN. However, in an EAS discovery procedure in the Home Routed (HR) roaming scenario, during a Protocol Data Unit (PDU) session establishment procedure, a Home-Session Management Function (H-SMF) transmits offloading information to a Visited-Session Management Function (V-SMF), and the offloading information may or may not include a Fully Qualified Domain Name (FQDN). When the offloading information does not include the FQDN, a network side will not process Domain Name System queries. Consequently, EAS addresses unauthorized or disallowed in the offloading information may be transmitted to the UE.

On the other hand, when the H-SMF transmits the offloading information to the V-SMF, the offloading information may be replaced with an offload Identifier (ID). However, the offload ID is generated by the HPLMN, and different Public Land Mobile Networks (PLMNs) may associate a same offload ID with different offloading information. Since different PLMNs do not communicate with each other, there may be a problem that one offload ID corresponds to different offloading information in different PLMNs.

### SUMMARY

In order to solve the technical problems existing in the related art, embodiments of the present disclosure provide a method and apparatus of processing information, a communication device, and a storage medium.

In order to achieve the above object, the technical solution of the embodiments of the present disclosure is realized as follows:
In a first aspect, an embodiment of the present disclosure provides a method of processing information, the method includes the following operations:
An identifier of the edge application server is acquired; and
It is determined that the identifier of the edge application server matches or does not match the first information. The first information includes a first identifier, the first identifier is one or more identifiers, or the first identifier is a range of identifiers.

In the above scheme, the method is applied to a first network device, and the first network device is at least one of a first session management function, a first edge application server discovery function, or a first user plane function.

In the above scheme, the method further includes an operation that a first message is transmitted in case of determining that the identifier of the edge application server matches or does not match the first information.

In the above schemes, the operation that the first message is transmitted in case of determining that the identifier of the edge application server matches or does not match the first information includes an operation that:
if the first identifier is one or more identifiers for which offloading in local and/or in a visited network is not authorized not permitted/not allowed, then in case of determining that the identifier of the edge application server matches the first information, the first message is transmitted; and/or,
if the first identifier is one or more identifiers for which offloading in local and/or in a visited network is authorized/permitted/allowed, then in case of determining that the identifier of the edge application server does not match the first information, the first message is transmitted.

In the above schemes, the method is applied to a first network device, and in case that the first network device is a first session management function, the operation that the first message is transmitted includes an operation that:
the first message is transmitted to a first edge application server discovery function or a first user plane function, the first message is used to instruct the first edge application server discovery function or the first user plane function to transmit a Domain Name System (DNS) request; or
the first message is transmitted to a first edge application server discovery function or a first user plane function, the first message includes second information used to instruct the first edge application server discovery function or the first user plane function to transmit a DNS request; or
the first message is transmitted to a first edge application server discovery function or a first user plane function, so that the first edge application server discovery function or the first user plane function transmits a DNS request after receiving the first message.

In the above schemes, the operation that the first message is transmitted includes operations that:
the first session management function constructs the DNS request and transmits the first message carrying the DNS request to the first edge application server discovery function or the first user plane function, herein the first message is used to instruct the first edge application server discovery function or the first user plane function to transmit the DNS request; or
the first session management function constructs the DNS request and transmits the first message carrying the DNS request to the first edge application server discovery function or the first user plane function, herein the first message includes the second information used to instruct the first edge application server discovery function or the first user plane function to transmit the DNS request; or
the first session management function constructs the DNS request and transmits the first message carrying the DNS request to the first edge application server discovery function or the first user plane function, so that the first edge application server discovery function or the first user plane function transmits the DNS request after receiving the first message; or
the first session management function transmits the first message to the first edge application server discovery function or the first user plane function, herein the first message is used to instruct the first edge application server discovery function or the first user plane function to construct the DNS request and/or transmit the DNS request; or
the first session management function transmits the first message to the first edge application server discovery function or the first user plane function, herein the first message includes third information used to instruct the first edge application server discovery function or the first user plane function to construct the DNS request and/or transmit the DNS request; or
the first session management function transmits the first message to the first edge application server discovery function or the first user plane function, so that the first edge application server discovery function or the first user plane function constructs the DNS request and/or transmits the DNS request after receiving the first message.

In the above schemes, when the DNS request carried in the first message includes information related to a Home Public Land Mobile Network (H-PLMN), the operation that the first edge application server discovery function or the first user plane function transmits the DNS request includes an operation that: the first edge application server discovery function or the first user plane function transmits the DNS request to a Home DNS (H-DNS) server or a visited DNS (V-DNS) server; and/or
when the DNS request carried in the first message does not include information related to a H-PLMN, the operation that the first edge application server discovery function or the first user plane function transmits the DNS request includes an operation that: the first edge application server discovery function or the first user plane function transmits the DNS request to a H-DNS server.

In the above schemes, when the DNS request constructed by the first edge application server discovery function or the first user plane function includes information related to a H-PLMN, the operation that the first edge application server discovery function or the first user plane function transmits the DNS request includes an operation that: the first edge application server discovery function or the first user plane function transmits the DNS request to a H-DNS server or a V-DNS server; and/or
when the DNS request constructed by the first edge application server discovery function or the first user plane function does not include information related to a H-PLMN, the operation that the first edge application server discovery function or the first user plane function transmits the DNS request includes an operation that: the first edge application server discovery function or the first user plane function transmits the DNS request to a H-DNS server

In the above schemes, the method is applied to a first network device, and in case that the first network device is a first edge application server discovery function or a first user plane function, the operation that the first message is transmitted includes an operation that:
the first message is transmitted to a DNS server.

In the above schemes, the operation that the first message is transmitted to the DNS server includes an operation that: a DNS request is transmitted to the DNS server.

In the above schemes, the operation that the DNS request is transmitted to the DNS server includes operations that:
the DNS request is transmitted to an H-DNS server or a V-DNS server, the DNS request includes information related to a H-PLMN; and/or
the DNS request is transmitted to to a H-DNS server, the DNS request does not includes information related to a H-PLMN.

In the above schemes, the operation that the first message is transmitted to the DNS server includes operations that:
the DNS request is constructed and the DNS request is transmitted to the DNS server.

In the above schemes, the method is applied to a first network device, and in case that the first network device is a first session management function, the operation that the first message is transmitted includes operations that:
the first message is transmitted to a first terminal, the first message is used to instruct the first terminal to retransmit a DNS request to a H-DNS server, or instruct the first terminal to transmit a DNS request to a H-DNS server; or,
the first message is transmitted to a first edge application server discovery function or a first user plane function, herein the first message is used to instruct the first edge application server discovery function or the first user plane function to transmit a second message to the first terminal, or the first message is used to cause the first edge application server discovery function or the first user plane function to transmit a second message to the first terminal after receiving the first message.

In the above schemes, the second message is used to instruct the first terminal to retransmit the DNS request to the H-DNS server, or the second message is used to instruct the first terminal to transmit the DNS request to the H-DNS server.

In the above schemes, the operation that the first message is transmitted includes operations that:
in case of determining that the identifier of the edge application server matches or does not match the first information, it is determined to instruct the first terminal to retransmit the DNS request or it is determined to instruct the first terminal to transmit the DNS request, and the first message is transmitted.

In the above schemes, the method is applied to a first network device, and in case that the first network device is a first edge application server discovery function or a first user plane function, the operation that the first message is transmitted includes an operation that:
a first message is transmitted to the first terminal, the first message is used to instruct the first terminal to retransmit a DNS request to a H-DNS server, or the first message is used to instruct the first terminal to transmit a DNS request to a H-DNS server.

In the above schemes, the operation that the first message is transmitted includes an operation that:

In case of determining that the identifier of the edge application server matches or does not match the first information, it is determined to instruct the first terminal to retransmit the DNS request or it is determined to instruct the first terminal to transmit the DNS request, and the first message is transmitted to the first terminal.

In the above schemes, in case that the method is applied to a first network device and the first network device is a first session management function, the identifier of the edge application server is from a first edge application server discovery function or a first user plane function;
in case that the method is applied to a first network device and the first network device is a first edge application server discovery function or a first user plane function, the identifier of the edge application server is from a DNS server or a Local Domain Name System (L-DNS) server.

In the above schemes, in case that the method is applied to a first network device and the first network device is a first session management function, the method further includes an operation that:
the first information from a second session management function is received; and/or,
in case that the first network device is a first edge application server discovery function or a first user plane function, the method further includes an operation that:
the first information transmitted by a first session management function is received.

In the above schemes, the first session management function, the first edge application server discovery function, and the first user plane function are all located at a visited location; and/or,
the second session management function is located at a home location.

According to a second aspect, an embodiment of the present disclosure further provides a method of processing information. The method is applied to a first edge application server discovery function or a first user plane function, the method includes operations that:
a first message transmitted by a first session management function is received, the first message is used to instruct the first edge application server discovery function or the first user plane function to transmit a DNS request; or, the first message includes second information used to instruct the first edge application server discovery function or the first user plane function to transmit a DNS request; or, the first message causes the first edge application server discovery function or the first user plane function to transmit a DNS request after receiving the first message; and
the DNS request is transmitted to a DNS server.

In the above scheme, the operation that the first message transmitted by the first session management function is received includes operations that:
a first message carrying a DNS request transmitted by a first session management function is received, herein the first message is used to instruct the first edge application server discovery function or the first user plane function to transmit the DNS request; or, the first message includes second information used to instruct the first edge application server discovery function or the first user plane function to transmit the DNS request; or, the first message causes the first edge application server discovery function or the first user plane function to transmit the DNS request after receiving the first message; or
receiving the first message transmitted by a first session management function is received, and a DNS request is constructed based on the first message, herein the first message is used to instruct the first edge application server discovery function or the first user plane function to construct the DNS request and transmit the DNS request; or, the first message includes third information used to instruct the first edge application server discovery function or the first user plane function to construct the DNS request and/or transmit the DNS request; or, the first message causes the first edge application server discovery function or the first user plane function to construct the DNS request and transmit the DNS request after receiving the first message.

In the above schemes, the operation that the DNS request is transmitted includes operations that:
when the DNS request carried in the first message includes information related to a H-PLMN, the DNS request is transmitted to a H-DNS server or a V-DNS server; and/or,
when the DNS request carried in the first message does not include information related to a H-PLMN, the DNS request is transmitted to a H-DNS server.

In the above schemes, the operation that the DNS request is transmitted includes operations that:
when the DNS request constructed by the first edge application server discovery function or the first user plane function includes information related to a H-PLMN, the DNS request is transmitted to a H-DNS server or a V-DNS server; and/or,
when the DNS request constructed by the first edge application server discovery function or the first user plane function does not include information related to a H-PLMN, the DNS request is transmitted to a H-DNS server.

In the above schemes, the first session management function, the first edge application server discovery function, and the first user plane function are all located at a visited location.

In a third aspect, an embodiment of the present disclosure further provides a method of processing information. The method is applied to a first edge application server discovery function or a first user plane function. The method includes operations that:
a first message transmitted by a first session management function is received, herein the first message is used to instruct the first edge application server discovery function or the first user plane function to transmit a second message to a first terminal, or the first message is used to cause the first edge application server discovery function or the first user plane function to transmit a second message to a first terminal after receiving the first message; and
a second message is transmitted to the first terminal.

In the above schemes, the second message is used to instruct the first terminal to retransmit a DNS request to a H-DNS server, or the second message is used to instruct the first terminal to transmit a DNS request to a H-DNS server.

In the above schemes, the first session management function, the first edge application server discovery function, and the first user plane function are all located at a visited location.

According to a fourth aspect, an embodiment of the present disclosure further provides a method of processing information. The method is applied to a first terminal, the method includes operations that:
a first message transmitted by a first network device is received, or a second message transmitted by a first edge application server discovery function or a first user plane function is received, the first message and the second message are used to instruct the first terminal to retransmit a DNS request to a H-DNS server, or the first message and the second message are used to instruct the first terminal to transmit a DNS request to a H-DNS server, the first network device is at least one of a first session management function, the first edge application server discovery function or the first user plane function; and
the DNS request is transmitted to the H-DNS server, or the DNS request is retransmitted to the H-DNS server.

In a fifth aspect, an embodiment of the present disclosure further provides a method of processing information. The method is applied to a first session management function, the method includes an operation that:
fourth information transmitted by a second session management function is received, herein the fourth information includes at least one of information of a second identifier, information indicating an identifier of a PLMN, an identifier of a PLMN, information indicating an identifier of a second session management function, or an identifier of the second session management function; or, the fourth information includes a second identifier, and the second identifier includes at least one of information indicating an identifier of a PLMN or information indicating an identifier of the second session management function.

In the above scheme, the fourth information is information at node granularity or node level, and/or the fourth information transmitted by the second session management function is received through node granularity or node level.

In the above schemes, the operation that the fourth information transmitted by the second session management function is received includes operations that:
the first session management function calls a first service of a second session management function to receive the fourth information; or,
the first session management function calls a second service of a first session management function through the second session management function, to receive the fourth information from the second session management function.

In the above scheme, the first service and/or the second service is at least one of the following services: a service for transmitting offloading information, a service for transmitting an offloading policy, a service for transmitting node level offloading information, a service for transmitting a node level offloading policy, a Visited PLMN (VPLMN) specific offloading information service, a VPLMN specific offloading policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

In the above schemes, the first session management function is located at a visited location, and/or the second session management function is located at a home location.

In the above schemes, all or part of the fourth information is used to indicate fifth information, and the fifth information is information related to offloading.

In the above schemes, the fifth information includes first information.

In the above schemes, the method further includes an operation that:
sixth information from the second session management function is received, the sixth information includes at least one of at least one of a second identifier, information indicating an identifier of a PLMN, information indicating an identifier of a second session management function, information related to an offloading policy, or a first association relationship, the first association relationship is an association relationship between at least two of the second identifier, the information indicating the identifier of the PLMN, the information indicating the identifier of the second session management function, or the information related to the offloading policy.

In the above schemes, the sixth information is determined by the second session management function and transmitted to the first session management function; or,
the sixth information is determined by a first policy management function and forwarded to the first session management function through the second session management function; or,
a part of contents of the sixth information is determined by the first policy management function, and the other part of the contents of the sixth information is determined by the second session management function, and the second session management function transmits contents determined by the first policy management function and contents determined by the second session management function to the first session management function.

In the above schemes, the fourth information is provided by the second session management function and transmitted to the first session management function; or,
the fourth information is provided by a first policy management function and transmitted to the first session management function through the second session management function; or,
a part of contents of the fourth information is provided by a first policy management function, and the other part of the contents of the fourth information is provided by the second session management function, and the second session management function transmits contents provided by the first policy management function and contents provided by the second session management function to the first session management function.

In the above schemes, the first session management function is located at a visited place; and/or the second session management function is located at a home location; and/or the first policy management function is located at the home location.

According to a sixth aspect, an embodiment of the present disclosure further provides a method of processing information, herein the method is applied to a second session management function, the method includes an operation that:
fourth information is transmitted to a first session management function, herein the fourth information includes at least one of: information of a second identifier, information indicating an identifier of a PLMN, an identifier of a PLMN, information indicating an identifier of the second session management function, or an identifier of a second session management function; or, the fourth information includes a second identifier, and the second identifier includes at least one of information indicating an identifier of a PLMN or information indicating an identifier of the second session management function.

In the above scheme, all or part of the fourth information is used to indicate fifth information, and the fifth information is information related to offloading.

In the above schemes, the fifth information includes the first information.

In the above schemes , the method further includes an operation that:
sixth information is transmitted to the first session management function, the sixth information includes at least one of a second identifier, information indicating an identifier of a PLMN, information indicating an identifier of the second session management function, information related to an offloading policy, or a first association relationship, the first association relationship is an association relationship between at least two of the second identifier, the information indicating the identifier of the PLMN, the information indicating the identifier of the second session management function, or the information related to the offloading policy.

In the above schemes, the sixth information is determined by the second session management function and transmitted to the first session management function; or,
the sixth information is determined by a first policy management function and forwarded to the first session management function through the second session management function; or,
a part of contents of the sixth information is determined by the first policy management function, and the other part of the contents of the sixth information is determined by the second session management function, and the second session management function transmits contents determined by the first policy management function and contents determined by the second session management function to the first session management function.

In the above schemes, the fourth information is provided by the second session management function and transmitted to the first session management function; or,
the fourth information is provided by the first policy management function and transmitted to the first session management function through the second session management function; or,
a part of contents of the fourth information is provided by the first policy management function, and the other part of the contents of the fourth information is provided by the second session management function, and the second session management function transmits contents provided by the first policy management function and contents provided by the second session management function to the first session management function.

In the above schemes, the fourth information or a part of the contents of the fourth information is information at node granularity or node level, and/or the fourth information or a part of the contents of the fourth information is provided by the first policy management function through node granularity or node level.

In the above schemes, the method further includes operations that: the second session management function calls a third service of the first policy control function, to receive the fourth information or a part of the fourth information from the first policy control function; or,
the second session management function calls a fourth service of the second session management function through a first policy control function, to receive the fourth information or a part of the contents of the fourth information from the first policy control function.

In the above schemes, the third service and/or the fourth service is at least one of the following services: a service for transmitting offloading information, a service for transmitting an offloading policy, a service for transmitting node level offloading information, a service for transmitting a node level offloading policy, a VPLMN specific offloading information service, a VPLMN specific offloading policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

In the above schemes, the first session management function is located at a visited location; and/or the second session management function is located at a home location; and/or the first policy management function is located at the home location.

In a seventh aspect, an embodiment of the present disclosure further provides a method of processing information, the method includes an operation that:
a first network function constructs and/or transmits DNS request information, the DNS request information includes at least one of: address information related to an HPLMN, address information of a home subscriber plane function (H-UPF), or address information of a home PDU session anchor (H-PSA).

In the above scheme, at least one of the address information related to the HPLMN, the address information of the H-UPF, and the address information of the H-PSA is used as an Extended DNS client subnet option (ECS option).

In the above schemes, the method further includes an operation that:
the first network function receives first indication information transmitted by a second network function, the first indication information is used to instruct the first network function to construct and/or transmit the DNS request information.

In the above schemes, the operation that the first network function constructs and/or transmits the DNS request information includes an operation that:
the first network function constructs and/or transmits the DNS request information when an Edge Application Server (EAS) Internet Protocol (IP) included in a DNS response does not belong to an authorized/permitted/allowed IP range.

In the above schemes, the first network function is at least one of:
an edge application server discovery function, a user plane function, a uplink classifier, a PDU session anchor, or a session management function.

In the above schemes, the second network function is a session management function.

In the above schemes, the first network function is a network function of a VPLMN.

In the above schemes, the second network function is a network function of a VPLMN.

According to an eighth aspect, an embodiment of the present disclosure further provides a method of processing information, the method includes an operation that:
the first network function constructs DNS request information and/or transmits the DNS request information to a second DNS server, the second DNS server is provided by a HPLMN.

In the above scheme, the operation that the first network function constructs the DNS request information and/or transmits the DNS request information to the second DNS server includes an operation that:
the first network function constructs the DNS request information and/or transmits the DNS request information to the second DNS server when an EAS IP included in the DNS response does not belong to the authorized/allowed/possible IP range.

In the above schemes, the DNS request information includes a same Full Qualified Domain Name (FQDN);
herein, the DNS request information includes the same FQDN, which means at least one of the following situations:
a FQDN included in the DNS request information is the same as a FQDN corresponding to an EAS IP included in a DNS response;
a FQDN included in the DNS request information is the same as a FQDN included in a DNS response; or
a FQDN included in the DNS request information is the same as a FQDN included in a DNS request corresponding to a DNS response.

In the above schemes, the first network function is at least one of:
an edge application server discovery function, a user plane function, a uplink classifier, a PDU session anchor, or a session management function.

In the above schemes, the first network function is a network function of a VPLMN.

In a ninth aspect, an embodiment of the present disclosure further provides a method of processing information. The method is applied to a third network function. The method includes an operation that:

A third network function receives seventh information from a fourth network function, the seventh information includes at least one of: information of a second identifier, information indicating a PLMN identifier, an identifier of a PLMN, information indicating an identifier of a second session management function, or an identifier of a second session management function;

the seventh information is information at node granularity or node level, and/or the third network function receives the seventh information from the fourth network function through node granularity or node level.

In the above schemes, the operation that the third network function receives seventh information from the fourth network function, includes operations that:
the third network function calls a fifth service of a fourth network function, to receive g the seventh information from the fourth network function; or,
the third network function calls a sixth service of the third network function through the fourth network function, to receive the seventh information from the fourth network function.

In the above schemes, the fifth service and/or the sixth service is at least one of the following services: a service for transmitting offloading information, a service for transmitting an offloading policy, a service for transmitting node level offloading information, a service for transmitting a node level offloading policy, a VPLMN specific offloading information service, a VPLMN Specific Offloading Policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

In the above schemes, the third network function and/or the fourth network function is a session management function.

In the above schemes, the third network function is located at a visited location, and/or the fourth network function is located at a home location.

In the above schemes, the third network function is a session management function, and/or the fourth network function is a policy control function.

In the above schemes, the third network function and/or the fourth network function are located at a home location.

According to a tenth aspect, an embodiment of the present disclosure further provides a method of processing information. The method is applied to a fourth network function, the method includes an operation that:
the fourth network function transmits seventh information to a third network function, the seventh information includes at least one of: information of a second identifier, information indicating an identifier of a PLMN, an identifier of a PLMN, information indicating an identifier of a second session management function, or an identifier of a second session management function;
the seventh information is information at node granularity or node level, and/or the fourth network function transmits the seventh information to the third network function through node granularity or node level.

In the above scheme, the operation that the fourth network function transmits the seventh information to the third network function includes operations that:
the fourth network function calls a fifth service of the fourth network function through the third network function, to transmit the seventh information to the third network function; or,
the fourth network function calls a sixth service of the third network function, to transmit the seventh information to the third network function.

In the above scheme, the fifth service and/or the sixth service is at least one of the following services: a service for transmitting offloading information, a service for transmitting an offloading policy, a service for transmitting node level offloading information, a service for transmitting a node level offloading policy, a VPLMN specific offloading information service, a VPLMN specific offloading policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

In the above schemes, the third network function and/or the fourth network function is a session management function.

In the above schemes, the third network function is located at a visited location, and/or the fourth network function is located at a home location.

In the above schemes, the third network function is a session management function, and/or the fourth network function is a policy control function.

In the above schemes, the third network function and/or the fourth network function are located at a home location.

According to an eleventh aspect, an embodiment of the present disclosure further provides an apparatus of processing information. The apparatus includes: a first communication unit and a first processing unit.

The first communication unit is configured to acquire an identifier of an edge application server.

The first processing unit is configured to determine that the identifier of the edge application server matches or does not match first information, the first information includes a first identifier, the first identifier is one or more identifiers, or the first identifier is a range of identifiers.

According to a twelfth aspect, an embodiment of the present disclosure further provides an apparatus of processing information. The apparatus is applied to a first edge application server discovery function or a first user plane function. The apparatus includes: a second communication unit. The second communication unit is configured to: receive a first message transmitted by a first session management function, the first message is used to instruct the first edge application server discovery function or the first user plane function to transmit a DNS request; or, the first message includes second information used to instruct the first edge application server discovery function or the first user plane function to transmit a DNS request; or, the first message causes the first edge application server discovery function or the first user plane function to transmit a DNS request after receiving the first message; and the second communication unit is further configured to transmit the DNS request.

According to a thirteenth aspect, an embodiment of the present disclosure further provides an apparatus of processing information. The apparatus is applied to a first edge application server discovery function or a first user plane function. The apparatus includes: a third communication unit, configured to receive a first message transmitted by a first session management function. The first message is configured to instruct the first edge application server discovery function or the first user plane function to transmit a second message to a first terminal, or the first message is used to cause the first edge application server discovery function or the first user plane function to transmit a second message to a first terminal after receiving the first message. The third communication unit is configured to transmit the second message to the first terminal.

According to a fourteenth aspect, an embodiment of the present disclosure further provides an apparatus of processing information. The apparatus is applied to a first terminal. The apparatus includes: a fourth communication unit, configured to: receive a first message transmitted by a first network device, or receiving a second message transmitted by a first edge application server discovery function or a first user plane function, the first message and the second message are used to instruct the first terminal to retransmit a DNS request to a H-DNS server, or the first message and the second message are used to instruct the first terminal to transmit a DNS request to a H-DNS server, the first network device is at least one of a first session management function, the first edge application server discovery function or the first user plane function; and transmit the DNS request to the H-DNS server, or retransmit the DNS request to the H-DNS server.

According to a fifteenth aspect, an embodiment of the present disclosure further provides an apparatus of processing information. The apparatus is applied to a first session management function. The apparatus includes: a fifth communication unit, configured to receive fourth information transmitted by a second session management function. The fourth information includes at least one of information of a second identifier, information indicating a PLMN identifier, an identifier of a PLMN, information indicating an identifier of a second session management function, or an identifier of a second session management function; or, the fourth information includes a second identifier, and the second identifier includes at least one of information indicating an identifier of a PLMN or information indicating an identifier of a second session management function.

According to a sixteenth aspect, an embodiment of the present disclosure further provides an apparatus of processing information. The apparatus is applied to a second session management function. The apparatus includes: a sixth communication unit, configured to transmit fourth information to a first session management function. The fourth information includes at least one of information of a second identifier, information indicating a PLMN identifier, an identifier of a PLMN, information indicating an identifier of a second session management function, or an identifier of a second session management function; or, the fourth information includes a second identifier, and the second identifier includes at least one of information indicating an identifier of a PLMN or information indicating an identifier of a second session management function.

According to a seventeenth aspect, an embodiment of the present disclosure further provides an apparatus of processing information, the apparatus is applied to a first network function, the apparatus includes: a second processing unit and/or a seventh communication unit.

The third processing unit is configured to construct DNS request information and/or transmit the DNS request information through the seventh communication unit, the DNS request information includes at least one of: address information related to a HPLMN, address information of a Home User Plane Function (H-UPF), or address information of Home Protocol Data Unit (PDU) Session Anchor (H-PSA).

According to an eighteenth aspect, an embodiment of the present disclosure further provides an apparatus of processing information. The apparatus is applied to a first network function. The apparatus includes: a third processing unit and/or an eighth communication unit.

The third processing unit is configured to construct DNS request information and/or transmit the DNS request information to a second DNS server through the eighth communication unit, the second DNS server is provided by a HPLMN.

According to a nineteenth aspect, an embodiment of the present disclosure further provides an apparatus of processing information. The apparatus is applied to a third network function. The apparatus includes: a ninth communication unit, configured to receive seventh information from a fourth network function, the seventh information includes at least one of: information of a second identifier, information indicating an identifier of a PLMN, an identifier of a PLMN, information indicating an identifier of a second session management function, or an identifier of a second session management function,

the seventh information is information at node granularity or node level, and/or the third network function receives the seventh information from the fourth network function through node granularity or node level.

According to a twentieth aspect, an embodiment of the present disclosure further provides an apparatus of processing information. The apparatus is applied to a fourth network function. The apparatus includes: a tenth communication unit, configured to transmit seventh information to a third network function, the seventh information includes at least one of: information of a second identifier, information indicating an identifier of a PLMN, an identifier of a PLMN, information indicating an identifier of a second session management function, or an identifier of a second session management function,
the seventh information is information at node granularity or node level, and/or the fourth network function transmits the seventh information to the third network function through node granularity or node level.

In a twenty-first aspect, an embodiment of the present disclosure further provides a computer-readable storage medium having stored thereon a computer program that, when executed by a processor, implements the operations of the method according to any aspect of the embodiments of the present disclosure.

In a twenty-second aspect, an embodiment of the present disclosure further provide a communication device, which includes a memory, a processor, and a computer program stored on the memory and executable on the processor, and the processor ,when executing the program, implements the operations of the method according to any aspect of the embodiments of the present disclosure.

In the method and apparatus of processing information, the communication device, and the storage medium according to the embodiments of the present disclosure, in a first aspect, a first network device acquires an identifier of an edge application server; determines that the identifier of the edge application server matches or does not match first information, the first information includes a first identifier, the first identifier is one or more identifiers, or the first identifier is a range of identifiers. The technical solution of the embodiment of the present disclosure implements a solution in which the identifier of the edge application server is matched with the offloading information (such as the first information), and then it is possible to confirm whether or not the offloading information is meet according to the matching result.

In a second aspect, a first session management function receives fourth information transmitted by a second session management function; herein the fourth information includes at least one of a second identifier, information indicating an identifier of a PLMN, an identifier of a PLMN, information indicating an identifier of the second session management function, and an identifier of the second session management function; or, the fourth information includes a second identifier, and the second identifier includes information indicating an identifier of a PLMN and/or information indicating an identifier of the second session management function. According to the technical solution of the embodiments of the present disclosure, the first session management function can identify the PLMN or the second session management function associated with the offloading information through the fourth information (the same SMF can only be associated with one PLMN), thereby solving the problem that one offload ID corresponds to different offloading information in different PLMNs.

### BRIEF DESCRIPTION OF THE DRAWINGS

FIG. 1 is a schematic diagram of a local service discovery procedure based on an Edge Application Server Discovery Function (EASDF).
FIG. 2 is a schematic diagram of a local service discovery procedure based on an L-DNS server.
FIG. 3 is a schematic diagram of a Home Routed (HR) roaming architecture.
FIG. 4 is a schematic diagram of an HR Session Breakout (HR-SBO) roaming architecture.
FIG. 5 is a schematic diagram of a session establishment procedure based on an HR-SBO roaming architecture.
FIG. 6 is a schematic diagram of a local service discovery procedure based on an EASDF under an HR-SBO roaming architecture.
FIG. 7 is a schematic diagram of a local service discovery procedure based on an L-DNS server under an HR-SBO roaming architecture.
FIG. 8 is a first schematic flowchart of a method of processing information according to an embodiment of the present disclosure.
FIG. 9 is a second schematic flowchart of a method of processing information according to an embodiment of the present disclosure.
FIG. 10 is a third schematic flowchart of a method of processing information according to an embodiment of the present disclosure.
FIG. 11 is a fourth schematic flowchart of a method of processing information according to an embodiment of the present disclosure.
FIG. 12 is a first schematic diagram of an interaction procedure for a method of processing information according to an embodiment of the present disclosure.
FIG. 13 is a second schematic diagram of an interaction procedure for a method of processing information according to an embodiment of the present disclosure.
FIG. 14 is a third schematic diagram of an interaction procedure of a method of processing information according to an embodiment of the present disclosure.
FIG. 15 is a fourth schematic diagram of an interaction procedure of a method of processing information according to an embodiment of the present disclosure.
FIG. 16 is a fifth schematic flowchart of a method of processing information according to an embodiment of the present disclosure.
FIG. 17 is a sixth schematic flowchart of a method of processing information according to an embodiment of the present disclosure.
FIG. 18 is a fifth schematic diagram of an interaction procedure of a method of processing information according to an embodiment of the present disclosure.
FIG. 19 is a sixth schematic diagram of an interaction procedure of a method of processing information according to an embodiment of the present disclosure.
FIG. 20 is a seventh schematic diagram of an interaction procedure of a method of processing information according to an embodiment of the present disclosure.
FIG. 21 is an eighth schematic diagram of an interaction procedure of a method of processing information according to an embodiment of the present disclosure.
FIG. 22 is a first schematic structural diagram of an apparatus of processing information according to an embodiment of the present disclosure.
FIG. 23 is a second schematic structural diagram of an apparatus of processing information according to an embodiment of the present disclosure.
FIG. 24 is a third schematic structural diagram of an apparatus of processing information according to an embodiment of the present disclosure.
FIG. 25 is a fourth schematic structural diagram of an apparatus of processing information according to an embodiment of the present disclosure.
FIG. 26 is a fifth schematic structural diagram of an apparatus of processing information according to an embodiment of the present disclosure.
FIG. 27 is a sixth schematic structural diagram of an apparatus of processing information according to an embodiment of the present disclosure.
FIG. 28 is a schematic structural diagram of a hardware of a communication device according to an embodiment of the present disclosure.

### DETAILED DESCRIPTION

The present disclosure will be described in further detail below with reference to the accompanying drawings and specific embodiments.

Technical solutions of embodiments of the present disclosure can be applied to various communication systems, such as a Global System of Mobile communication (GSM) system, a Long Term Evolution (LTE) system, a 5th Generation Mobile Communication Technology (5G) system, and the like. Optionally, the 5G system or a 5G network may also be referred to as a New Radio (NR) system or an NR network.

Exemplarily, a communication system to which an embodiment of the present disclosure is applied may include a network device and a terminal device (which may also be referred to as a terminal, a communication terminal, or the like). The network device may be a device that communicates with the terminal device. The network device may provide communication coverage within a certain area and may communicate with a terminal located within the area. Optionally, the network device may be a base station in various communication systems, such as an Evolutional Node B (eNB) in an LTE system, or a base station (the next Generation Node B (gNB) in a 5G system or an NR system.

It should be understood that a device having a communication function in a network/system in an embodiment of the present disclosure may be referred to as a communication device. The communication device may include a network device and a terminal having a communication function. The network device and the terminal device may be specific devices described above, and will not be described herein. The communication device may also include other devices in the communication system, such as other network entities such as a network controller and a mobility management entity, which are not limited in the embodiments of the present disclosure.

It should be understood that the terms "system" and "network" are often used interchangeably herein. Herein, the term "and/or" is only an association relationship describing associated objects, and means that there may be three relationships, for example, A and/or B, which may mean that A alone exists, both A and B exist, or B alone exists. In addition, the character "/" in this article generally indicates that the related objects before and after the character "/" are in an "or" relationship.

The terms "first", "second", and the like in the specification and claims of the present disclosure are used to distinguish similar objects, and are not necessarily used to describe a particular order or sequence. It should be understood that the data so used may be interchangeable where appropriate so that the embodiments of the present disclosure described herein, for example, can be implemented in an order other than those illustrated or described herein. Furthermore, the terms "comprising" and "having" and any variations thereof are intended to cover a non-exclusive inclusion, for example, a process, method, system, product, or apparatus including a series of operations or units is not necessarily limited to those operations or units clearly listed, but may include other operations or units not clearly listed or inherent to such a process, method, product, or apparatus.

Before describing the embodiments of the present disclosure in detail, the application background of the embodiments of the present disclosure will be briefly described.

### 1. Edge computing

In traditional mobile network architectures and deployments for the fourth generation mobile communication technology (4G) and previous generations, user plane devices basically follow tree topology deployment. Uplink user messages pass through base stations and backhaul networks, and finally access data networks through centralized anchor gateways. In networks with centralized anchor gateway, the growing traffic ultimately concentrates at the gateways and core computer rooms, which places ever-higher demands on backhaul network bandwidth, computer room throughput and gateway specifications. In addition, the long-distance backhaul network from the access network to the anchor gateway and complex transmission environments also result in significant latency and jitter for user packet transmission.

Against these backgrounds, the industry has proposed a concept of Edge Computing (EC). By shifting user plane network elements and service processing capabilities to the network edge, the edge computing realizes distributed, local processing of service traffic, which avoids excessive traffic concentration, thereby greatly reducing specification requirements for core computer rooms and centralized gateways. At the same time, the edge computing also shortens the distance of the backhaul network, lowers the end-to-end transmission latency and jitter for user packets. This makes it possible to deploy ultra-low latency services.

### 2. Local service discovery process

In the EC deployment scenario, there may be multiple Application Servers (ASs) deployed at edges or centralized locations. These application servers may have a same domain name and different IP addresses. Therefore, in order to achieve the effect of EC, UE needs to acquire an appropriate IP address of an Edge Application Server (EAS) (such as the one closest to the location of the UE). This is also a local service discovery problem, also known as an EAS discovery problem.

Currently, methods for EAS discovery using Domain Name System (DNS) are defined, including an EAS discovery method using an Edge Application Server Discovery Function (EASDF) and a DNS discovery using a Local-DNS (L-DNS) server. These two methods are briefly introduced below.

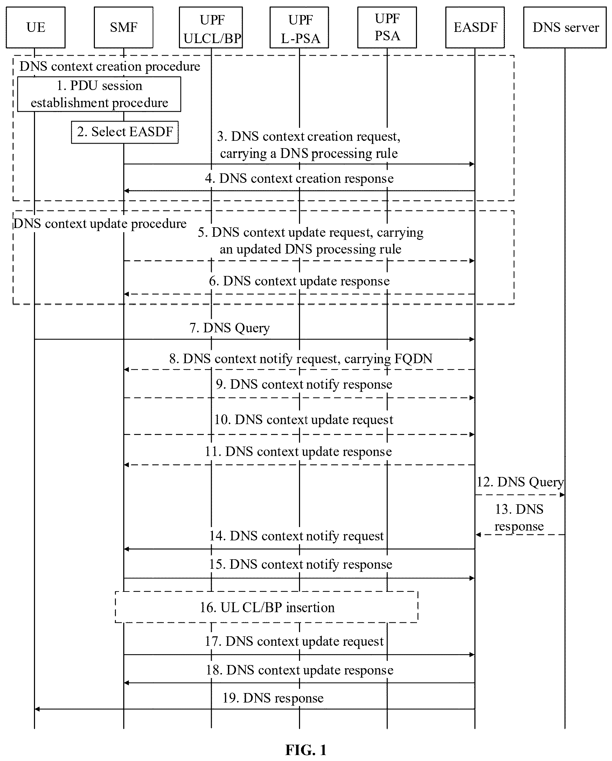

FIG. 1 is a schematic diagram of a local service discovery procedure based on the EASDF. As shown in FIG. 1, the local service discovery procedure based on the EASDF includes the following operations:
Operations 1-2: PDU Session Establishment Procedure. During PDU session establishment, a Session Management Function (SMF) selects an EASDF (Select EASDF) and transmits an address of the EASDF to UE as a DNS server address.
Operations 3-4: the SMF transmits a request message to the EASDF and receives a response message from the EASDF. The request message includes a DNS processing rule, and the DNS processing rule may include one or more items of a Full Qualified Domain Name (FQDN) set and an IP range. The FQDN set/IP range may identify services that are deployed at the edge/allowed to be accessed by the edge (i.e., which services are deployed at the edge/allowed to be accessed by the edge, and the FQDNs and/or IP addresses of these services may be included in the DNS processing rule).

Here, the request message may be a DNS context creation request (Neasdf_DNSContext_Create Request) and the response message can be a DNS context creation response (Neasdf_DNSContext_Create Response).

The above operations 3-4 may also be executed in a session establishment procedure.

The above operations 1-4 may also be referred to as a DNS Context Creation Procedure.

Operations 5-6: if the DNS processing rule is updated, the Session Management Function (SMF) may transmit an update request message to the EASDF and receive an update response message transmitted by the EASDF. The update request message may include an updated DNS processing rule.

Here, the update request message may be a DNS context update request (Neasdf_DNSContext_Update Request), and the update response message may be a DNS context update response (Neasdf_DNSContext_Update Response).

The above operations 5-6 may be referred to as a DNS Context Update Procedure.

Operation 7: the UE transmits a DNS request/query (DNS Query) to the EASDF, the DNS Query includes a FQDN.

Operations 8-9: if the FQDN in the DNS Query matches the DNS processing rule, the EASDF transmits a request message which includes the FQDN to the SMF; and receives a response message transmitted by the SMF.

Here, the request message may include a DNS context notify request (Neasd _DNSContext_Notify Request), and the response message may be a DNS context notify response (Neasdf_DNSContext_Notify Response).

Operations 10-11: the SMF transmits a DNS context update request (Neasdf_DNSContex_Update Request) to the EASDF and the EASDF transmits a DNS context update response (Neasdf_DNSContext_Update Response) to the SMF.

Here, the SMF executes one of the following two options:

Option A: the SMF transmits an Extended DNS Client Subnet option (ECS option) to the EASDF. This information is an IP address, which is related to the location of the UE, and may be, for example, an IP of a subnetwork segment where the UE is located, a local User Plane Function (UPF) address, or the like. The EASDF adds the received ECS option to the DNS Query, or replaces an original ECS option in the DNS Query (according to the DNS-related Internet Engineering Task Force (IETF) protocol, the ECS option is originally an extension in the DNS message), and transmits the DNS Query to a DNS server (such as a centralized DNS server).

Option B: the SMF transmits local-DNS (L-DNS) server addresses to the EASDF, and the EASDF forwards the DNS Query to the L-DNS address received from the SMF.

The reason for the above two options is that both ECS option and L-DNS are information that can characterize the location of the UE. For option A, when the DNS server resolves the IP address, it will refer to the ECS option, that is, the UE location. For option B, the L-DNS server will resolve its own local EAS address. Since the L-DNS is located locally to the UE, the resolved EAS address is also local to the UE.

Operation 12: the EASDF transmits the DNS Query to the DNS Server.

Operation 13: the DNS Server returns a DNS Response to the EASDF, the DNS Response includes the EAS IP.

Operations 14-15: the EASDF transmits a DNS context notify request (Neasdf_DNSContext_Notify Request) to the SMF, and the SMF transmits a DNS context notify response (Neasdf_DNSContext_Notify Response) to the EASDF.

Here, if the EAS IP in the DNS Response returned in operation 13 matches the DNS processing rule, the EASDF caches the DNS Response and transmits the EAS IP to the SMF through operation 14.

Operation 16: the SMF may insert an offloading point according to the EAS IP, that is, an Uplink Classifier (UL CL) or a Branching Point (BP) (which may be denoted as UL CL/BP insertion), or a Local PDU Session Anchor (L-PSA).

For example, the SMF determines a Data Network Access Identifier (DNAI) based on the EAS IP and selects the UL CL/BP and the L-PSA based on the DNAI.

Operations 17-18: the SMF transmits a DNS context update request (Neasdf_DNSContext_Update Request) to the EASDF, and the EASDF transmits a DNS context update response (Neasdf_DNSContext_Update Response) to the SMF.

Here, the SMF instructs the EASDF to transmit the cached DNS Response to the UE through operation 17.

Operation 19: the EASDF transmits the DNS Response to the UE.

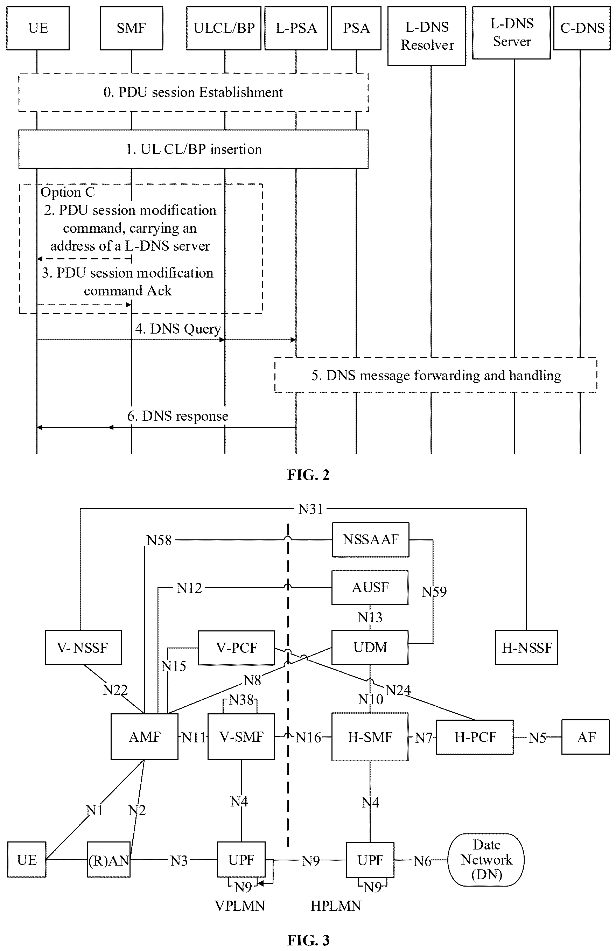

FIG. 2 is a schematic diagram of a local service discovery procedure based on an L-DNS server. As shown in FIG. 2, the local service discovery procedure based on the L-DNS server includes the following operations:

Operations 0-1: PDU Session Establishment procedure. The SMF may insert an offloading point in the session establishment procedure, that is, the SMF inserts an uplink classifier (UL CL) or a branching point (BP) (which can be denoted as UL CL/BP insertion), or insert a Local PDU Session Anchor (L-PSA), select a L-DNS server.

Operations 2-3: the SMF transmits a PDU Session Modification Command to the UE and receives a PDU Session Modification Command Ack transmitted by the UE.

Here, the SMF may transmit an L-DNS server address to the UE through operation 2 in the session establishment procedure.

Operations 4-6: the UE uses the L-DNS server address as a default DNS server address, transmits a DNS Query to the L-DNS server (Local-DNS Server) to query the DNS, and transmits a DNS Response (DNS Response) to the UE.

Compared with the above EAS discovery scheme using the EASDF, this scheme can perform the insertion of the offloading point (and the L-PSA) and the selection of the L-DNS when the session is established, which is a relatively static scheme.

The above schemes are all EAS discovery schemes in non-roaming scenarios.

### 3. Local service access for Home Routed (HR) roaming

FIG. 3 is a schematic diagram of an HR roaming architecture. As shown in FIG. 3, the characteristic of this architecture is that the control and anchors of the session are both on the Home Public Land Mobile Network (HPLMN), and the user plane of the session also ends at the HPLMN.

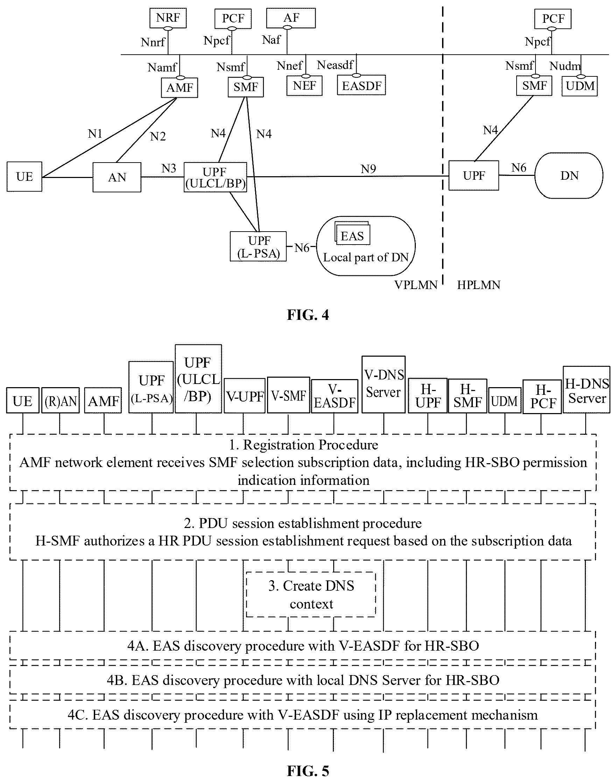

In the above architecture, since the N6 egress is on the HPLMN, the user plane path to the UE located on the Visited PLMN (VPLMN) is long. In order to achieve local offloading under the HR roaming architecture, Rel-18 defines an architecture called HR Session Breakout (HR-SBO), as shown in FIG. 4. The differences from the architecture shown in FIG. 3 are that the user plane inserts an offloading point and an L-PSA in the VPLMN, and can access local services through the L-PSA of the VPLMN (see the Local part of DN of the VPLMN), and also access services deployed in the HPLMN through the PSA of the HPLMN.

FIG. 5 is a schematic diagram of a session establishment procedure based on an HR-SBO roaming architecture. As shown in FIG. 5, the session establishment procedure based on the HR-SBO roaming architecture includes the following operations.

Operation 1: Registration Procedure for UE. In this procedure, an Access and Mobility Management Function (AMF) network element receives SMF selection subscription data, including HR-SBO allowed indication information (AMF receives the SMF selection Subscription data including the HR-SBO allowed indication). Specifically, the AMF network element acquires the HR-SBO allowed indication information from a Unit Data Management (UDM) network element. The HR-SBO allowed indication information is according to Data Network Names (DNNs)/Single-Network Slice identifiers (Single-Network Slice Selection Assistance Information (S-NSSAI)), that is, HR-SBO is allowed for some DNNs/S-NSSAI.

Operation 2: PDU Session Establishment Procedure. An H-SMF authorizes a PDU session establishment request for a HR PDU session based on the subscription data. The AMF selects a V-SMF that supports the HR-SBO. The H-SMF transmits the offloading information to the V-SMF.

The offloading information includes an FQDN (s) and/or an IP range. The FQDN/IP range indicates services that are allowed to be offloaded locally at the VPLMN. For example, services identified by the FQDN/IP range are allowed to be offloaded locally at the VPLMN.

Here, the offloading information may be generated locally by the H-SMF or may be generated by the H-SMF according to an offloading policy received from a Policy Control Function (PCF) network element. It should be noted that, contents of the offloading policy and the offloading information may be the same, and the offloading policy is transmitted by the H-PCF to the H-SMF, and the offloading information is transmitted by the H-SMF to the V-SMF.

In another possible embodiment, the H-SMF transmits an offload ID to the V-SMF instead of specific offloading information, and the V-SMF only needs to index the offloading information corresponding to the offload ID after receiving the offload ID.

In the session establishment procedure, the V-SMF may also select the V-EASDF.

Operation 3: the V-SMF creates a DNS context with the V-EASDF. In this process, the V-SMF may transmit a DNS processing rule to the V-EASDF, and the V-SMF can transmit an address of a H-DNS server to the V-EASDF.

Operations 4A-4C: an EAS discovery procedure may be executed in different ways, such as a EAS discovery procedure based on the V-EASDF under the HR-SBO roaming architecture (EAS discovery procedure with V-EASDF for HR-SBO), an EAS discovery procedure based on the local-DNS server under the HR-SBO roaming architecture (EAS discovery procedure with local-DNS for HR-SBO), a EAS discovery procedure based on the V-EASDF using the IP replacement mechanism (EAS discovery procedure with V-EASDF using IP replacement mechanism) and so on.

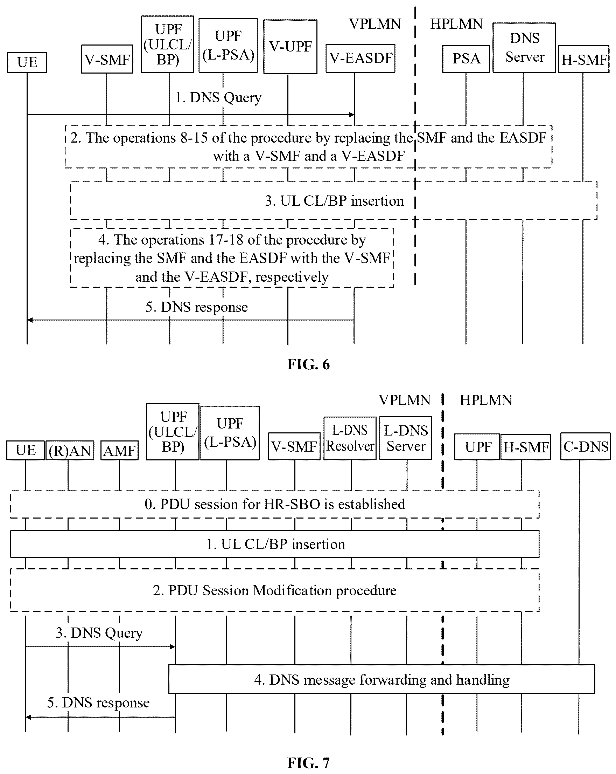

FIG. 6 is a schematic diagram of a local service discovery procedure based on the EASDF under the HR-SBO roaming architecture. As shown in FIG. 6, the local service discovery procedure based on the EASDF under the HR-SBO roaming architecture includes the following operations:

Operation 1: UE transmits a DNS request/query (DNS Query) to the V-EASDF.

Operations 2-4: the procedure shown in FIG. 1 is followed. Operation 2: the operations 8-15 of the procedure by replacing the SMF and the EASDF with a V-SMF and a V-EASDF. Operation 3: UL CL/BP insertion. Operation 4: the operations 17-18 of the procedure by replacing the SMF and the EASDF with the V-SMF and the V-EASDF, respectively.

Specifically, this procedure is different from the procedure shown in FIG. 1 as follows:
1. The SMF, EASDF, UL CL/BP, and L-PSA are all VPLMN network elements.
2. If the V-SMF confirms that the FQDN of the DNS Query does not match the offloading information, perform one of the following two items:
   (1) (V-SMF indication) the V-EASDF forwards the DNS Query to the H-DNS server, or adds the EAS option of the HPLMN;
   (2) (V-SMF indication) the UL CL/BP forwards the DNS Query to the H-DNS server via (the V-UPF and) the Home-UPF (H-UPF).

The reason for this is that non-local (e.g. HPLMN) deployed EAS needs to be discovered for traffic whose offloading information does not allow VPLMN local offloading.

Operation 5: the V-EASDF transmits a DNS Response to the UE.

FIG. 7 is a schematic diagram of a local service discovery procedure based on the L-DNS server under the HR-SBO roaming architecture. As shown in FIG. 7, the local service discovery procedure based on the L-DNS server under the HR-SBO roaming architecture includes the following operations:
Operation 0: a PDU session for a HR-SBO is established. The specific process is shown in FIG. 5.
Operation 1: the V-SMF selects and inserts a UL CL/BP (and an L-PSA).
Operation 2: PDU Session Modification procedure.

Here, the V-SMF selects the L-DNS server and transmits an L-DNS address to the UE (via the H-SMF).

Operations 3-5: The UE transmits a DNS request/query (DNS Query) to the UPF (UL CL/BP). The DNS message forwarding and handling are performed. The UPF (UL CL/BP) transmits a DNS Response to the UE.

Here, if the V-SMF confirms that the FQDN of the DNS Query does not match the offloading information, it instructs the UL CL/BP to forward the DNS Query to the H-DNS server.

As can be seen from the above description, the offloading information may not include the FQDN. In this case, the V-SMF cannot match the FQDN included in the DNS Query with the offloading information, and thus does not confirm whether the EAS IP matches the offloading information, which results in the offloading information not being actually executed.

On the other hand, the offload ID is generated by the HPLMN. There is a problem that different PLMNs may associate the same offload ID with different offloading information (if the offload ID is generated by the SMF, different SMFs may associate the same offload ID with different offloading information). For example, a SMF1 or a PCF1 of a PLMN1 defines that offload ID1 is associated with offloading information 1, and a SMF2 or a PCF2 of a PLMN2 defines that the offload ID1 is associated with offloading information 2. Since the SMF1/PCF1 and the SMF2/PCF2 may not communicate with each other, there may be a problem that different offloading information 1 and 2 are associated with the same offload ID1. In this case, if the V-SMF receives the offload ID1, it is not possible to determine whether the offloading information 1 or the offloading information 2 is to be executed.

Based on this, following embodiments of the present disclosure are proposed.

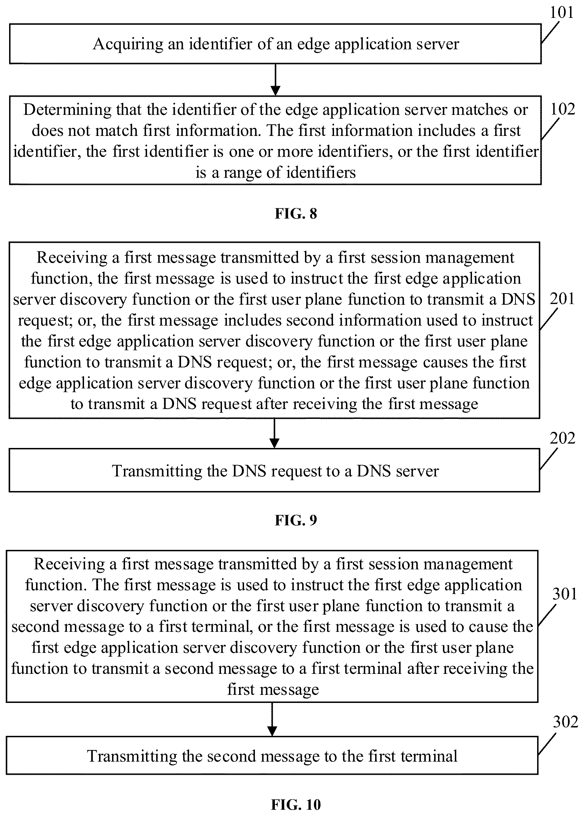

Embodiments of the present disclosure provide a method of processing information. FIG. 8 is a schematic flowchart of the method of processing information according to the embodiment of the present disclosure. As shown in FIG. 8, the method includes Operations 101-102.

In Operation 101, an identifier of an edge application server is acquired;
Operation 102: it is determined that the identifier of the edge application server matches or does not match first information. The first information includes a first identifier, the first identifier is one or more identifiers, or the first identifier is a range of identifiers.

The processing method of the embodiment is applied to a network device. In other alternative embodiments, the network device may also be referred to as a Network Element (NE), a network function, a network entity, and the like. In some alternative embodiments, the method of the embodiment may be applied to one network device (such as referred to as a first network device) or may be implemented by multiple network devices.

The method of the embodiment is applicable to an EAS discovery procedure, and is particularly applicable to an EAS discovery procedure in a roaming scenario. If the method of the embodiment is used for the EAS discovery procedure in a roaming scenario, the network device (first network device) to which the method of the embodiment is applied may be a network device located at a visited location. In some alternative embodiments, the first network device is at least one of a first session management function, a first edge application server discovery function, and a first user plane function, and the first session management function, the first edge application server discovery function and the first user plane function are all located at the visited location. Taking the first network device as a network element in a 5G system/network as an example, the first session management function may be a visited SMF (V-SMF), the first edge application server discovery function may be a visited EASDF (V-EASDF), and the first user plane function may be a visited UPF (V-UPF). If the method of the embodiment is used for an EAS discovery procedure in a non-roaming scenario, the network device (first network device) to which the method of the embodiment is applied may be specifically an internal network device. In some alternative embodiments, the first network device is at least one of a first session management function, a first edge application server discovery function, and a first user plane function. The first session management function, the first edge application server discovery function, and the first user plane function may be deployed internally. Taking the first network device as a network element in the 5G system/network as an example, the first session management function may be an Internal SMF (I-SMF), the first edge application server discovery function may be an EASDF or an Internal EASDF (I-EASDF), and the first user plane function may be an Internal UPF (I-UPF). In other communication systems or even future communication systems, the first network device may be other network elements capable of performing corresponding functions, and the name of the network element is not limited in this embodiment.

In the embodiment, the identifier of the edge application server is the identifier of the EAS. In some alternative embodiments, the identifier of the EAS may specifically be an ID of the EAS and/or an address of the EAS, such as an IP address of the EAS. Accordingly, the one or more identifiers included in the first identifier in the first information may specifically be one or more EAS IDs and/or addresses (such as IP addresses) of the EASs, and the range of identifiers included in the first identifier in the first information may specifically be an ID range and/or address range (such as IP address range) of the EASs.

Here, the address information (i.e., the address of the EAS, and/or the address or address range included in the first identifier) may be an IP address or a Medium/Media Access Control (MAC) address. The "the range of the identifiers" herein may be an ID range, an ID set, an ID list, ID(s), an ID group, ID series, an IP range, an IP set, an IP list, IP(s), a IP group , IP series, etc., that is, may represent any one or more IDs or addresses.

In some optional embodiments, the first network device acquires the identifier of the edge application server. Specifically, the first network device may acquire the identifier of the edge application server from other network devices (such as other network elements, other network entities, or other network functions). Optionally, when the first network devices are different, other network devices acquiring the identifier of the edge application server may also be different. For example, if the first network device is the first SMF, the first SMF may acquire the identifier of the edge application server from the network device 1. If the first network device is the first EASDF, the first EASDF may acquire the identifier of the edge application server from the network device 2. In other optional embodiments, the first network device may also acquire the identifier of the edge application server by a pre-configured manner (or a manner of pre-acquiring) or a manner of locally determining. In the embodiment, the manner of acquiring the identifier of the edge application server is not limited.

In some alternative embodiments, in case that the method is applied to a first network device and the first network device is a first session management function, the identifier of the edge application server is from a first edge application server discovery function or a first user plane function. in case that the method is applied to a first network device and the first network device is a first edge application server discovery function or a first user plane function, the identifier of the edge application server is from a DNS server or a local-DNS server (L-DNS) server.

As described above, the EAS discovery procedure according to the embodiment of the present disclosure mainly adopts an EAS discovery procedure based on an EASDF and an EAS discovery procedure based on a L-DNS. When the EAS discovery scheme based on the EASDF is adopted, the method of the embodiment can be applied to a first SMF. In this case, the first SMF acquires an identifier of an edge application server from a first EASDF or a first UPF. When the EAS discovery scheme based on the EASDF is adopted, the method of the embodiment may also be applied to the first EASDF or the first UPF. In this case, the first EASDF or the first UPF acquires the identifier of the edge application server from a DNS server or a L-DNS server. When the discovery scheme based on the L-DNS is adopted, the method of the embodiment may be applied to a first EASDF or a first UPF. In this case, the first EASDF or the first UPF acquires the identifier of the edge application server from the L-DNS server.

In some alternative embodiments, the operation of acquiring the identifier of the edge application server and the operation of determining that the identifier of the edge application server matches or does not match the first information may be performed by the same network device or may be performed by different network devices together. For example, the identifier of the edge application server may be acquired by one network device, and then the identifier of the edge application server may be transmitted to another network device, and the other network device may determine that the identifier of the edge application server matches or does not match the first information.

In the embodiment, all or part of the first information may be used to determine the VPLMN offloading or local offloading for a specified service. Specifically, all or part of the first information may be used to determine that a certain service is allowed/permitted/authorized to be offloaded in the VPLMN or in local, or all or part of the first information may be used to determine that a certain service are not allowed/not permitted/not authorized to be offloaded in the VPLMN or in local. For example, the first information may be VPLMN Specific Offloading Information (VSOI), a VPLMN Specific Offloading Policy (VSOP), an offloading policy, offloading information, a local offloading policy, local offloading information, a VPLMN offloading policy, VPLMN offloading information, a Session Management policy (SM policy), EAS Deployment Information (EDI), or the like. It should be noted that, the use of the first information described above is that the use of all or a part of the first information, that is, the first information may be used for other operations such as information processing or determination.

In the embodiment, the operation of determining that the identifier of the edge application server matches the first information means that the identifier of the edge application server matches the first identifier. Specifically, the identifier of the edge application server may be partially or entirely the same as the first identifier; or, the identifier of the edge application server is partially or entirely the same as any one of the first identifiers; or the identifier of the edge application server is within the range of the identifier. The operation of determining that the identifier of the edge application server does not match the first information means that the identifier of the edge application server does not match the first identifier. Specifically, the identifier of the edge application server is different from all or part of the first identifier; or, the identifier of the edge application server is not the same as all of any one of the first identifiers, or the identifier of the edge application server is not the same as part of any one of the first identifiers; or, the identifier of the edge application server is not within the range of the identifier.

In some alternative embodiments, in case that the method is applied to a first network device and the first network device is a first session management function, the method further includes an operation that the first information is received from a second session management function; and/or, in case that the first network device is a first edge application server discovery function or a first user plane function, the method further includes an operation that the first information transmitted by the first session management function is received.

The second session management function is located at a home location. For example, taking a network element in a 5G system/network as an example, the second session management function may be a Home-SMF (H-SMF).

In this embodiment, if the method is performed by a first SMF (such as a V-SMF or an I-SMF), the first SMF may acquire the first information from a second SMF (such as an H-SMF or an SMF or an anchor SMF). If the method is performed by a first EASDF or a first UPF, the first EASDF or the first UPF may acquire the first information from a first SMF (such as a V-SMF or a I-SMF), herein, the first information acquired from the first SMF (such as a V-SMF or a I-SMF) is also acquired from the second SMF (such as an H-SMF or an SMF or an anchor SMF).

In some alternative embodiments of the present disclosure, the method further includes an operation that a first message is transmitted in case of determining that the identifier of the edge application server matches or does not match the first information.

In some alternative embodiments, the operation that the first message is transmitted in case of determining that the identifier of the edge application server matches or does not match the first information includes operations that: when the first identifier is one or more identifiers for which offloading in local and/or in a visited network is not authorized, not permitted, or not allowed, the first message is transmitted in case of determining that the identifier of the edge application server matches the first information; or, when the first identifier is one or more identifiers for which offloaded in local and/or in a visited network is authorized/permitted/allowed, the first message is transmitted in case of determining that the identifier of the edge application server does not match the first information.

In this embodiment, the first information may have different functions or uses. For example, the first information may be used to determine that a service is allowed/permitted/authorized to be offloaded in the VPLMN or in local, or to determine that a service is not allowed/not permitted/not authorized to be offloaded in the VPLMN or in local. In the first case described above, that is, the first information includes information that offloading in local or in the VPLMN is authorized/allowed/permitted for example, a first identifier in the first information is identifiers or a range of identifiers for which offloading in local or in the VPLMN is authorized/allowed/permitted, the first message is transmitted when it is determined that an identifier of an edge application server does not match the first information. In the second case described above, that is, the first information includes information that offloading in local or in the VPLMN is not authorized/not allow/not permitted, for example, the first identifier in the first information is identifiers or a range of identifiers for which offloading in local or in the VPLMN is not authorized/not allowed/not permitted, the first message is transmitted when it is determined that an identifier of an edge application server matches the first information.

Based on this, in the embodiment, the first message is transmitted in a case that the matching result between the identifier of the edge application server and the first information indicates that offloading in local or in the VPLMN is not authorized/not allowed/not permitted. Based on the matching result, and on the basis of the EAS discovery procedure based on the EASDF and the EAS discovery procedure based on the L-DNS, the embodiment has a plurality of implementations according to different execution policies, and each implementation will be described below.

In a first alternative implementation, the method is applied to a first network device, and in case that the first network device is the first session management function, the operation that the first message is transmitted includes operations that:
the first message is transmitted to a first edge application server discovery function or a first user plane function, herein the first message is used to instruct the first edge application server discovery function or the first user plane function to transmit a Domain Name System (DNS) request; or
the first message is transmitted to a first edge application server discovery function or a first user plane function, herein the first message includes second information used to instruct the first edge application server discovery function or the first user plane function to transmit a DNS request; or
the first message is transmitted to a first edge application server discovery function or a first user plane function, so that the first edge application server discovery function or the first user plane function transmits a DNS request after receiving the first message.

In the implementation, the first session management function transmits the first message to the first edge application server discovery function or the first user plane function based on the matching result described above. As a first implementation, the first message itself has a function of instructing, for example, a service called by the first message itself has a function of instructing the first EASDF or the first UPF to transmit the DNS request. As a second implementation, the first message includes one or more indication information (i.e., the second information), and the first EASDF or the first UPF transmits the DNS request according to an instruction of the second information or according to a specific value of the second information after receiving the first message. As a third implementation, the first message itself does not have an instruction function or does not include any indication information, and the first EASDF or the first UPF transmits the DNS request according to the internal logic/local configuration after receiving the first message.

It should be noted that in various embodiments of the present disclosure, the actions of the EASDF may also be performed by the UPF, and accordingly, the actions of the UPF may also be performed by the EASDF. Alternatively, in order to achieve the inventive purposes of the present disclosure, both the EASDF and the UPF participate in the protocol procedure.

In some alternative embodiments, the operation that the first message is transmitted includes operations that:
the first session management function constructs the DNS request and transmits a first message carrying the DNS request to a first edge application server discovery function or a first user plane function, the first message is used to instruct the first edge application server discovery function or the first user plane function to transmit the DNS request; or
the first session management function constructs the DNS request and transmits a first message carrying the DNS request to a first edge application server discovery function or a first user plane function, the first message includes second information instructing the first edge application server discovery function or the first user plane function to transmit the DNS request; or
the first session management function constructs the DNS request and transmits a first message carrying the DNS request to a first edge application server discovery function or a first user plane function, so that the first edge application server discovery function or the first user plane function transmits the DNS request after receiving the first message; or
the first session management function transmits a first message to a first edge application server discovery function or a first user plane function, the first message is used to instruct the first edge application server discovery function or the first user plane function to construct the DNS request and/or transmit the DNS request; or
the first session management function transmits a first message to a first edge application server discovery function or a first user plane function, the first message includes third information used to instruct the first edge application server discovery function or the first user plane function to construct the DNS request and/or transmit the DNS request; or
the first session management function transmits a first message to a first edge application server discovery function or a first user plane function, so that the first edge application server discovery function or the first user plane function constructs the DNS request and/or transmits the DNS request after receiving the first message.

The above technical solution of the embodiment mainly includes two aspects. In a first aspect, the DNS request is constructed by the first session management function, and the DNS request is carried in the first message transmitted. In a second aspect, the first session management function transmits the first message to the first edge application server discovery function or the first user plane function, and the first edge application server discovery function or the first user plane function constructs the DNS request according to the first message, and the first edge application server discovery function or the first user plane function further transmits the DNS request.

Herein, in the first aspect described above, the first session management function constructs the DNS request and carries the DNS request in the first message. The first message also has three implementations. As a first implementation, the first message itself has a function of instructing, for example, a service called by the first message itself has a function of instructing the first EASDF or the first UPF to transmit the DNS request. As a second implementation, the first message includes one or more pieces of indication information (i.e., the second information), and the first EASDF or the first UPF transmits the DNS request according to an instruction of the second information or according to a specific value of the second information after receiving the first message. As a third implementation, the first message itself does not have an instruction function and does not include any indication information, and the first EASDF or the first UPF transmits the DNS request according to an internal logic/local configuration after receiving the first message.

In the second aspect described above, the first message transmitted by the first session management function to the first edge application server discovery function or the first user plane function also has three implementations. As a first implementation, the first message itself has a function of instructing, for example, a service called by the first message itself has a function of instructing the first EASDF or the first UPF to construct and transmit the DNS request. As a second implementation, the first message includes one or more indication information (i.e., third information), and after receiving the first message, the first EASDF or the first UPF constructs a DNS request and transmits the DNS request according to an instruction of the third information or a specific value of the third information. As a third implementation, the first message itself does not have an instruction function and does not include any indication information, and the first EASDF or the first UPF constructs the DNS request and transmits the DNS request according to an internal logical/a local configuration after receiving the first message.

In some alternative embodiments, if the DNS request carried in the first message includes information related to a Home Public Land Mobile Network (H-PLMN), the operation that the first edge application server discovery function or the first user plane function transmits the DNS request includes: the first edge application server discovery function or the first user plane function transmits the DNS request to a Home DNS (H-DNS) server or a visited DNS (V-DNS) server; and/or when the DNS request carried in the first message does not include information related to the H-PLMN, the operation that the first edge application server discovery function or the first user plane function transmits the DNS request includes: the first edge application server discovery function or the first user plane function transmits the DNS request to a H-DNS server.

In various embodiments of the present disclosure, as an example, the information related to the H-PLMN may be address information of the H-PLMN, and a manner in which the DNS request includes the information related to the H-PLMN may be using the information related to the H-PLMN as an EDNS client subnet option (ECS option).

In various embodiments of the present disclosure, the DNS server is a third-party server, and the H-DNS or the V-DNS is used to distinguish the deployment location or deployment area of the DNS. In various embodiments of the present disclosure, the H-DNS may be a DNS server provided by the HPLMN, or may be described as a DNS server of which an address is provided by the HPLMN to the UE or the VPLMN, or may be described as a DNS server determined by the HPLMN. The V-DNS may also be a DNS server provided by the VPLMN, or may be described as a DNS server of which an address is provided by the HPLMN to the UE, or may be described as a DNS server determined by the VPLMN. If the DNS request carried in the first message includes the information related to the H-PLMN, the DNS request may be transmitted to any DNS server. For example, the DNS request is transmitted to the H-DNS server or the V-DNS server. If the DNS request carried in the first message does not include the information related to the H-PLMN, the DNS request is transmitted only to the H-DNS server.

In some alternative embodiments, if the DNS request constructed by the first edge application server discovery function or the first user plane function includes the information related to the H-PLMN, the operation that the first edge application server discovery function or the first user plane function transmits the DNS request includes an operation that: the first edge application server discovery function or the first user plane function transmits the DNS request to a Home DNS (H-DNS) server or a visited DNS (V-DNS) server; and/or when the DNS request constructed by the first edge application server discovery function or the first user plane function does not include information related to the H-PLMN, the operation that the first edge application server discovery function or the first user plane function transmits the DNS request includes an operation that: the first edge application server discovery function or the first user plane function transmits the DNS request to the H-DNS server.

In this embodiment, if the DNS request constructed by the first edge application server discovery function or the first user plane function includes the information related to the H-PLMN, the DNS request may be transmitted to any DNS server. For example, the DNS request is transmitted to the H-DNS server or the V-DNS server. If the DNS request constructed by the first edge application server discovery function or the first user plane function does not include the information related to the H-PLMN, the DNS request is only transmitted to the H-DNS server. As an example, the information related to the H-PLMN may be address information of the H-PLMN. A manner in which the DNS request includes the information related to the H-PLMN may be using the information related to the H-PLMN as an ECS option.

According to the technical solution of the implementation, in case that the first session management function (e.g. V-SMF) of the core network determines that offloading in local or in the VPLMN is not authorized/not allowed/not permitted according to the matching result, the first session management function of the core network constructs the DNS by itself or transmits the first message so that the first session management function (e.g. V-EASDF) or the first user plane function (e.g. V-UPF) constructs the DNS request, and transmits the DNS request to the DNS server to query the DNS information, and then the EAS discovery procedure is performed again according to the queried DNS information.

In a second alternative implementation, the method is applied to a first network device. In case that the first network device is the first edge application server discovery function or the first user plane function, the operation that the first message is transmitted includes an operation that the first message is transmitted to the DNS server.

In this embodiment, in case that the method is applied to the first edge application server discovery function (such as V-EASDF) or the first user plane function (such as V-UPF), when the first edge application server discovery function (such as V-EASDF) or the first user plane function (such as V-UPF) determines that offloading in local or in the VPLMN is not authorized/not allowed/not permitted according to the matching result, the first message may be directly transmitted to the DNS server.

In some alternative embodiments, the operation that the first message is transmitted to the DNS server includes an operation that the DNS request is transmitted to the DNS server.

In this embodiment, the first message transmitted to the DNS server by the first edge application server discovery function (such as V-EASDF) or the first user plane function (such as V-UPF) may be the DNS request itself, or the first message may include the DNS request, in this case, the first message may further include other information in addition to the DNS request.

In some alternative embodiments, the operation that the first message is transmitted to the DNS server includes an operation that: the DNS request is constructed and transmitted to the DNS server.

In this embodiment, before the first edge application server discovery function (such as V-EASDF) or the first user plane function (such as V-UPF) transmits the first message to the DNS server, the DNS request is constructed first, then the DNS request is transmitted to the DNS server, or the DNS request is transmitted to the DNS server through the first message.

In some alternative embodiments, the operation that the DNS request is transmitted to the DNS server includes an operation that the DNS request including the information related to the H-PLMN is transmitted to the H-DNS server or the V-DNS server; and/or the DNS request which does not include the information related to the H-PLMN is transmitted to the H-DNS server.

In this embodiment, the DNS server is a third-party server, and the H-DNS or the V-DNS is used to distinguish the deployment location or deployment area of the DNS. In various embodiments of the present disclosure, the H-DNS may be a DNS server provided by the HPLMN, or may be described as a DNS server of which an address is provided by the HPLMN to the UE or the VPLMN, or may be described as a DNS server determined by the HPLMN. The V-DNS may also be a DNS server provided by the VPLMN, or may be described as a DNS server of which an address is provided by the HPLMN to the UE, or may be described as a DNS server determined by the VPLMN. If the DNS request constructed by the first edge application server discovery function or the first user plane function includes the information related to the H-PLMN, the DNS request may be transmitted to any one of the DNS servers. For example, the DNS request is transmitted to the H-DNS server or the V-DNS server. If the DNS request constructed by the first edge application server discovery function or the first user plane function does not include the information related to the H-PLMN, the DNS request is only transmitted to the H-DNS server. Here, as an example, the information related to the H-PLMN may be address information of the H-PLMN, and a manner in which the DNS request includes the information related to the H-PLMN may be using the information related to the H-PLMN as an ECS option.

According to the technical solution of the embodiment, in case that the first edge application server discovery function (e.g. V-EASDF) or the first user plane function (e.g. V-UPF) of the core network determines that offloading in local or in the VPLMN is not authorized/not allowed/ not permitted according to the matching result, the first edge application server discovery function (e.g. V-EASDF) or the first user plane function (e.g. V-UPF) of the core network constructs the DNS request by itself, and transmits the DNS request to the DNS server to query the DNS information, and then the EAS discovery procedure is performed again according to the queried DNS information.

In a third alternative implementation, the method is applied to a first network device, and in case that the first network device is a first session management function, the operation that the first message is transmitted includes operations that: the first message is transmitted to a first terminal, the first message is used to instruct the first terminal to retransmit a DNS request to an H-DNS server, or to instruct the first terminal to transmit a DNS request to an H-DNS server; or the first message is transmitted to a first edge application server discovery function or a first user plane function, herein the first message is used to instruct the first edge application server discovery function or the first user plane function to transmit a second message to the first terminal, or the first message is used to cause the first edge application server discovery function or the first user plane function to transmit a second message to the first terminal after receiving the first message.

In the embodiment, in case that the method is applied to a first session management function (such as V-SMF or I-SMF), when the first session management function (such as V-SM or I-SMFF) determines that offloading in local or in the VPLMN is not authorized/not allowed /not permitted according to the matching result, the first message is transmitted to instruct the first terminal to retransmit the DNS request to the H-DNS server, or to instruct the first terminal to transmit the DNS request to the H-DNS server.

As one implementation, the first session management function (such as V-SMF or I-SMF) may directly transmit the first message to the first terminal, and the first message is used to instruct the first terminal to retransmit the DNS request to the H-DNS server, or to instruct the first terminal to transmit the DNS request to the H-DNS server.

The first message transmitted by the first session management function to the first terminal may have three implementations. As a first implementation, the first message itself has a function of instructing, e.g. a service called by the first message itself has the function of instructing the first terminal to transmit (or retransmit) the DNS request to the H-DNS server. As a second implementation, the first message includes one or more pieces of indication information, and after receiving the first message, the first terminal transmits (or retransmits) a DNS request to the H-DNS server according to an instruction of the indication information or according to a specific value of the indication information. As a third implementation, the first message itself does not have an instruction function and does not include any indication information, and the first terminal transmits (or retransmits) the DNS request to the H-DNS server according to the internal logic/local configuration after receiving the first message.

As another embodiment, the first session management function (e.g. V-SMF or I-SMF) transmits a first message to a first edge application server discovery function (e.g. V-EASDF) or a first user plane function (e.g. V-UPF), to instruct the first edge application server discovery function (e.g. V-EASDF) or the first user plane function (e.g. V-UPF) to transmit a second message to the first terminal, or cause the first edge application server discovery function (e.g. V-EASDF) or the first user plane function (e.g. V-UPF) to transmit the second message to the first terminal after receiving the first message, thereby instructing the first terminal to retransmit a DNS request to the H-DNS server or instructing the first terminal to retransmit the DNS request to the H-DNS server.

In the embodiment, the first message transmitted by the first session management function to the first edge application server discovery function or the first user plane function has three implementations. As a first implementation, the first message itself has a function of instructing. For example, a service called by the first message itself has a function of instructing the first EASDF or the first UPF to transmit the second message to the first terminal. As a second implementation, the first message includes one or more pieces of indication information (such as seventh information), and after receiving the first message, the first EASDF or the first UPF transmits a second message to the first terminal according to an instruction of the indication information or according to a specific value of the indication information. As a third implementation, the first message itself does not have an instruction function and does not include any indication information, and the first EASDF or the first UPF transmits the second message to the first terminal according to the internal logic/local configuration after receiving the first message.

In some alternative embodiments, the second message is used to instruct the first terminal to retransmit the DNS request to the H-DNS server, or the second message is used to instruct the first terminal to transmit the DNS request to the H-DNS server.

In some alternative embodiments, the operation that the first message is transmitted includes operations that, in case that it is determined that the identifier of the edge application server matches or does not match the first information, it is determined to instruct the first terminal to retransmit the DNS request or it is determined to instruct the first terminal to transmit the DNS request, and the first message is transmitted.

In the embodiment, when the first identifier is one or more identifiers for which offloading in local and/or in the visited network is not authorized/not permitted/not allowed, then in case that it is determined that the identifier of the edge application server matches the first information, it is determined to instruct the first terminal to retransmit the DNS request or it is determined to instruct the first terminal to transmit the DNS request, and the first message is transmitted; and/or when the first identifier is one or more identifiers for which offloading in local and/or in the visited network is authorized/permitted/allowed, then in case that it is determined that the identifier of the edge application server does not match the first information, it is determined to instruct the first terminal to retransmit the DNS request or it is determined to instruct the first terminal to transmit the DNS request, and the first message is transmitted.

According to the technical solution of the implementation, in cast that the first session management function (e.g. V-SMF) of the core network determines that offloading in local or in the VPLMN is not authorized/not allowed/not permitted according to the matching result, the first message is transmitted to the first terminal, or the first message is transmitted to cause the first edge application server discovery function (e.g. V-EASDF) or the first user plane function (e.g. V-UPF) to transmit the second message to the first terminal, so that the first terminal constructs the DNS request by itself and transmit the DNS request to the DNS server to query the DNS information, so as to perform the EAS discovery procedure according to the queried DNS information.

In a fourth alternative embodiment, the method is applied to a first network device, and in case that the first network device is a first edge application server discovery function or a first user plane function, the operation that the first message is transmitted includes an operation that: the first message is transmitted to the first terminal, the first message is used to instruct the first terminal to retransmit a DNS request to a H-DNS server, or the first message is used to instruct the first terminal to transmit the DNS request to the H-DNS server.

In the embodiment, in case that the method is applied to the first edge application server discovery function (e.g. V-EASDF) or the first user plane function (e.g. V-UPF), when the first edge application server discovery function (e.g. V-EASDF) or the first user plane function (e.g. V-UPF) determines that offloading in local or in the VPLMN is not authorized/not allowed/not permitted according to the matching result, the first edge application server discovery function (e.g. V-EASDF) or the first user plane function (e.g. V-UPF) directly transmits the first message to the first terminal to instruct the first terminal to retransmit the DNS request to the H-DNS server.

In some alternative embodiments, the operation that the first message is transmitted includes operations that: in case that it is determined that the identifier of the edge application server matches or does not match the first information, it is determined to instruct the first terminal to retransmit the DNS request or it is determined to instruct the first terminal to transmit the DNS request, the first message is transmitted to the first terminal.

According to the technical solution of the implementation, in case that the first edge application server discovery function (e.g. V-EASDF) or the first user plane function (e.g. V-UPF) of the core network determines that offloading in local or in the VPLMN is not authorized/not allowed/not permitted according to the matching result, the first message is transmitted to the first terminal, so that the first terminal constructs the DNS request by itself and transmits the DNS request to the DNS server to query the DNS information, and then the EAS discovery procedure may be performed again according to the queried DNS information.

It is noted that the first message described in various embodiments of the present disclosure has different contents or meanings in different embodiments.

Based on the above embodiments, an embodiment of the present disclosure further provides a method of processing information, and the method is applied to a first edge application server discovery function or a first user plane function. FIG. 9 is a second schematic flowchart of the method of processing information according to the embodiment of the present disclosure. As shown in FIG. 9, the method includes operations 2001-202.

In Operation 201, a first message transmitted by a first session management function is received, the first message is used to instruct the first edge application server discovery function or the first user plane function to transmit a DNS request; or, the first message includes second information used to instruct the first edge application server discovery function or the first user plane function to transmit a DNS request; or, the first message causes the first edge application server discovery function or the first user plane function to transmit a DNS request after receiving the first message.

In Operation 202, the DNS request is transmitted to a DNS server.

In the embodiment, the first session management function, the first edge application server discovery function, and the first user plane function are all located at a visited location. Taking network elements in a 5G system/network as an example, the first session management function may be a visited SMF (V-SMF or I-SMF), the first edge application server discovery function may be a visited EASDF (V-EASDF), and the first user plane function may be a visited UPF (V-UPF). In other communication systems or even future communication systems, the first edge application server discovery function or the first user plane function to which the method is applied may be other network elements capable of performing corresponding functions, and the name of the network element is not limited in this embodiment.

In the embodiment, in case that the first session management function determines that the identifier of the edge application server matches or does not match the first information, the first message is transmitted. Specifically, when the first identifier is one or more identifiers for which offloading in local and/or in a visited network is not authorized/not permitted/not allowed, in case that it is determined that the identifier of the edge application server matches the first information, the first message is transmitted; and/or when the first identifier is one or more identifiers for which offloading in local and/or in a visited network is authorized/permitted/allowed, in case that it is determined that the identifier of the edge application server does not match the first information, the first message is transmitted.

In the embodiment, the first session management function transmits the first message to the first edge application server discovery function or the first user plane function according to the matching result, and accordingly, the first edge application server discovery function or the first user plane function receives the first message transmitted by the first session management function. As a first implementation, the first message itself has a function of instructing, for example, a service called by the first message itself has a function of instructing the first EASDF or the first UPF to transmit the DNS request. As a second implementation, the first message includes one or more pieces of indication information (i.e., the second information), and the first EASDF or the first UPF transmits the DNS request according to an instruction of the second information or according to a specific value of the second information after receiving the first message. As a third implementation, the first message itself does not have an instruction function and does not include any indication information, and the first EASDF or the first UPF transmits the DNS request according to the internal logic/local configuration after receiving the first message.

In some alternative embodiments, the operation that the first message transmitted by the first session management function is received includes an operation that operations that: the first message carrying the DNS request transmitted by the first session management function is received, the first message is used to instruct the first edge application server discovery function or the first user plane function to transmit the DNS request; or, the first message includes second information used to instruct the first edge application server discovery function or the first user plane function to transmit the DNS request; or, the first message causes the first edge application server discovery function or the first user plane function to transmit the DNS request after receiving the first message; or
a first message transmitted by the first session management function is received, and the DNS request is constructed based on the first message, the first message is used to instruct the first edge application server discovery function or the first user plane function to construct the DNS request and transmit the DNS request; or, the first message includes third information used to instruct the first edge application server discovery function or the first user plane function to construct the DNS request and/or transmit the DNS request; or, the first message causes the first edge application server discovery function or the first user plane function to construct the DNS request and transmit the DNS request after receiving the first message.

The technical solution of the embodiment mainly includes two aspects. in a first aspect, the DNS request is constructed by the first session management function, and the DNS request is carried in the first message transmitted. In a second aspect, the first session management function transmits the first message to the first edge application server discovery function or the first user plane function, and the first edge application server discovery function or the first user plane function constructs the DNS request according to the first message, further, the first edge application server discovery function or the first user plane function transmits the DNS request.

In the first aspect described above, the first session management function constructs the DNS request and carries the DNS request in the first message. The first message also has three implementations. As a first implementation, the first message itself has a function of instructing, for example, a service called by the first message itself has a function of instructing the first EASDF or the first UPF to transmit the DNS request. As a second implementation, the first message includes one or more piece of indication information (i.e., the second information), and the first EASDF or the first UPF transmits the DNS request according to the instruction of the second information or according to a specific value of the second information after receiving the first message. As a third implementation, the first message itself does not have an instruction function and does not include any indication information, and the first EASDF or the first UPF transmits the DNS request according to the internal logic/local configuration after receiving the first message.

In the second aspect described above, the first message transmitted by the first session management function to the first edge application server discovery function or the first user plane function also has three implementations. As a first embodiment, the first message itself has a function of instructing, for example, the service called by the first message itself has a function of instructing the first EASDF or the first UPF to construct a DNS request and transmit the DNS request. As a second embodiment, the first message includes one or more indication information (i.e., third information), and after receiving the first message, the first EASDF or the first UPF constructs a DNS request and transmits the DNS request according to the instruction of the third information or the specific value of the third information. As a third embodiment, the first message itself does not have an instruction function and does not include any indication information, and the first EASDF or the first UPF constructs a DNS request according to the internal logical/local configuration after receiving the first message and transmits the DNS request.

In some alternative embodiments, the operation that the DNS request is transmitted includes operations that: when the DNS request carried in the first message includes information related to a H-PLMN, the DNS request is transmitted to an H-DNS server or a V-DNS server; and/or when the DNS request carried in the first message does not include information related to a H-PLMN, the DNS request is transmitted to the H-DNS server.

In various embodiments of the present disclosure, the DNS server is a third-party server, and the H-DNS or the V-DNS is used to distinguish the deployment location or deployment area of the DNS. In various embodiments of the present disclosure, the H-DNS may be a DNS server provided by the HPLMN, or may be described as a DNS server of which an address is provided by the HPLMN to the UE or the VPLMN, or may be described as a DNS server determined by the HPLMN. The V-DNS may also be a DNS server provided by the VPLMN, or may be described as a DNS server of which an address is provided by the HPLMN to the UE, or may be described as a DNS server determined by the VPLMN. If the DNS request carried in the first message includes the information related to the H-PLMN, the DNS request may be transmitted to any DNS server. For example, the DNS request is transmitted to the H-DNS server or the V-DNS server. If the DNS request carried in the first message does not include the information related to the H-PLMN, the DNS request is transmitted only to the H-DNS server. Here, as an example, the information related to the H-PLMN may be address information of the H-PLMN, and a manner in which the DNS request includes the information related to the H-PLMN may be using the information related to the H-PLMN as an ECS option.

In some optional embodiments, the operation that the DNS request is transmitted includes operations that: when the DNS request constructed by the first edge application server discovery function or the first user plane function includes information related to the H-PLMN, the DNS request is transmitted to the H-DNS server or the V-DNS server; and/or when the DNS request constructed by the first edge application server discovery function or the first user plane function does not include information related to the H-PLMN, the DNS request is transmitted to the H-DNS server.

In this embodiment, if the DNS request constructed by the first edge application server discovery function or the first user plane function includes the information related to the H-PLMN, the DNS request may be transmitted to any DNS server. For example, the DNS request is transmitted to the H-DNS server or the V-DNS server. If the DNS request constructed by the first edge application server discovery function or the first user plane function does not include information related to the H-PLMN, the DNS request is only transmitted to the H-DNS server. Here, as an example, the information related to the H-PLMN may be address information of the H-PLMN, and a manner in which the DNS request includes the information related to the H-PLMN may be using the information related to the H-PLMN as an ECS option.

Based on the above embodiment, an embodiment of the present disclosure further provides a method of processing information, and the method is applied to a first edge application server discovery function or a first user plane function. FIG. 10 is a third schematic flowchart of the method of processing information according to the embodiment of the present disclosure. As shown in FIG. 10, the method includes Operations 301-302.

In Operation 301, a first message transmitted by a first session management function is received. The first message is used to instruct the first edge application server discovery function or the first user plane function to transmit a second message to a first terminal, or the first message is used to cause the first edge application server discovery function or the first user plane function to transmit a second message to a first terminal after receiving the first message.

In Operation 302, the second message is transmitted to the first terminal.

In the embodiment, the first session management function, the first edge application server discovery function, and the first user plane function are all located at a visited location. Taking network elements in a 5G system/network as an example, the first session management function may be a visited SMF (V-SMF), the first edge application server discovery function may be a visited EASDF (V-EASDF), and the first user plane function may be a visited UPF (V-UPF). In other communication systems or even future communication systems, the first edge application server discovery function or the first user plane function to which the method is applied may be other network elements capable of performing corresponding functions, and the name of the network element is not limited in this embodiment.

In the embodiment, in case that the first session management function determines that the identifier of the edge application server matches or does not match the first information, the first message is transmitted. Specifically, when the first identifier is one or more identifiers for which offloading in local and/or in a visited network is not authorized/not permitted/not allowed, in case that it is determined that the identifier of the edge application server matches the first information, the first message is transmitted; and/or when the first identifier is one or more identifiers for which offloading in local and/or in a visited network is authorized/permitted/allowed, in case that it is determined that the identifier of the edge application server does not match the first information, the first message is transmitted.

In the embodiment, the first session management function transmits the first message to the first edge application server discovery function or the first user plane function according to the matching result described above. The first edge application server discovery function or the first user plane function transmits the second message to the first terminal according to the first message, thereby instructing the first terminal to retransmit the DNS request to the H-DNS server, or instructing the first terminal to transmit the DNS request to the H-DNS server.

In some alternative embodiments, the second message is used to instruct the first terminal to retransmit the DNS request to the H-DNS server, or the second message is used to instruct the first terminal to transmit the DNS request to the H-DNS server.

In the embodiment, the first message transmitted by the first session management function to the first edge application server discovery function or the first user plane function has three implementations. As a first implementation, the first message itself has a function of instructing. For example, a service called by the first message itself has a function of instructing the first EASDF or the first UPF to transmit the second message to the first terminal. As a second implementation, the first message includes one or more pieces of indication information (such as seventh information), and after receiving the first message, the first EASDF or the first UPF transmits a second message to the first terminal according to an instruction of the indication information or according to a specific value of the indication information. As a third implementation, the first message itself does not have an instruction function and does not include any indication information, and the first EASDF or the first UPF transmits the second message to the first terminal according to the internal logic/local configuration after receiving the first message.

In some alternative embodiments, the second message transmitted by the first edge application server discovery function or the first user plane function to the first terminal may also have three implementations. As a first implementation, the second message itself has a function of instructing. For example, the service called by the second message itself has the function of instructing the first terminal to transmit (or retransmit) the DNS request to the H-DNS server. As a second implementation, the second message includes one or more pieces of indication information (such as eighth information), and after receiving the second message, the first terminal transmits (or retransmits) the DNS request to the H-DNS server according to an instruction of the indication information or according to a specific value of the indication information. As a third implementation, the second message itself does not have an instruction function and does not include any indication information, and the first terminal transmits (or retransmits) the DNS request to the H-DNS server according to the internal logic/local configuration after receiving the second message.

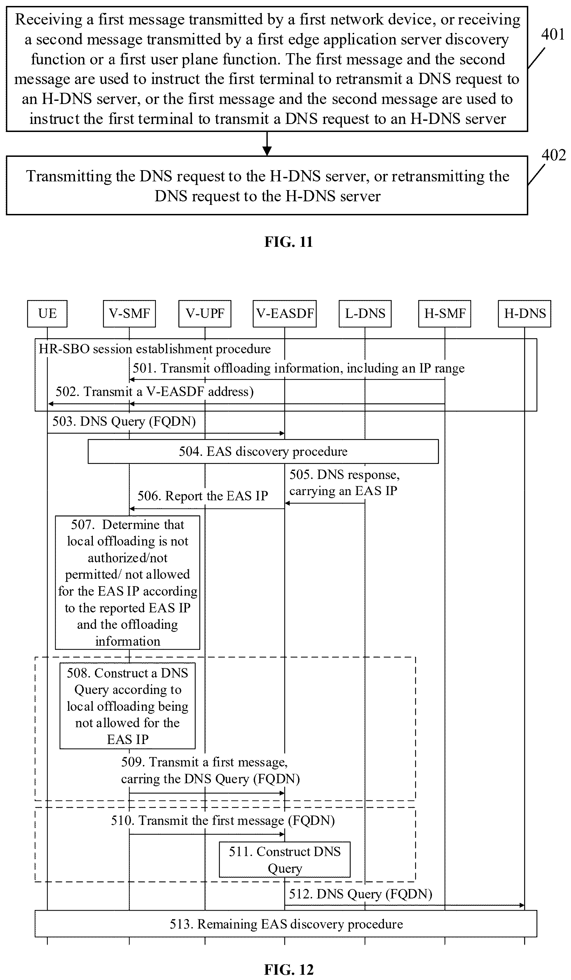

Based on the above-described embodiment, an embodiment of the present disclosure further provides a method of processing information, and the method is applied to a first terminal. FIG. 11 is a fourth schematic flow diagram of the method of processing information according to the embodiment of the present disclosure. As shown in FIG. 11, the method includes Operations 401-402.

In Operation 401, a first message transmitted by a first network device is received, or a second message transmitted by a first edge application server discovery function or a first user plane function is received. The first message and the second message are used to instruct the first terminal to retransmit a DNS request to an H-DNS server, or the first message and the second message are used to instruct the first terminal to transmit a DNS request to an H-DNS server. The first network device is at least one of a first session management function, a first edge application server discovery function, and a first user plane function.

In Operation 402, the DNS request is transmitted to the H-DNS server or the DNS request is retransmitted to the H-DNS server.

In the embodiment, the first terminal may retransmit the DNS request to the H-DNS server or transmit the DNS request to the H-DNS server according to a message from a network device or a network element of a core network. As a first implementation, the first terminal may receive the first message transmitted by the first network device that is at least one of the first session management function, the first edge application server discovery function, and the first user plane function. That is, at least one of the first session management function, the first edge application server discovery function, and the first user plane function may directly transmit the first message to the first terminal to instruct the first terminal to retransmit the DNS request to the H-DNS server, or instruct the first terminal to transmit the DNS request to the H-DNS server. As another implementation, the first terminal may receive the second message transmitted by the first edge application server discovery function or the first user plane function. Before the first terminal receives the second message, the first message transmitted from the first session management function is received by the first edge application server discovery function or the first user plane function. The first message is used to instruct the first edge application server discovery function or the first user plane function to transmit the second message to the first terminal. The first edge application server discovery function or the first user plane function transmits the second message to the first terminal according to the first message to instruct the first terminal to retransmit the DNS request to the H-DNS server or instruct the first terminal to transmit the DNS request to the H-DNS server.

In the embodiment, the first session management function, the first edge application server discovery function, and the first user plane function are all located at a visited location. Taking network elements in a 5G system/network as an example, the first session management function may be a visited SMF (V-SMF) or I-SMF, the first edge application server discovery function may be a visited EASDF (V-EASDF), and the first user plane function may be a visited UPF (V-UPF). In other communication systems or even future communication systems, the first edge application server discovery function or the first user plane function to which the method is applied may be other network elements capable of performing corresponding functions, and the name of the network element is not limited in this embodiment.

In some alternative embodiments, the first message transmitted by the first network device to the first terminal may have three implementations. As a first implementation, the first message itself has the function of instructing. For example, the service called by the first message itself has the function of instructing the first terminal to transmit (or retransmit) the DNS request to the H-DNS server. As a second implementation, the first message includes one or more pieces of indication information, and after receiving the first message, the first terminal transmits (or retransmits) the DNS request to the H-DNS server according to an instruction of the indication information or according to a specific value of the indication information. As a third implementation, the first message itself does not have an instruction function and does not include any indication information, and the first terminal transmits (or retransmits) the DNS request to the H-DNS server according to the internal logic/local configuration after receiving the first message.

In some alternative embodiments, the second message transmitted by the first edge application server discovery function or the first user plane function to the first terminal may also have three implementation. As a first implementation, the second message itself has a function of instructing. For example, a service called by the second message itself has the function of instructing the first terminal to transmit (or retransmit) the DNS request to the H-DNS server. As a second implementation, the second message includes one or more pieces of indication information (such as eighth information), and after receiving the second message, the first terminal transmits (or retransmits) the DNS request to the H-DNS server according to an instruction of the indication information or according to a specific value of the indication information. As a third implementation, the second message itself does not have an instruction function and does not include any indication information, and the first terminal transmits (or retransmits) the DNS request to the H-DNS server according to the internal logic/local configuration after receiving the second message.

Hereinafter, a method of processing information according to an embodiment of the present disclosure will be described in detail with reference to specific examples.

### Example 1

FIG. 12 is a schematic diagram of an interaction procedure of a method of processing information according to an embodiment of the present disclosure. As shown in FIG. 12, the method includes the following operations.

Operation 501: An H-SMF transmits offloading information to a V-SMF. The offloading information includes an IP range.

Here, the offloading information corresponds to the first information in the above-described embodiments. Exemplarily, the offloading information may be offloading information or VPLMN specific offloading information.

Operation 502: The H-SMF transmits a V-EASDF address (such as V-EASDF IP address) to a UE through the V-SMF.

It should be noted that the V-EASDF is selected by the V-SMF. As one implementation, in order to reuse a previous mechanism, the V-SMF needs to first transmit the V-EASDF address to the H-SMF, and then the H-SMF transmits it to the UE through a Protocol Configuration Option (PCO). Contents of the PCO are invisible for the V-SMF, which is equivalent to that the V-SMF transparently passes the V-EASDF address. In order to reflect the control point status of the H-SMF in an HR roaming mode. As another implementation, the V-SMF may directly transmit the V-EASDF address to the UE. When the EAS discovery is performed through a L-DNS, the network side transmits the L-DNS address to the UE, instead of the EASDF address.

The above operations 501 to 502 may be performed in the HR-SBO session establishment procedure shown in FIG. 5. In fact, the HR-SBO session establishment procedure is completely executed, and since the procedure is relatively lengthy after all messages are listed, only the key operations related to the embodiment of the present disclosure are listed in this example, and the trigger conditions and the carrying messages of these operations may be the same as those of the related technology, or may be not limited.

Here, the information transmitted by the H-SMF to the V-SMF in operations 501 and 502 may be carried in the same or different messages.

Operation 503: The UE transmits a DNS request/query (DNS Query) message carrying a FQDN to the V-EASDF.

Here, for the case of performing the EAS discovery through the L-DNS, the DNS Query is transmitted directly to the L-DNS.

Operation 504: The EAS discovery procedure shown in FIG. 6 is proceeded until, for example, the operation 13 of FIG. 1 where a DNS Response is returned. Operations that are the same as that in the related art and are unrelated to the present disclosure have been omitted.

Here, in a case that the EAS discovery is performed by the L-DNS, after the DNS Query is transmitted to the L-DNS, the L-DNS directly returns a DNS Response, that is, operation 505 is performed directly after operation 503.

Operation 505: A DNS server returns a DNS Response message to the V-EASDF, the DNS Response message carries the EAS IP. If the EAS discovery is performed through the EASDF, a centralized DNS (C-DNS) server or L-DNS server can return the DNS Response message to the EASDF. If the EAS discovery is performed by the L-DNS, the L-DNS server returns the DNS Response message (through the V-UPF) to the UE.

Operation 506: The V-EASDF reports the EAS IP to the V-SMF.

Here, when the L-DNS performs the EAS discovery, the EAS IP may be reported to the V-SMF through the V-UPF. Since the work of the UPF does not include the processing of DNS messages, the V-SMF needs to transmit a packet processing rule in advance to instruct the UPF to report the EAS IP. For example, the SMF transmits the packet processing rule through an N4 message: for a packet whose original address is the L-DNS and whose destination address is the UE, it is necessary to cache and report contents of the packet to the SMF. There is no restriction on the content of the rule, as long as the EAS IP of the DNS Response can be reported to the SMF.

Here, the V-EASDF may transmit a DNS context notify (Neasdf_DNSContext_Notify) message including the EAS IP to the V-SMF.

Operation 507: According to the EAS IP reported by the V-EASDF, the V-SMF determines that local offloading is not authorized/not permitted/ not allowed for the EAS IP.

Specifically, the V-SMF may determine that local offloading in the VPLMN is not authorized/not permitted/ not allowed for the EAS IP according to the offloading information (or the IP range included in the offloading information).

As one possible implementation, the V-SMF determines that local offloading in the VPLMN is not authorized/not allowed for the EAS IP if the EAS IP is not within an IP range, for which local offloading is allowed, in the offloading information or the EAS IP is within an IP range, for which local offloading is not allowed, in the offloading information.

Only one of the following operations 508-509 or operations 510-511 needs to be performed.

Operation 508: The V-SMF constructs a DNS Query message according to offloading in VPLMN local being not allowed for the EAS IP. The DNS Query message includes the FQDN of the service. Optionally, the DNS Query message may further include the ECS option of the HPLMN.

Here, the present example does not limit how the V-SMF acquires the FQDN of the service. For example, the V-SMF may acquire the FQDN of the service in a manner that the V-EASDF/V-UPF reports it to the V-SMF, or the V-SMF may determine the FQDN of the service based on EAS deployment information (EDI).

Operation 509: The V-SMF transmits a first message to the V-EASDF or the V-UPF. The first message includes the constructed DNS Query message. Here, optionally, the DNS Query message may include the FQDN.

Optionally, the first message may further include an H-DNS address. In other alternative embodiments, the H-DNS address may be known to the V-EASDF or V-UPF. For example, the H-DNS address has been transmitted to the V-EASDF or V-UPF at the time of session establishment. Alternatively, the H-DNS address is well-known, at this time, it is not necessary to transmit the H-DNS address through the first message.

Optionally, the first message may further include first indication information used to instruct the V-EASDF or the V-UPF to transmit the DNS Query to the H-DNS server. In other alternative embodiments, the first message may not include the first indication information, that is, the first message itself has a function of instructing. For example, a service called by the first message itself has the function of instructing the first EASDF or the first UPF to transmit the DNS Query. In another alternative embodiment, the first message may not include the first indication information or the first message has no instruction function, and the first EASDF or the first UPF may transmit the DNS Query according to the internal logic/local configuration after receiving the first message.

Exemplarily, the first message may be a DNS context update (Neasdf_DNSContext_Update) message.

Operations 510-511: The V-SMF transmits a first message to the V-EASDF or V-UPF, and the V-EASDF or V-UPF constructs a DNS Query. The FQDN may be included in the first message.

In some alternative embodiments, the first message may be used to instruct the V-EASDF or V-UPF to construct and transmit the DNS Query, i.e., the first message itself has a function of instructing. The V-EASDF or V-UPF may construct the DNS Query according to the instruction of the first message and transmit the DNS Query. In other alternative embodiments, the first message may include second indication information, which may be used to instruct the V-EASDF or V-UPF to construct and transmit the DNS Query. The V-EASDF or V-UPF may construct the DNS Query and transmit the DNS Query according to the instruction of the second indication information. In some alternative embodiments, the first message does not include indication information and does not have instruction function, and the first EASDF or the first UPF may construct the DNS Query and transmit the DNS Query according to the internal logic/local configuration after receiving the first message.

Operation 512: The V-EASDF or V-UPF transmits the DNS Query to the H-DNS server.

Operation 513: The EAS discovery procedure proceeds according to the conventional technical solution.

Here, it should be noted that, the source IP of the DNS Query constructed in the manner that the V-UPF constructs or forwards the DNS Query is the V-UPF address and the destination IP of the DNS Query is the H-DNS address. Therefore, the source IP of the returned DNS Response is the H-DNS address and the destination IP of the returned DNS Response is the V-UPF address. In order to prevent the UE from being aware, the V-UPF may change the source IP and the destination IP to the L-DNS address and the UE address, respectively, when forwarding the DNS Response to the UE.

### Example 2

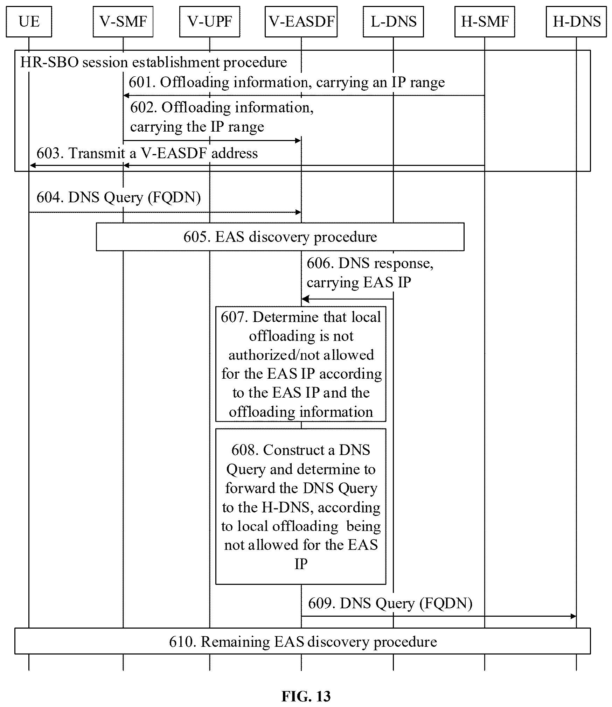

FIG. 13 is a second schematic diagram of an interaction procedure of a method of processing information according to an embodiment of the present disclosure. As shown in FIG. 13, the method includes the following operations.

Operation 601: An H-SMF transmits offloading information to a V-SMF. The offloading information includes an IP range.

Operation 602: The V-SMF transmits the offloading information to the V-EASDF/V-UPF, the offloading information includes the IP range.

Operation 603: The H-SMF transmits a V-EASDF address (such as V-EASDF IP address) to a UE through the V-SMF.

It should be noted that the V-EASDF is selected by the V-SMF. As one implementation, in order to reuse a previous mechanism, the V-SMF needs to first transmit the V-EASDF address to the H-SMF, and then the H-SMF transmits it to the UE through a Protocol Configuration Option (PCO). Contents of the PCO are invisible for the V-SMF, which is equivalent to that the V-SMF transparently passes the V-EASDF address, in order to reflect the control point status of the H-SMF in an HR roaming mode. As another implementation, the V-SMF may directly transmit the V-EASDF address to the UE. When the EAS discovery is performed through an L-DNS, the network side transmits the L-DNS address to the UE, instead of the EASDF address.

It should be noted that the occasion of performing operation 602 is not limited to that shown in the example, and may be executed before or after operation 603.

Operation 604: The UE transmits a DNS request/query (DNS Query) message to the V-EASDF.

Operation 605: The EAS discovery procedure shown in FIG. 6 is continuously performed. Operations that are the same as that in the related art and are unrelated to the present disclosure have been omitted. For example, until the operation 13 of FIG. 1, a DNS Response is returned.

Operation 606: The DNS server returns the DNS Response message to the V-EASDF, the DNS Response message carries the EAS IP. If the EAS discovery is performed through the EASDF, a centralized DNS (C-DNS) server or L-DNS server can return the DNS Response message to the EASDF. If the EAS discovery is performed by the L-DNS, the L-DNS server returns the DNS Response message (through the V-UPF) to the UE.

Operations 604-606 are the same as operations 503-505 in Example 1. The case of performing the EAS discovery using the L-DNS is the same as in Example 1.

Operation 607: The V-EASDF or V-UPF determines that local offloading in the VPLMN is not authorized/not allowed for the EAS IP based on the EAS IP.

Specifically, the V-EASDF or V-UPF may determine that local offloading in the VPLMN is not authorized/not allowed for the EAS IP according to the offloading information (or the IP range included in the offloading information).

As one possible implementation, the V-EASDF or V-UPF determines that the EAS IP is not authorized/not allowed to be offloaded locally at the VPLMN if the EAS IP is not within an IP range, for which local offloading is allowed, in the offloading information or the EAS IP is within an IP range, for which local offloading is not allowed, in the offloading information.

Operation 608: The V-SMF constructs a DNS Query message and determines to forward the DNS Query message to the H-DNS, according to local offloading in the VPLMN being not allowed for the EAS IP.

In some alternative embodiments, the DNS Query includes an FQDN of the service. Optionally, the DNS Query message may further include an ECS option of the HPLMN.

Here, the manner in which the V-EASDF or V-UPF acquires the H-DNS address is not limited in this example. For example, the H-DNS address may be acquired from the V-SMF through a local configuration or in advance (such as during the session establishment procedure).

Operation 609: The V-EASDF or V-UPF transmits the DNS Query to the H-DNS server.

Operation 610: The EAS discovery procedure is proceeded according to the conventional technical solution.

### Example 3

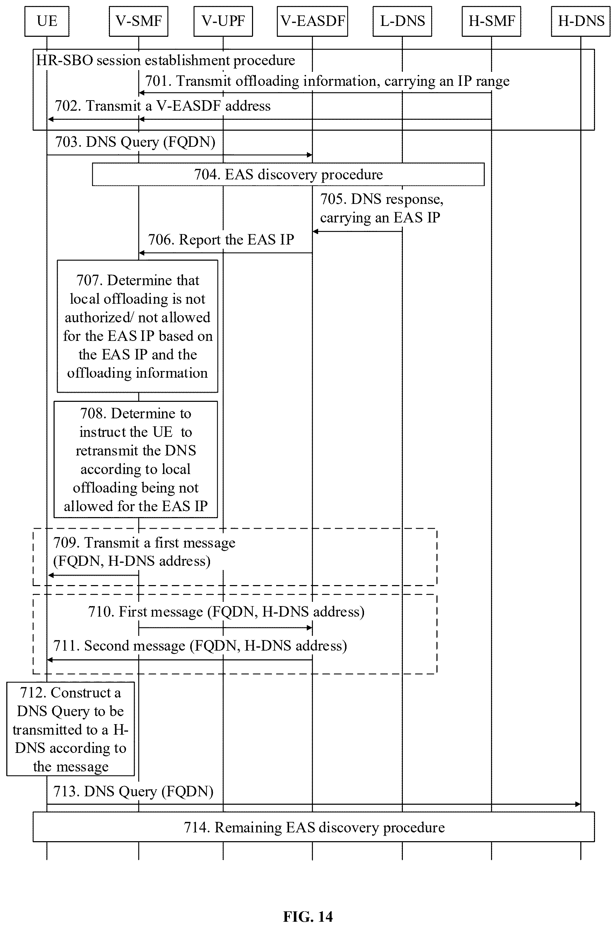

FIG. 14 is a third schematic diagram of an interaction procedure of a method of processing information according to an embodiment of the present disclosure. As shown in FIG. 14, the method includes the following operations.

Operation 701: An H-SMF transmits offloading information to a V-SMF. The offloading information includes an IP range.

Here, the offloading information corresponds to the first information in the above-described embodiments. Exemplarily, the offloading information may be offloading information or VPLMN specific offloading information.

Operation 702: The H-SMF transmits a V-EASDF address (such as V-EASDF IP address) to a UE through a V-SMF.

It should be noted that the V-EASDF is selected by the V-SMF. As one implementation, in order to reuse a previous mechanism, the V-SMF needs to first transmit the V-EASDF address to the H-SMF, and then the H-SMF transmits it to the UE through a Protocol Configuration Option (PCO). Contents of the PCO are invisible for the V-SMF, which is equivalent to that the V-SMF transparently passes the V-EASDF address, in order to reflect the control point status of the H-SMF in an HR roaming mode. As another implementation, the V-SMF may directly transmit the V-EASDF address to the UE. When the EAS discovery is performed through a L-DNS, the network side transmits the L-DNS address to the UE, instead of the EASDF address.

The above operations 701 to 702 may be performed in the HR-SBO session establishment procedure shown in FIG. 5. In fact, the HR-SBO session establishment procedure should be completely executed. Since the procedure is relatively lengthy after all message are listed, only the key operations related to the embodiment of the present disclosure are listed in this example, and the trigger conditions and the carrying messages of these operations may be the same as those of the related technology, or may be not limited.

Here, the information transmitted by the H-SMF to the V-SMF in operations 701 and 702 may be carried in the same or different messages.

Operation 703: The UE transmits a DNS request/query (DNS Query) message to the V-EASDF. The DNS request/query (DNS Query) message may include a FQDN.

Here, for the case of performing the EAS discovery through the L-DNS, the DNS Query is transmitted directly to the L-DNS.

Operation 704: The EAS discovery procedure shown in FIG. 6 is proceeded until, for example, the operation 13 of FIG. 1 where a DNS Response is returned. Operations that are the same as that in the related art and are unrelated to the present disclosure have been omitted.

Here, in the case where EAS discovery is performed by L-DNS, after the DNS Query is transmitted to L-DNS, L-DNS directly returns DNS Response, that is, operation 705 is performed directly after operation 703.

Operation 705: A DNS server returns a DNS Response message to the V-EASDF, the DNS Response message carries the EAS IP. If the EAS discovery is performed through the EASDF, a centralized DNS (C-DNS) server or L-DNS server can return the DNS Response message to the EASDF. If the EAS discovery is performed by the L-DNS, the L-DNS server returns the DNS Response message (through the V-UPF) to the UE.

Operation 706: The V-EASDF reports the EAS IP to the V-SMF.

Here, when the L-DNS performs the EAS discovery, the EAS IP may be reported to the V-SMF through the V-UPF. Since the work of the UPF does not include the processing of DNS messages, the V-SMF needs to transmit a packet processing rule in advance to instruct the UPF to report the EAS IP. For example, the SMF transmits the packet processing rule through an N4 message: for a packet whose original address is the L-DNS and whose destination address is the UE, it is necessary to cache and report contents of the packet to the SMF. There is no restriction on the content of the rule, as long as the EAS IP of the DNS Response can be reported to the SMF.

Here, the V-EASDF may transmit a DNS context notify (Neasdf_DNSContext_Notify) message including the EAS IP to the V-SMF.

Operation 707: According to the EAS IP reported by the V-EASDF, the V-SMF determines that local offloading is not authorized/not permitted/ not allowed for the EAS IP.

Specifically, the V-SMF may determine that local offloading in the VPLMN is not authorized/not allowed/not permitted for the EAS IP according to the offloading information (or the IP range included in the offloading information).

As one possible implementation, the V-SMF determines that local offloading in the VPLMN is not authorized/not allowed for the EAS IP if the EAS IP is not within an IP range for which local offloading is allowed in the offloading information or the EAS IP is within an IP range, for which local offloading is not allowed, in the offloading information.

Operation 708: The V-SMF determines to instruct the UE to retransmit the DNS Query message to the H-DNS according to local offloading being not allowed for the EAS IP.

Only one of the following operations 709 or 710-711 needs to be performed.

Operation 709: The V-SMF transmits a first message to the UE. Optionally, the first message may include an FQDN and/or an H-DNS address of the service.

As one implementation, the first message itself has a function of instructing. For example, the service called by the first message itself has a function of instructing the UE to retransmit the DNS Query to the H-DNS server. As another implementation, the first message may include third indication information for instructing the UE to retransmit the DNS Query to the H-DNS server. As still another implementation, the first message may not include indication information or may have no instruction function, and the UE may transmit the DNS Query according to the internal logic/local configuration after receiving the first message.

It should be noted that the transmission method of this operation is not limited in this example. For example, the V-SMF may first transmit the first message to the H-SMF, and then the H-SMF may transmit the first message to the UE through the PCO, or the V-SMF may transmit the first message to the UE through a Session Management (SM) Non-Access Stratum (NAS) message.

Operation 710: The V-SMF transmits a first message to the V-EASDF or the V-UPF. Optionally, the first message may include an FQDN and/or an H-DNS address of the service.

As one implementation, the first message itself has a function of instructing. For example, the service called by the first message itself has a function of instructing the V-SMF to the V-EASDF to transmit the second message to the UE. As another implementation, the first message may include fourth indication information for instructing the V-SMF or the V-EASDF to transmit the second message to the UE. In another implementation, the first message may not include indication information or may have no instruction function, and the V-SMF or the V-EASDF may transmit the second message according to the internal logic/local configuration after receiving the first message.

Operation 711: The V-EASDF or V-UPF transmits the second message to the UE through a user plane packet. The second message is used to instruct the UE to retransmit the DNS request to the H-DNS server.

Optionally, the second message may include an FQDN and/or an H-DNS address.

As one implementation, the second message itself has a function of instructing. For example, the service called by the second message itself has a function of instructing the UE to retransmit the DNS Query to the H-DNS server. As another implementation, the second message may include third indication information for instructing the UE to retransmit the DNS Query to the H-DNS server. As still another implementation, the second message may not include indication information or may have no instruction function, and the UE may transmit the DNS Query according to the internal logic/local configuration after receiving the second message.

In this example, the specific transmission form and mode of the user plane packet are not limited, and for example, the user plane packet may be a general user plane downlink packet or a DNS Response, or the above information may be transmitted with a packet, or a separate user plane downlink packet may be constructed.

In some alternative embodiments, if the FQDN or H-DNS address is not included in the first message in operation 710, the V-EASDF or V-UPF itself may determine such information. This example does not limit the specific acquisition method of the FQDN or H-DNS address, for example, the FQDN can be determined by recording the FQDN in the DNS Response, the H-DNS address can be determined by local configuration, etc.

Operation 712: According to the first message or the second message, the UE constructs a DNS Query and determines to transmit it to the H-DNS.

Operation 713: The UE transmits the DNS Query to the H-DNS.

Operation 714: The EAS discovery procedure is proceeded according to the conventional technical solution.

### Example 4

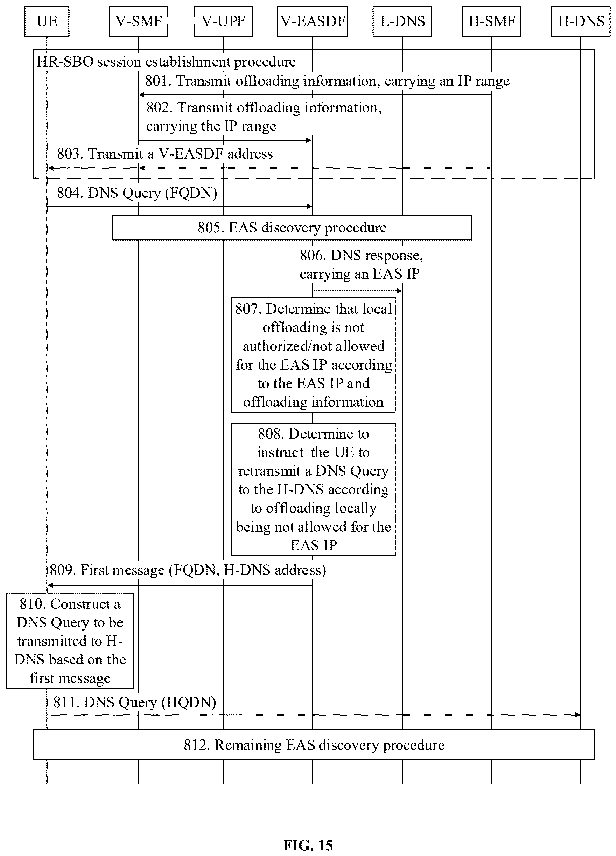

FIG. 15 is a fourth schematic diagram of an interaction procedure of a method of processing information according to an embodiment of the present disclosure. As shown in FIG. 15, the method includes the following operations.

Operation 801: An H-SMF transmits offloading information to a V-SMF. The offloading information includes an IP range.

Operation 802: the V-SMF transmits the offloading information to a V-EASDF/V-UPF. The offloading information includes an IP range.

Operation 803: The H-SMF transmits a V-EASDF address (such as V-EASDF IP address) to the UE through the V-SMF.

It should be noted that the V-EASDF is selected by the V-SMF. As one implementation, in order to reuse a previous mechanism, the V-SMF needs to first transmit the V-EASDF address to the H-SMF, and then the H-SMF transmits it to the UE through a Protocol Configuration Option (PCO). Contents of the PCO are invisible for the V-SMF, which is equivalent to that the V-SMF transparently passes the V-EASDF address, in order to reflect the control point status of the H-SMF in an HR roaming mode. As another implementation, the V-SMF may directly transmit the V-EASDF address to the UE. When the EAS discovery is performed through an L-DNS, the network side transmits the L-DNS address to the UE, instead of the EASDF address.

Operation 804: The UE transmits a DNS request/query (DNS Query) message carrying the FQDN to the V-EASDF.

Operation 805: The EAS discovery procedure shown in FIG. 6 is pcoceeded until, for example, the operation 13 of FIG. 1 where a DNS Response is returned. Operations that are the same as that in the related art and are unrelated to the present disclosure have been omitted.

Operation 806: A DNS server returns a DNS Response message carrying the EAS IP to the V-EASDF. If the EAS discovery is performed through the EASDF, a centralized DNS (C-DNS) server or L-DNS server can return the DNS Response message to the EASDF. If the EAS discovery is performed by the L-DNS, the L-DNS server returns the DNS Response message (through the V-UPF) to the UE.

Operation 807: The V-EASDF or V-UPF determines that local offloading is not authorized/not allowed for the EAS IP according to the EAS IP.

Specifically, the V-EASDF or V-UPF may determine that local offloading in the VPLMN is not authorized/not allowed for the EAS IP according to the offloading information (or the IP range included in the offloading information).

As one possible implementation, the V-EASDF or V-UPF determines that local offloading in the VPLMN is not authorized/not allowed for the EAS IP if the EAS IP is not within the IP range, for which local offloading is allowed, in the offloading information or the EAS IP is within an IP range, for which local offloading is not allowed, in the offloading information.

It should be noted that operations 801 to 807 in the present example are the same as operations 601 to 607 in the second example.

Operation 808: The V-EASDF or V-UPF determines to instruct the UE to retransmit a DNS Query message to the H-DNS according to local offloading being not allowed for the EAS IP.

Operation 809: The V-EASDF or V-UPF transmits a first message to the UE through a user plane packet. The first message is used to instruct the UE to retransmit the DNS request to the H-DNS server.

Optionally, the first message may include an FQDN and/or an H-DNS address.

As one implementation, the first message itself has a function of instructing. For example, the service called by the first message itself has a function of instructing the UE to retransmit the DNS Query to the H-DNS server. As another implementation, the first message may include third indication information for instructing the UE to retransmit the DNS Query to the H-DNS server. As still another implementation, the first message may not include indication information or may have no instruction function, and the UE may transmit the DNS Query according to the internal logic/local configuration after receiving the first message.

In this example, the specific transmission form and mode of the user plane packet are not limited, and for example, the user plane packet may be a general user plane downlink packet or a DNS Response, or the above information may be transmitted with a packet, or a separate user plane downlink packet may be constructed.

Operation 810: According to the first message, the UE constructs a DNS Query and determines to transmit it to the H-DNS.

Operation 811: The UE transmits the DNS Query to the H-DNS.

Operation 812: the EAS discovery procedure is proceeded according to the conventional technical solution.

It should be noted that operations 809 to 812 in this example are the same as operations 711 to 714 in Example 3.

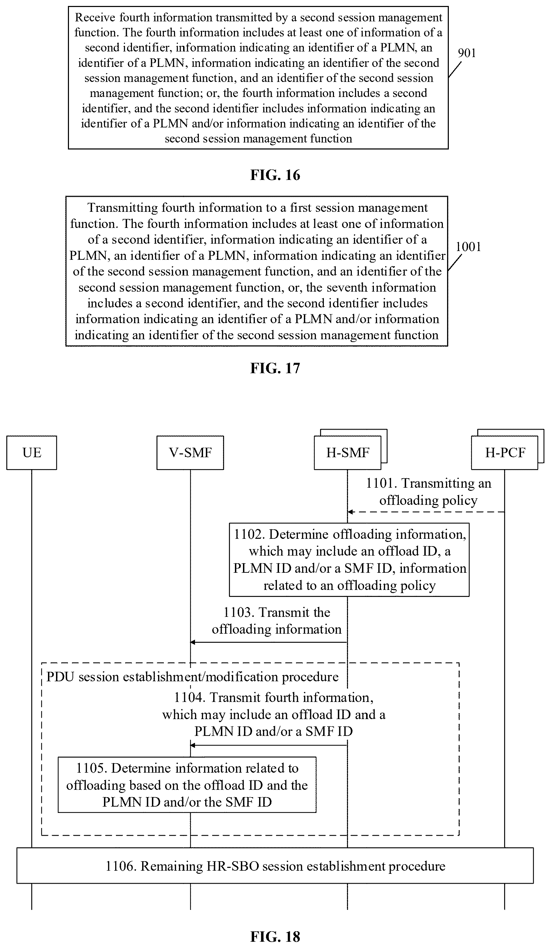

An embodiment of the present disclosure further provides a method of processing information, and the method is applied to a first session management function. FIG. 16 is a fifth flowchart of a method of processing information according to an embodiment of the present disclosure. As shown in FIG. 16, the method includes operation 901.

Operation 901: Fourth information transmitted by the second session management function is received. The fourth information includes at least one of information of a second identifier, information indicating an identifier of a PLMN, an identifier of a PLMN, information indicating an identifier of the second session management function, and an identifier of the second session management function; or, the fourth information includes a second identifier, and the second identifier includes information indicating an identifier of a PLMN and/or information indicating an identifier of the second session management function.

In the embodiment, the first session management function is located at a visited location; and/or the second session management function is located at a home location; and/or the first policy management function is located at a home location. Taking network elements in a 5G system/network as an example, the first session management function may be a visited SMF (V-SMF), the second session management function may be a Home-SMF (H-SMF), and the first policy management function may be a home PCF (H-PCF).

In the embodiment, the information indicating the identifier of the PLMN may be understood as the PLMN identifier itself. In other embodiments, the information indicating the identifier of the PLMN may also be understood as: a variation of the identifier of the PLMN. A variant of the identifier of the PLMN may be, for example, a part of the identifier of the PLMN (e.g. a Mobile Network Code (MNC), a Mobile Country Code (MCC), etc.). In other embodiments, the information indicating the identifier of the PLMN may also be understood as information having a certain association relationship with the identifier of the PLMN, for example, the information may be used to acquire the corresponding PLMN identifier through a series of processing/derivation/mapping operations.

In the embodiment, the identifier of the PLMN may be a PLMN ID.

In the embodiment, the information indicating the identifier of the second session management function may be understood as an SMF (H-SMF) identifier itself, which may be, for example, information of an address of the SMF, an SMF ID, an SMF set ID, an SMF group ID, an identifier of an equivalent SMF, or the like. In other alternative embodiments, the information indicating the identifier of the second session management function may also be understood as a variation of the SMF (H-SMF) identifier, for example, a part of contents of the SMF identifier. In other alternative embodiments, the information indicating the identifier of the second session management function may also be understood as information having a certain association relationship with the SMF (H-SMF) identifier, for example, the information may be used to acquire the corresponding SMF identifier through a series of processing/derivation/mapping operations, and may be for example, one or more of the following information: information related to the location of the SMF, a DNN and/or S-NSSAI supported by the SMF, a service area of the SMF, one or more data network access identifiers (DNAIs) supported by/related to the SMF, addresses and/or identifiers of one or more UPFs related to the SMF, etc.

In the embodiment, the identifier of the second session management function may be a second SMF ID.

In various embodiments of the present disclosure, the information indicating the identifier of the PLMN and/or the information indicating the identifier of the second session management function may be understood as information indicating a HPLMN. For example, if the information indicating the identifier of the PLMN is the PLMN ID, the PLMN ID may be the HPLMN ID. For another example, if the information indicating the identifier of the second session management function is an SMF ID, the SMF ID may be an H-SMF ID.

In some alternative embodiments, all or part of the fourth information is used to represent fifth information, and the fifth information is information related to offloading.

In the embodiment, the information related to offloading may be understood as offloading policy information, VPLMN Specific Offloading Information, a VPLMN Specific Offloading Policy, and the like, or may be understood as a content related to an offloading policy, and may include, for example, at least one of a FQDN range, an IP range, a session AMBR for the local part of a DN, a charging policy. The AMBR is an Aggregate Maximum Bit Rate.

In the embodiment, the second identifier information may include a second identifier. The second identifier may be an identifier for indicating offloading policy information, and the second identifier may be an offload identifier (Offload ID).

In the embodiment, the second identifier may include information indicating an identifier of a PLMN and/or information indicating an identifier of the second session management function. For example, a part of the second identifier indicates a PLMN ID and/or an identifier of the second SMF. It may be understood as that the part of the second identifier is the PLMN ID and/or the second SMF ID itself, or it may be understood as that the part of the second identifier may be a variation of the PLMN ID and/or the second SMF ID, or it may be understood as that the part of the second identifier may be information that can be used to acquire the corresponding PLMN ID and/or the second SMF ID after a series of processes/mappings/derivation.

In this embodiment, all or part of the fourth information is used to represent the fifth information, which may be understood as all or part of the fourth information is used to represent/indicate the fifth information, or the fifth information may be acquired from all or part of the fourth information according to a series of derivations/processes.

In the embodiment, the first session management function (such as V-SMF) receives the fourth information transmitted by the second session management function (such as H-SMF). The fourth information includes at least one of: a second identifier, information indicating an identifier of a PLMN, and information indicating an identifier of the second session management function. Alternatively, the fourth information includes a second identifier, and the second identifier includes information indicating an identifier of a PLMN and/or information indicating an identifier of the second session management function. In the embodiment, the information related to offloading is associated with at least one of a second identifier, information indicating an identifier of a PLMN, and information indicating an identifier of the second session management function, or the information related to offloading is associated with a second identifier including information indicating an identifier of a PLMN and/or information indicating an identifier of the second session management function, so that the first session management function can identify the PLMN or the second session management function associated with the offloading information through the fourth information (the same SMF can only be associated with one PLMN), thereby solving the problem that one offload ID corresponds to different offloading information in different PLMNs.

In some alternative embodiments, the fifth information includes the first information.

In this embodiment, all or part of the content of the first information can be used to determine that a specified service is offloaded in the VPLMN or in local. Specifically, it may be used to determine that a service is allowed/permitted/authorized to be offloaded in the VPLMN or in local, or it may be used to determine that a service is not allowed/ not permitted/not authorized to be offloaded in the VPLMN or in local. The specific meaning and function of the first information can be referred to in the previous embodiment, and will not be described here.

In this embodiment, the fifth information includes the first information. As an implementation, the fifth information is equivalent to the first information. As another embodiment, the fifth information includes other information besides the first information.

In some alternative embodiments of the present disclosure, the fourth information may be information at node granularity or node level, and/or the first session management function receives the fourth information transmitted by the second session management function through node granularity or node level.

In this embodiment, the node granularity or node level refers to related network functions that have effect on information, actions or processes at node granularity or node level, and the scope of effect of the information, actions or processes is not limited to a certain session or UE, but at the device level. For example, the fourth information is information at node granularity or node level, which may mean that, for a network function related to the fourth information (i.e. the first session management function and/or the second session management function), the scope of effect of the fourth information is not limited to a specific UE or a specific session, but is valid for all or part of sessions of the first session management function and/or all or part of sessions of the second session management function. For another example, the first session management function receives the fourth information transmitted by the second session management function through the node granularity or the node level, which may mean that a action or process by which the first session management function receives the fourth information transmitted by the second session management function is not specific to a certain session or a certain UE. That is, the information (such as the fourth information) transmitted by this action or process is suitable for multiple sessions with the first session management function and/or the second session management function, or suitable for all or part of sessions with the first session management function and/or the second session management function. Alternatively, the information (such as the fourth information) transmitted by this action or process will be stored according to the node granularity or node level, such as, the fourth information stored by the first session management function, the fourth information can be applied in multiple sessions of the first session management function.

In some alternative embodiments, the operation that the fourth information transmitted by the second session management function is received includes operations that: the first session management function calls a first service of the second session management function and receives the fourth information from the second session management function; or, the first session management function calls a second service of the first session management function through a second session management function and receives the fourth information from the second session management function.

In this embodiment, the information, action or flow at node granularity or node level can be realized by at least one of the following manners:
Manner 1: The first session management function calls the first service of the second session management function and receives the fourth information from the second session management function. For example, the first session management function calls the first service and receives the fourth information from the second session management function, the first service may be at least one of the following: a service for transmitting offloading information, a service for transmitting offloading policy, a service for transmitting node level offloading information, a service for transmitting a node level offloading policy, a local offloading service, a service for transmitting offloading information subscription, a service for transmitting offloading policy subscription, a service for transmitting node level offloading information subscription, and a service for transmitting a node level offloading policy subscription.

The service for transmitting the offloading information can be an offloading information service (such as an offloading information request service, an offloading information response service, an offloading information notify service), or a VPLMN specific offloading information service (such as a VPLMN specific offloading information request service, a VPLMN specific offloading information response service, a VPLMN specific offloading information notify service), or other services for transmitting the offloading information, which are not limited in the embodiment.

The service for transmitting the offloading policy may be an offloading policy service (such as an offloading policy request service, an offloading policy response service, an offloading policy notify service), or a VPLMN specific offloading policy service (such as a VPLMN specific offloading policy request service, a VPLMN specific offloading policy response service, a VPLMN specific offloading policy notify service), or other services for transmitting the offloading policy, which are not limited in this embodiment.

The service for transmitting node level offloading information may be a node level offloading information service (such as a node level offloading information request service, a node level offloading information response service, a node level offloading information notify service), or a node level VPLMN specific offloading information service (such as a node level VPLMN specific offloading information request service, a node level VPLMN specific offloading information response service, a node level VPLMN specific offloading information notify service), or other services for transmitting node level offloading information, which are not limited in the embodiment.

The service for transmitting the node level offloading policy may be a node level offloading policy service (such as a node level offloading policy request service, a node level offloading policy response service, a node level offloading policy notify service), or a node level VPLMN specific offloading policy service (such as a node level VPLMN specific offloading policy request service, a node level VPLMN specific offloading policy response service, a node level VPLMN specific offloading policy notify service), or other services for transmitting the node level offloading policy, which are not limited in the embodiment.

The local offloading service may be a VPLMN local offloading service (such as a VPLMN local offloading service request service, a VPLMN local offloading service response service and a VPLMN local offloading service notify service) or a node level local offloading service (such as a node level local offloading request service, a node level local offloading response service, a node level local offloading notify service), or a node level VPLMN local offloading service (such as a node level VPLMN local offloading request service, a node level VPLMN local offloading response service, a node level VPLMN local offloading notify service), or other local offloading services, which are not limited in the embodiment.

The service for transmitting the offloading information subscription may be an offloading information subscription service (such as an offloading information subscription request service, an offloading information subscription response service, an offloading information subscription notify service), or a VPLMN specific offloading information subscription service (such as a VPLMN specific offloading information subscription request service, a VPLMN specific offloading information subscription response service, a VPLMN specific offloading information subscription notify service), or other services for transmitting offloading information subscriptions, which are not limited in the embodiment.

The service for transmitting the offloading policy subscription may be an offloading policy subscription service (such as an offloading policy subscription request service, an offloading policy subscription response service, an offloading policy subscription notify service), or a VPLMN specific offloading policy subscription service (such as a VPLMN specific offloading policy subscription request service, a VPLMN specific offloading policy subscription response service, a VPLMN specific offloading policy subscription notify service), or other services for transmitting the offloading policy subscriptions, which are not limited in this embodiment.

The service for transmitting node level offloading information subscription may be a node level offloading information subscription service (such as a node level offloading information subscription request service, a node level offloading information subscription response service, a node level offloading information subscription notify service), or a node level VPLMN specific offloading information subscription service (such as a node level VPLMN specific offloading information subscription request service, a node level VPLMN specific offloading information subscription response service, a node level VPLMN specific offloading information subscription notify service), or other services for transmitting node level offloading information subscriptions, which are not limited in this embodiment.

The service for transmitting node level offloading policy subscription may be a node level offloading policy subscription service (such as a node level offloading policy subscription request service, a node level offloading policy subscription response service, a node level offloading policy subscription notify service), or a node level VPLMN specific offloading policy subscription service (such as a node level VPLMN specific offloading policy subscription request service, a node level VPLMN specific offloading policy subscription response service, a node level VPLMN specific offloading policy subscription notify service), or other services for transmitting node level offloading policy subscriptions, which are not limited in this embodiment.

In the Manner 1, the first service is provided by the second session management function, and the first session management function is a caller or consumer of the first service.

Manner 2: The first session management function calls a second service of the first session management function through the second session management function, and receives fourth information from the second session management function. For example, the second session management function calls the second service and transmits the fourth information to the first session management function. The second service may be at least one of the following: a service for transmitting offloading information, a service for transmitting an offloading policy, a service for transmitting node level offloading information, a service for transmitting a node level offloading policy, a local offloading service, a service for transmitting an offloading information subscription, a service for transmitting an offloading policy subscription, a service for transmitting a node level offloading information subscription, or a service for transmitting a node level offloading policy subscription.

The service for transmitting the offloading information may be an offloading information service (such as an offloading information request service, an offloading information response service, an offloading information notify service), or a VPLMN specific offloading information service (such as a VPLMN specific offloading information request service, a VPLMN specific offloading information response service, a VPLMN specific offloading information notify service), or other services for transmitting the offloading information, which are not limited in the embodiment.

The service for transmitting the offloading policy may be an offloading policy service (such as an offloading policy request service, an offloading policy response service, an offloading policy notify service), or a VPLMN specific offloading policy service (such as a VPLMN specific offloading policy request service, a VPLMN specific offloading policy response service, a VPLMN specific offloading policy notify service), or other services for transmitting the offloading policy, which are not limited in the embodiment.

The service for transmitting node level offloading information may be a node level offloading information service (such as a node level offloading information request service, a node level offloading information response service, a node level offloading information notify service), or a node level VPLMN specific offloading information service (such as a node level VPLMN specific offloading information request service, a node level VPLMN specific offloading information response service, a node level VPLMN specific offloading information notify service), or other services for transmitting node level offloading information, which are not limited in the embodiment.

The service for transmitting the node level offloading policy may be a node level offloading policy service (such as a node level offloading policy request service, a node level offloading policy response service, a node level offloading policy notify service), or a node level VPLMN specific offloading policy service (such as a node level VPLMN specific offloading policy request service, a node level VPLMN specific offloading policy response service and a node level VPLMN specific offloading policy notify service), or other services for transmitting the node level offloading policy, which are not limited in the embodiment.

The local offloading service may be a VPLMN local offloading service (such as a VPLMN local offloading service request service, a VPLMN local offloading service response service and a VPLMN local offloading service notify service), or a node level local offloading service (such as a node level local offloading request service, a node level local offloading response service and a node level local offloading notify service), or a node level VPLMN local offloading service (such as a node level VPLMN local offloading request service, a node level VPLMN local offloading response service, a node level VPLMN local offloading notify service), or other local offloading services, which are not limited in the embodiment.

The service for transmitting the offloading information subscription may be an offloading information subscription service (such as an offloading information subscription request service, an offloading information subscription response service, an offloading information subscription notify service), or a VPLMN specific offloading information subscription service (such as a VPLMN specific offloading information subscription request service, a VPLMN specific offloading information subscription response service, a VPLMN specific offloading information subscription notify service), or other services for transmitting offloading information subscriptions, which are not limited in the embodiment.

The service for transmitting the offloading policy subscription may be an offloading policy subscription service (such as an offloading policy subscription request service, an offloading policy subscription response service, an offloading policy subscription notify service), or a VPLMN specific offloading policy subscription service (such as a VPLMN specific offloading policy subscription request service, a VPLMN specific offloading policy subscription response service, a VPLMN specific offloading policy subscription notify service), or other services for transmitting the offloading policy subscription, which are not limited in the embodiment.

The service for transmitting the node level offloading information subscription may be a node level offloading information subscription service (such as a node level offloading information subscription request service, a node level offloading information subscription response service, a node level offloading information subscription notify service), or a node level VPLMN specific offloading information subscription service (such as a node level VPLMN specific offloading information subscription request service, a node level VPLMN specific offloading information subscription response service, a node level VPLMN specific offloading information subscription notify service), or other services for transmitting node level offloading information subscription, which are not limited in the embodiment.

The service for transmitting the node level offloading policy subscription may be a node level offloading policy subscription service (such as a node level offloading policy subscription request service, a node level offloading policy subscription response service, a node level offloading policy subscription notify service), or a node level VPLMN specific offloading policy subscription service (such as a node level VPLMN specific offloading policy subscription request service, a node level VPLMN specific offloading policy subscription response service, a node level VPLMN specific offloading policy subscription notify service), or other services for transmitting node level offloading policy subscriptions, which are not limited in the embodiment.

In the Manner 2, the second service is provided by the first session management function, and the second session management function serves as the caller or consumer of the second service.

In this embodiment, the first session management function is located at a visited location and/or the second session management function is located at a home location. Alternatively, the first session management function is a V-SMF, and/or the second session management function is an H-SMF.

By adopting the technical scheme of this embodiment, taking the fourth information as information of node granularity or node level, and/or transmitting the fourth information through the node granularity or node level has the advantages that the second identifier is introduced into the fourth information to index the information related to offloading through the second identifier, that is, the transmission of the information related to offloading is replaced with the transmission of the second identifier so as to reduce the information to be transmitted and facilitate the management of information related to offloading. Considering the above characteristics, when the fourth information acts on more sessions, the above effect will be more obvious, because at this time, more sessions will transmit the second identifier instead of transmitting the information related to offloading. Therefore, taking the fourth information as the information of node granularity or node level, and/or transmitting the fourth information through the node granularity or node level, can make the fourth information act on more sessions, and maximize the above effects brought by the fourth information.

For the fourth information of node granularity or node level, although there is the possibility of transmitting it through session granularity or in a session, there are two problems in this way: (1) Because the same group of a V-SMF and a H-SMF, or the same group of a H-SMF and a H-PCF can serve multiple sessions, and these sessions lack the mechanism of mutual negotiation, this way of transmitting will either lead to repeated transmitting of the fourth information, or require introducing a mechanism of transmission by mutual negotiation between sessions, which increases the complexit of the solution. (2) At present, the mechanism of SMF is that the information transmitted through session granularity should be stored in the context of the session or in other forms according to session granularity. This way provides another way to store the information received through session granularity, which greatly increases the logical complexity of the SMF and is not conducive to the realization of functions.

Of course, there are theoretically ways to transmit the fourth information through other granularity, such as UE granularity, VN group granularity, or granularity coarser than node granularity, but the beneficial effects of these ways are not as obvious as the node granularity or node level disclosed in this disclosure. Since the same group of the V-SMF and the H-SMF, or the same group of the H-SMF and the H-PCF can serve sessions that may involve multiple UEs or multiple VN groups, transmitting or storing the fourth information through these granularities may still lead to repeated transmitting of information. If the transmission is performed through a granularity coarser than the node granularity or the node level, such as the network granularity, because the network may deploy multiple SMFs and PCFs, it cannot solve the problem that the fourth information transmitted by different SMFs or PCFs is different, which lacks flexibility.

In some alternative embodiments of the present disclosure, the method further includes an operation that sixth information is received from the second session management function. The sixth information includes at least one of a second identifier, information indicating an identifier of a PLMN, information indicating the identifier of the second session management function, information related to an offloading policy, and a first association relationship. The first association relationship is an association relationship between at least two of the second identifier, the information indicating the identifier of the PLMN, the information indicating the identifier of the second session management function, and the information related to the offloading policy.

As an implementation, the sixth information includes a second identifier, information indicating an identifier of a PLMN and/or information indicating an identifier of a second session management function, and information related to an offloading policy. After receiving the sixth information, the first session management function can know that the second identifier, information indicating the identifier of the PLMN and/or the information indicating the identifier of the second session management function and the information related to the offloading policy have a certain association relationship.

As another implementation, the sixth information is a first association relationship. The first association relationship indicates an association relationship between a second identifier, information indicating an identifier of a PLMN and/or information indicating an identifier of a second session management function, and information related to an offloading policy. After receiving the sixth information, the first session management function can know that the second identifier, the information indicating the identifier of the PLMN and/or the information indicating the identifier of the second session management function, and the information related to the offloading policy have a certain association relationship.

As yet another implementation, the sixth information includes a first association relationship and at least one of information indicating an identifier of a PLMN and information indicating an identifier of a second session management function. The first association relationship is an association relationship between a second identifier and information related to an offloading policy.

As still another implementation, the sixth information includes information indicating an identifier of a PLMN, and a first association relationship. The first association relationship is an association relationship between a second identifier, information of an identifier of a second session management function, and information related to an offloading policy.

The aboves are only examples, and in actual circumstances, they can be arranged according to different needs, so it will not be repeated here.

In the embodiment, the first session management function may search for the sixth information according to the fourth information, thereby acquiring the fifth information, that is, an association relationship is searched for, thereby acquiring information related to an offloading corresponding to the fourth information.

In some alternative embodiments, the sixth information is determined by the second session management function and transmitted to the first session management function; or,
the sixth information is determined by the first policy management function and forwarded to the first session management function through the second session management function; or,
a part of contents of the sixth information is determined by the first policy management function, another part of the contents of the sixth information is determined by the second session management function, and the second session management function transmits the content determined by the first policy management function and the content determined by the second session management function to the first session management function.

In some alternative embodiments, the fourth information is provided by the second session management function and transmitted to the first session management function; or,
the fourth information is provided by the first policy management function and transmitted to the first session management function through the second session management function; or,
a part of contents of the fourth information is provided by the first policy management function, and the other part of the contents of the fourth information is provided by the second session management function, and the second session management function transmits contents provided by the first policy management function and contents provided by the second session management function to the first session management function.

Based on the above-described embodiments, an embodiment of the present disclosure further provides a method of processing information, and the method is applied to a second session management function. FIG. 17 is a sixth flowchart of a method of processing information according to an embodiment of the present disclosure. As shown in FIG. 17, the method includes operation 1001.

Operation 1001: Fourth information is transmitted to the first session management function. The fourth information includes at least one of information of a second identifier, information indicating an identifier of a PLMN, an identifier of a PLMN, information indicating an identifier of the second session management function, and an identifier of the second session management function, or, the seventh information includes a second identifier, and the second identifier includes information indicating an identifier of a PLMN and/or information indicating an identifier of the second session management function.

In the embodiment of the present disclosure, by transmitting fourth information to the first session management function, the fourth information includes the information indicating the identifier of the PLMN and/or the information indicating the identifier of the second session management function, so that the first session management function can identify the PLMN or the second session management function associated with the offloading information through the fourth information (a same SMF can only be associated with one PLMN), thereby solving the problem that one offload ID corresponds to different offloading information in different PLMNs.

In the embodiment, the first session management function is located at a visited location, and/or the second session management function is located at a home location; and/or the first policy management function is located at a home location. Taking network elements in a 5G system/network as an example, the first session management function may be a visited SMF (V-SMF), the second session management function may be a Home-SMF (H-SMF), and the first policy management function may be a home PCF (H-PCF).

In the embodiment, the information indicating the identifier of the PLMN may be understood as the PLMN identifier itself. In other embodiments, the information indicating the identifier of the PLMN may also be understood as: a variation of the identifier of the PLMN. The variation of the identifier of the PLMN may be, for example, a part of the identifier of the PLMN (such as MNC, MCC, etc.). In other embodiments, the information indicating the identifier of the PLMN may also be understood as information having a certain association relationship with the identifier of the PLMN, for example, the information may be used to acquire the corresponding PLMN identifier through a series of processing/derivation/mapping operations.

In the embodiment, the identifier of the PLMN may be a PLMN ID.

In the embodiment, the information indicating the identifier of the second session management function may be understood as an SMF (H-SMF) identifier itself, which may be, for example, information of an address of the SMF, an SMF ID, an SMF set ID, an SMF group ID, an identifier of an equivalent SMF, or the like. In other alternative embodiments, the information indicating the identifier of the second session management function may also be understood as a variation of the SMF (H-SMF) identifier, for example, a part of contents of the SMF identifier. In other alternative embodiments, the information indicating the identifier of the second session management function may also be understood as information having a certain association relationship with the identifier of the SMF (H-SMF), for example, the information may be used to acquire the corresponding SMF identifier through a series of processing/derivation/mapping operations, and may be for example, one or more of the following information: information related to a location of the SMF, a DNN and/or S-NSSAI supported by the SMF, a service area of the SMF, one or more data network access identifiers (DNAIs) supported by/related to the SMF, addresses and/or identifiers of one or more UPFs related to the SMF, etc.

In the embodiment, the identifier of the second session management function may be a second SMF ID.

In various embodiments of the present disclosure, the information indicating the identifier of the PLMN and/or the information indicating the identifier of the second session management function may be understood as information indicating a HPLMN. For example, if the information indicating the identifier of the PLMN is the PLMN ID, the PLMN ID may be the HPLMN ID. For another example, if the information indicating the identifier of the second session management function is an SMF ID, the SMF ID may be an H-SMF ID.

In some alternative embodiments, all or part of the fourth information is used to represent fifth information, and the fifth information is information related to offloading.

In the embodiment, the information related to offloading may be understood as offloading policy information, VPLMN Specific Offloading Information, a VPLMN Specific Offloading Policy, and the like, or may be understood as a content related to an offloading policy, and may include, for example, at least one of a FQDN range, an IP range, a session AMBR for the local part of a DN, a charging policy. The AMBR is an Aggregate Maximum Bit Rate.

In the embodiment, the second identifier information may include a second identifier. The second identifier may be an identifier for representing offloading policy information, and the second identifier may be an offload identifier (Offload ID).

In the embodiment, the second identifier may include information indicating an identifier of a PLMN and/or information indicating an identifier of the second session management function. For example, a part of the second identifier indicates a PLMN ID and/or an identifier of the second SMF. It may be understood as that the part of the second identifier is the PLMN ID and/or the second SMF ID itself, or it may be understood as that the part of the second identifier may be a variation of the PLMN ID and/or the second SMF ID, or it may be understood as that the part of the second identifier may be information that can be used to acquire the corresponding PLMN ID and/or the second SMF ID after a series of processes/mappings/derivation.

In the embodiment, all or part of the fourth information is used to represent the fifth information, which may be understood as all or part of the fourth information is used to represent/indicate the fifth information, or the fifth information may be acquired from all or part of the fourth information according to a series of derivations/processes.

In some alternative embodiments, the fifth information includes first information. Here, the specific meaning and function of the first information can be referred to that in the foregoing embodiments, and will not be repeatedly described herein.

In some alternative embodiments of the present disclosure, the fourth information may be information at node granularity or node level, and/or the fourth information transmitted by the second session management function to the first session management function is transmitted through the node granularity or node level.

In the embodiment, the node granularity or node level refers to related network functions that have an effect on information, actions or processes at node granularity or node level, and the scope of effect of the information, actions or processes is not limited to a certain session or UE, but at the device level. For example, the fourth information is information at node granularity or node level, which may mean that, for a network function related to the fourth information (i.e. the first session management function and/or the second session management function), the scope of effect of the fourth information is not limited to a specific UE or a specific session, but is valid for all or part of sessions of the first session management function and/or all or part of sessions of the second session management function. For another example, the second session management function transmits the fourth information to the first session management function through the node granularity or the node level, which may mean that a action or process by which the first session management function receives the fourth information transmitted by the second session management function is not specific to a certain session or a certain UE. That is, the information (such as the fourth information) transmitted by this action or process is suitable for multiple sessions with the first session management function and/or the second session management function, or suitable for all or part of sessions with the first session management function and/or the second session management function. Alternatively, the information (such as the fourth information) transmitted by this action or process may be stored according to the node granularity or node level, such as, the fourth information stored by the first session management function, the fourth information can be applied in multiple sessions of the first session management function.

In some alternative embodiments, the operation that the fourth information is transmitted to the first session management function includes an operation that: the second session management function calls a first service of the second session management function through the first session management function, and transmits the fourth information to the first session management function; or, the second session management function calls a second service of the first session management function and transmits fourth information to the first session management function.

In the embodiment, the information, actions, or processes at node granularity or node level may be implemented by at least one of the following manners:
Manner 1: The first session management function calls the first service of the second session management function, and the second session management function transmits the fourth information to the first session management function. That is, the first session management function receives the fourth information from the second session management function. For example, the first session management function invokes a first service and receives fourth information from the second session management function. The first service may be at least one of the following: a service for transmitting offloading information, a service for transmitting offloading policy, a service for transmitting node level offloading information, a service for transmitting a node level offloading policy, a local offloading service, a service for transmitting offloading information subscription, a service for transmitting offloading policy subscription, a service for transmitting node level offloading information subscription, and a service for transmitting a node level offloading policy subscription.

The service for transmitting the offloading information can be an Offloading Information service (such as an offloading information request service, an offloading information response service, an offloading information notify service), or a VPLMN specific offloading information service (such as a VPLMN specific offloading information request service, a VPLMN specific offloading information response service, a VPLMN specific offloading information notify service), or other services for transmitting the offloading information, which are not limited in the embodiment.

The service for transmitting the offloading policy may be an offloading policy service (such as an offloading policy request service, an offloading policy response service, an offloading policy notify service), or a VPLMN specific offloading policy service (such as a VPLMN specific offloading policy request service, a VPLMN specific offloading policy response service, a VPLMN specific offloading policy notify service), or other services for transmitting the offloading policy, which are not limited in this embodiment..

The service for transmitting node level offloading information can be a node level offloading information service (such as a node level offloading information request service, a node level offloading information response service, a node level offloading information notify service), or a node level VPLMN specific offloading information service (such as a node level VPLMN specific offloading information request service, a node level VPLMN specific offloading information response service, a node level VPLMN specific offloading information notify service), or other services for transmitting node level offloading information, which are not limited in the embodiment.

The service for transmitting the node level offloading policy may be a node level offloading policy service (such as a node level offloading policy request service, a node level offloading policy response service, a node level offloading policy notify service), or a node level VPLMN specific offloading policy service (such as a node level VPLMN specific offloading policy request service, a node level VPLMN specific offloading policy response service, a node level VPLMN specific offloading policy notify service), or other services for transmitting the node level offloading policy, which are not limited in the embodiment.

The local offloading service may be a VPLMN local offloading service (such as a VPLMN local offloading service request service, a VPLMN local offloading service response service and a VPLMN local offloading service notify service) or a node level local offloading service (such as a node level local offloading request service, a node level local offloading response service and a node level local offloading notify service), or a node level VPLMN local offloading service (such as a node level VPLMN local offloading request service, a node level VPLMN local offloading response service, a node level VPLMN local offloading notify service), or other local offloading services, which are not limited in the embodiment.

The service for transmitting the offloading information subscription may be an offloading information subscription service (such as an offloading information subscription request service, an offloading information subscription response service, an offloading information subscription notify service), or a VPLMN specific offloading information subscription service (such as a VPLMN specific offloading information subscription request service, a VPLMN specific offloading information subscription response service, a VPLMN specific offloading information subscription notify service), or other services for transmitting offloading information subscriptions, which are not limited in the embodiment.

The service for transmitting the offloading policy subscription may be an offloading policy subscription service (such as an offloading policy subscription request service, an offloading policy subscription response service, an offloading policy subscription notify service), or a VPLMN specific offloading policy subscription service (such as a VPLMN specific offloading policy subscription request service, a VPLMN specific offloading policy subscription response service, a VPLMN specific offloading policy subscription notify service), or other services for transmitting the offloading policy subscriptions, which are not limited in this embodiment.

The service for transmitting the node level offloading information subscription may be a node level offloading information subscription service (such as a node level offloading information subscription request service, a node level offloading information subscription response service, a node level offloading information subscription notify service), or a node level VPLMN specific offloading information subscription service (such as a node level VPLMN specific offloading information subscription request service, a node level VPLMN specific offloading information subscription response service, a node level VPLMN specific offloading information subscription notify service), or other services for transmitting node level offloading information subscriptions, which are not limited in this embodiment.

The service for transmitting the node level offloading policy subscription may be a node level offloading policy subscription service (such as a node level offloading policy subscription service (such as a node level offloading policy subscription request service, a node level offloading policy subscription response service, a node level offloading policy subscription notify service), or a node level VPLMN specific offloading policy subscription service (such as a node level VPLMN specific offloading policy subscription request service, a node level VPLMN specific offloading policy subscription response service, a node level VPLMN specific offloading policy subscription notify service), or other services for transmitting node level offloading policy subscriptions, which are not limited in this embodiment.

In the Manner 1, the first service is provided by the second session management function, the first session management function is a caller or consumer of the first service.

Manner 2: The second session management function calls a second service of the first session management function and transmits fourth information to the first session management function. That is, the first session management function receives the fourth information from the second session management function. For example, the second session management function calls the second service to transmit the fourth information to the first session management function. The second service may be at least one of the following: a service for transmitting offloading information, a service for transmitting an offloading policy, a service for transmitting node level offloading information, a service for transmitting a node level offloading policy, a local offloading service, a service for transmitting an offloading information subscription, a service for transmitting an offloading policy subscription, a service for transmitting a node level offloading information subscription, or a service for transmitting a node level offloading policy subscription.

The service for transmitting the offloading information may be an offloading information service (such as an offloading information request service, an offloading information response service, an offloading information notify service), or a VPLMN specific offloading information service (such as a VPLMN specific offloading information request service, a VPLMN specific offloading information response service, a VPLMN specific offloading information notify service), or other services for transmitting the offloading information, which are not limited in the embodiment.

The service for transmitting the offloading policy may be an offloading policy service (such as an offloading policy request service, an offloading policy response service, an offloading policy notify service), or a VPLMN specific offloading policy service (such as a VPLMN specific offloading policy request service, a VPLMN specific offloading policy response service, a VPLMN specific offloading policy notify service), or other services for transmitting the offloading policy, which are not limited in the embodiment.

The service for transmitting the node level offloading information may be a node level offloading information service (such as a node level offloading information request service, a node level offloading information response service, a node level offloading information notify service), or a node level VPLMN specific offloading information service (such as a node level VPLMN specific offloading information request service, a node level VPLMN specific offloading information response service, a node level VPLMN specific offloading information notify service), or other services for transmitting node level offloading information, which are not limited in the embodiment.

The service for transmitting the node level offloading policy may be a node level offloading policy service (such as a node level offloading policy request service, a node level offloading policy response service, a node level offloading policy notify service), or a node level VPLMN specific offloading policy service (such as a node level VPLMN specific offloading policy request service, a node level VPLMN specific offloading policy response service and a node level VPLMN specific offloading policy notify service), or other services for transmitting the node level offloading policy, which are not limited in the embodiment.

The local offloading service may be a VPLMN local offloading service (such as a VPLMN local offloading service request service, a VPLMN local offloading service response service and a VPLMN local offloading service notify service), or a node level local offloading service (such as a node level local offloading request service, a node level local offloading response service and a node level local offloading notify service), or a node level VPLMN local offloading service (such as a node level VPLMN local offloading request service, a node level VPLMN local offloading response service, a node level VPLMN local offloading notify service), or other local offloading services, which are not limited in the embodiment.

The service for transmitting the offloading information subscription may be an offloading information subscription service (such as an offloading information subscription request service, an offloading information subscription response service, an offloading information subscription notify service), or a VPLMN specific offloading information subscription service (such as a VPLMN specific offloading information subscription request service, a VPLMN specific offloading information subscription response service, a VPLMN specific offloading information subscription notify service), or other services for transmitting offloading information subscriptions, which are not limited in the embodiment.

The service for transmitting the offloading policy subscription may be an offloading policy subscription service (such as an offloading policy subscription request service, an offloading policy subscription response service, an offloading policy subscription notify service), or a VPLMN specific offloading policy subscription service (such as a VPLMN specific offloading policy subscription request service, a VPLMN specific offloading policy subscription response service, a VPLMN specific offloading policy subscription notify service), or other services for transmitting the offloading policy subscription, which are not limited in the embodiment.

The service for transmitting the node level offloading information subscription may be a node level offloading information subscription service (such as a node level offloading information subscription request service, a node level offloading information subscription response service, a node level offloading information subscription notify service), or a node level VPLMN specific offloading information subscription service (such as a node level VPLMN specific offloading information subscription request service, a node level VPLMN specific offloading information subscription response service, a node level VPLMN specific offloading information subscription notify service), or other services for transmitting node level offloading information subscription, which are not limited in the embodiment.

The service for transmitting the node level offloading policy subscription may be a node level offloading policy subscription service (such as a node level offloading policy subscription request service, a node level offloading policy subscription response service, a node level offloading policy subscription notify service), or a node level VPLMN specific offloading policy subscription service (such as a node level VPLMN specific offloading policy subscription request service, a node level VPLMN specific offloading policy subscription response service, a node level VPLMN specific offloading policy subscription notify service), or other services for transmitting node level offloading policy subscriptions, which are not limited in the embodiment.

In Manner 2, the second service is provided by the first session management function, and the second session management function serves as the caller or consumer of the second service.

In the embodiment, the first session management function is located at a visited location and/or the second session management function is located at a home location. Alternatively, the first session management function is a V-SMF, and/or the second session management function is an H-SMF.

In some alternative embodiments of the present disclosure, the method further includes an operation that sixth information is transmitted to the first session management function. The sixth information includes at least one of a second identifier, information indicating an identifier of a PLMN, information indicating the identifier of the second session management function, information related to an offloading policy, and a first association relationship. The first association relationship is an association relationship between at least two of the second identifier, the information indicating the identifier of the PLMN, the information indicating the identifier of the second session management function, and the information related to the offloading policy.

In an implementation, the sixth information includes a second identifier, information indicating an identifier of a PLMN and/or information indicating an identifier of a second session management function, and information related to an offloading policy. After receiving the sixth information, the first session management function can know that the second identifier, information indicating the identifier of the PLMN and/or the information indicating the identifier of the second session management function, and the information related to the offloading policy have a certain association relationship.

In another implementation, the sixth information is a first association relationship. The first association relationship indicates an association relationship between a second identifier, information indicating an identifier of a PLMN and/or information indicating an identifier of a second session management function, and information related to an offloading policy. After receiving the sixth information, the first session management function can know that the second identifier, the information indicating the identifier of the PLMN and/or the information indicating the identifier of the second session management function, and the information related to the offloading policy have a certain association relationship.

As yet another implementation, the sixth information includes a first association relationship and at least one of information indicating an identifier of a PLMN and information indicating an identifier of a second session management function. The first association relationship is an association relationship between a second identifier and information related to an offloading policy.

As still another implementation, the sixth information includes information indicating an identifier of a PLMN, and a first association relationship. The first association relationship is an association relationship between a second identifier, information of an identifier of a second session management function, and information related to an offloading policy.

The above are only examples, and in actual circumstances, they can be arranged according to different needs, so it will not be repeated here.

In some alternative embodiments, the sixth information is determined by the second session management function and transmitted to the first session management function; or,
the sixth information is determined by the first policy management function and forwarded to the first session management function through the second session management function; or,
a part of contents of the sixth information is determined by the first policy management function, another part of the contents of the sixth information is determined by the second session management function, and the second session management function transmits the content determined by the first policy management function and the content determined by the second session management function to the first session management function.

In some alternative embodiments, the fourth information is provided by the second session management function and transmitted to the first session management function; or,
the fourth information is provided by the first policy management function and transmitted to the first session management function through the second session management function; or,
a part of contents of the fourth information is provided by the first policy management function, and the other part of the contents of the fourth information is provided by the second session management function, and the second session management function transmits contents provided by the first policy management function and contents provided by the second session management function to the first session management function.

In some alternative embodiments of the present disclosure, the fourth information or a part of the contents of the fourth information may be information at node granularity or node level, and/or the fourth information or a part of the contents of the fourth information is provided by the first policy management function and is provided by the first policy management function through the node granularity or node level.

In the embodiment, the node granularity or node level refers to related network functions that have effect on information, actions or processes at node granularity or node level, and the scope of effect of the information, actions or processes is not limited to a certain session or UE, but at the device level. For example, the fourth information or a part of the contents of the fourth information is information at node granularity or node level, which may mean that, for a network function related to the fourth information or a part of the contents of the fourth information (i.e. the first session management function and/or the second session management function), the scope of effect of the fourth information or a part of the contents of the fourth information is not limited to a specific UE or a specific session, but is valid for all or part of sessions of the second session management function, and/or all or part of sessions of the first policy control function, and/or all or part of sessions of the first session management function. For another example, the fourth information or a part of the contents of the fourth information is provided by the first policy management function and is provided by the first policy management function through the node granularity or node level, which may mean that an action or process by which the second session management function receives the fourth information or a part of the contents of the fourth information transmitted by the first policy control management function is not specific to a certain session or a certain UE. That is, the information (such as the fourth information or a part of the contents of the fourth information) transmitted by this action or process is suitable for multiple sessions with the first session management function and/or the second policy control function, or suitable for all or part of sessions with the second session management function and/or the first policy control function and/or the third session management function. Alternatively, the information (such as the fourth information or a part of the contents of the fourth information) transmitted by this action or process may be stored according to the node granularity or node level, such as, the fourth information or a part of the contents of the fourth information stored by the second session management function and/or the first session management function, the fourth information or a part of the contents of the fourth information can be applied in multiple sessions of the second session management function and/or the first session management function.

In some alternative embodiments, the method further includes an operation that: the second session management function calls a third service of the first policy control function, receives the fourth information or a part of contents of the fourth information from the first policy control function; or, the second session management function calls a fourth service of the second session management function through the first policy control function, and receives the fourth information or a part of the contents of the fourth information from the first policy control function.

In the embodiment, the information, actions, or processes at node granularity or node level may be implemented by at least one of the following manners:
Manner 1: The second session management function calls the third service of the first policy control function, and receives fourth information or a part of the contents of the fourth information from the first policy control function. For example, the second session management function calls a third service to receive fourth information or a part of the contents of the fourth information from the first policy control function. The third service may be at least one of a service for transmitting offloading information, a service for transmitting an offloading policy, a service for transmitting node level offloading information, a service for transmitting a node level offloading policy, a local offloading service, a service for transmitting an offloading information subscription, a service for transmitting an offloading policy subscription, a service for transmitting a node level offloading information subscription, and a service for transmitting a node level offloading policy subscription.

The service for transmitting the offloading information may be an offloading information service (such as, an offloading information request service, an offloading information response service, an offloading information notify service), a VPLMN specific offloading information service (such as, a VPLMN specific offloading information request service, a VPLMN specific offloading information response service, a VPLMN specific offloading information notify service), or other services for transmitting offloading information, which are not limited in the embodiment.

The service for transmitting the offloading policy may be an offloading policy service (such as an offloading policy request service, an offloading policy response service, an offloading policy notify service), or a VPLMN specific offloading policy service (such as a VPLMN specific offloading policy request service, a VPLMN specific offloading policy response service, a VPLMN specific offloading policy notify service), or other services for transmitting the offloading policy, which are not limited in this embodiment.

The service for transmitting the node level offloading information may be a node level offloading information service (such as a node level offloading information request service, a node level offloading information response service, a node level offloading information notify service), or a node level VPLMN specific offloading information service (such as a node level VPLMN specific offloading information request service, a node level VPLMN specific offloading information response service, a node level VPLMN specific offloading information notify service), or other services for transmitting node level offloading information, which are not limited in the embodiment.

The service for transmitting the node level offloading policy may be a node level offloading policy service (such as a node level offloading policy request service, a node level offloading policy response service, a node level offloading policy notify service), or a node level VPLMN specific offloading policy service (such as a node level VPLMN specific offloading policy request service, a node level VPLMN specific offloading policy response service, a node level VPLMN specific offloading policy notify service), or other services for transmitting the node level offloading policy, which are not limited in the embodiment.

The local offloading service may be a VPLMN local offloading service (such as a VPLMN local offloading service request service, a VPLMN local offloading service response service and a VPLMN local offloading service notify service) or a node level local offloading service (such as a node level local offloading request service, a node level local offloading response service and a node level local offloading notify service), or a node level VPLMN local offloading service (such as a node level VPLMN local offloading request service, a node level VPLMN local offloading response service, a node level VPLMN local offloading notify service), or other local offloading services, which are not limited in the embodiment.

The service for transmitting the offloading information subscription may be an offloading information subscription service (such as an offloading information subscription request service, an offloading information subscription response service, an offloading information subscription notify service), or a VPLMN specific offloading information subscription service (such as a VPLMN specific offloading information subscription request service, a VPLMN specific offloading information subscription response service, a VPLMN specific offloading information subscription notify service), or other services for transmitting offloading information subscriptions, which are not limited in the embodiment.

The service for transmitting the offloading policy subscription may be an offloading policy subscription service (such as an offloading policy subscription request service, an offloading policy subscription response service, an offloading policy subscription notify service), or a VPLMN specific offloading policy subscription service (such as a VPLMN specific offloading policy subscription request service, a VPLMN specific offloading policy subscription response service, a VPLMN specific offloading policy subscription notify service), or other services for transmitting the offloading policy subscriptions, which are not limited in this embodiment.

The service for transmitting the node level offloading information subscription may be a node level offloading information subscription service (such as a node level offloading information subscription request service, a node level offloading information subscription response service, a node level offloading information subscription notify service), or a node level VPLMN specific offloading information subscription service (such as a node level VPLMN specific offloading information subscription request service, a node level VPLMN specific offloading information subscription response service, a node level VPLMN specific offloading information subscription notify service), or other services for transmitting node level offloading information subscriptions, which are not limited in this embodiment.

The service for transmitting the node level offloading policy subscription may be a node level offloading policy subscription service (such as a node level offloading policy subscription request service, a node level offloading policy subscription response service, a node level offloading policy subscription notify service), or a node level VPLMN specific offloading policy subscription service (such as a node level VPLMN specific offloading policy subscription request service, a node level VPLMN specific offloading policy subscription response service, a node level VPLMN specific offloading policy subscription notify service), or other services for transmitting node level offloading policy subscriptions, which are not limited in this embodiment.

In the Manner 1, the third service is provided by the first policy control function, and the second session management function is a caller or consumer of the third service.

Manner 2: The second session management function calls a fourth service of the second session management function through the first policy control function, and receives the fourth information or a part of the contents of the fourth information from the first policy control function. For example, the first policy control function calls a fourth service to transmit the fourth information or a part of the contents of the fourth information to the second session management function. The fourth service may be at least one of a service for transmitting offloading information, a service for transmitting an offloading policy, a service for transmitting node level offloading information, a service for transmitting a node level offloading policy, a local offloading service, a service for transmitting an offloading information subscription, a service for transmitting an offloading policy subscription, a service for transmitting a node level offloading information subscription, and a service for transmitting a node level offloading policy subscription.

The service for transmitting the offloading information may be an offloading information service (such as, an offloading information request service, an offloading information response service, an offloading information notify service), a VPLMN specific offloading information service (such as, a VPLMN specific offloading information request service, a VPLMN specific offloading information response service, a VPLMN specific offloading information notify service), or other services for transmitting offloading information, which are not limited in the embodiment.

The service for transmitting the offloading policy may be an offloading policy service (such as an offloading policy request service, an offloading policy response service, an offloading policy notify service), or a VPLMN specific offloading policy service (such as a VPLMN specific offloading policy request service, a VPLMN specific offloading policy response service, a VPLMN specific offloading policy notify service), or other services for transmitting the offloading policy, which are not limited in this embodiment.

The service for transmitting the node level offloading information may be may be a node level offloading information service (such as a node level offloading information request service, a node level offloading information response service, a node level offloading information notify service), or a node level VPLMN specific offloading information service (such as a node level VPLMN specific offloading information request service, a node level VPLMN specific offloading information response service, a node level VPLMN specific offloading information notify service), or other services for transmitting node level offloading information, which are not limited in the embodiment.

The service for transmitting the node level offloading policy may be a node level offloading policy service (such as a node level offloading policy request service, a node level offloading policy response service, a node level offloading policy notify service), or a node level VPLMN specific offloading policy service (such as a node level VPLMN specific offloading policy request service, a node level VPLMN specific offloading policy response service, a node level VPLMN specific offloading policy notify service), or other services for transmitting the node level offloading policy, which are not limited in the embodiment.

The local offloading service may be a VPLMN local offloading service (such as a VPLMN local offloading service request service, a VPLMN local offloading service response service and a VPLMN local offloading service notify service) or a node level local offloading service (such as a node level local offloading request service, a node level local offloading response service and a node level local offloading notify service), or a node level VPLMN local offloading service (such as a node level VPLMN local offloading request service, a node level VPLMN local offloading response service, a node level VPLMN local offloading notify service), or other local offloading services, which are not limited in the embodiment.

The service for transmitting the offloading information subscription may be an offloading information subscription service (such as an offloading information subscription request service, an offloading information subscription response service, an offloading information subscription notify service), or a VPLMN specific offloading information subscription service (such as a VPLMN specific offloading information subscription request service, a VPLMN specific offloading information subscription response service, a VPLMN specific offloading information subscription notify service), or other services for transmitting offloading information subscriptions, which are not limited in the embodiment.

The service for transmitting the offloading policy subscription may be an offloading policy subscription service (such as an offloading policy subscription request service, an offloading policy subscription response service, an offloading policy subscription notify service), or a VPLMN specific offloading policy subscription service (such as a VPLMN specific offloading policy subscription request service, a VPLMN specific offloading policy subscription response service, a VPLMN specific offloading policy subscription notify service), or other services for transmitting the offloading policy subscriptions, which are not limited in this embodiment.

The service for transmitting the node level offloading information subscription may be a node level offloading information subscription service (such as a node level offloading information subscription request service, a node level offloading information subscription response service, a node level offloading information subscription notify service), or a node level VPLMN specific offloading information subscription service (such as a node level VPLMN specific offloading information subscription request service, a node level VPLMN specific offloading information subscription response service, a node level VPLMN specific offloading information subscription notify service), or other services for transmitting node level offloading information subscriptions, which are not limited in this embodiment.

The service for transmitting the node level offloading policy subscription may be a node level offloading policy subscription service (such as a node level offloading policy subscription request service, a node level offloading policy subscription response service, a node level offloading policy subscription notify service), or a node level VPLMN specific offloading policy subscription service (such as a node level VPLMN specific offloading policy subscription request service, a node level VPLMN specific offloading policy subscription response service, a node level VPLMN specific offloading policy subscription notify service), or other services for transmitting node level offloading policy subscriptions, which are not limited in this embodiment.

In the Manner 2, the fourth service is provided by the second session management function, and the first policy control function is a caller or consumer of the fourth service.

In the embodiment, the second session management function and/or the first policy control function are located at a home location. Alternatively, the second session management function is an H-SMF, and/or the first policy control function is a H-PCF.

An embodiment of the present disclosure further provides a method of processing information. The method is applied to a third network function: the method includes an operation that: the third network function receives seventh information from a fourth network function. The seventh information includes at least one of the followings: information of a second identifier, information indicating an identifier of a PLMN, an identifier of a PLMN, information indicating an identifier of a second session management function, and an identifier of a second session management function. The seventh information is information at node granularity or node level, and/or the third network function receives the seventh information from the fourth network function through node granularity or node level.

In one implementation, the third network function and/or the fourth network function is a session management function. Optionally, the third network function is located at a visited location, and/or the fourth network function is located at a home location.

In this embodiment, the third network function may be a visited SMF, for example, denoted as a V-SMF. The fourth network function may be a home SMF, for example, denoted as an H-SMF.

In the embodiment, the V-SMF receives the seventh information from the H-SMF, and the seventh information includes at least one of information of a second identifier, information indicating an identifier of a PLMN, an identifier of a PLMN, information indicating an identifier of a second session management function, and an identifier of a second session management function.

Here, the information indicating the identifier of the PLMN can be understood as a PLMN identifier itself. In other embodiments, the information indicating the identifier of the PLMN may also be understood as: a variation of the identifier of the PLMN. The variation of the identifier of the PLMN may be, for example, a part of contents of the identifier of the PLMN (such as MNC, MCC, etc.). In other embodiments, the information indicating the identifier of the PLMN may also be understood as information having a certain association relationship with the identifier of the PLMN, for example, the information may be used to acquire the corresponding PLMN identifier through a series of processing/derivation/mapping operations.

In the embodiment, the identifier of the PLMN may be a PLMN ID.

In the embodiment, the information indicating the identifier of the second session management function may be understood as an SMF (H-SMF) identifier itself, which may be, for example, information of an address of the SMF, an SMF ID, an SMF set ID, an SMF group ID, an identifier of an equivalent SMF, or the like. In other alternative embodiments, the information indicating the identifier of the second session management function may also be understood as a variation of the SMF (H-SMF) identifier, for example, a part of contents of the SMF identifier. In other alternative embodiments, the information indicating the identifier of the second session management function may also be understood as information having a certain association relationship with the SMF (H-SMF) identifier, for example, the information may be used to acquire the corresponding SMF identifier through a series of processing/derivation/mapping operations, and may be for example, one or more of the following information: information related to the location of the SMF, a DNN and/or S-NSSAI supported by the SMF, a service area of the SMF, one or more data network access identifiers (DNAIs) supported by/related to the SMF, addresses and/or identifiers of one or more UPFs related to the SMF, etc.

In the embodiment, the identifier of the second session management function may be a second SMF ID, such as an H-SMF ID.

In the embodiment, the information of the second identifier may include a second identifier. The second identifier may be an identifier for representing offloading policy information, and the second identifier may be an offload identifier (Offload ID).

In the embodiment, when the third network device is a V-SMF and the fourth network device is an H-SMF, all or part of the received seventh information may be used to indicate information related to offloading.

In the embodiment, the information related to offloading may be understood as offloading policy information, VPLMN specific offloading information, a VPLMN specific offloading policy, etc., or may be understood as contents related to an offloading policy, and may include, for example, at least one of a FQDN range, an IP range, a session AMBR for the local part of a DN, a charging policy.

As another embodiment, the third network function is a session management function, and/or the fourth network function is a policy control function. Optionally, the third network function and/or the fourth network function are located at a home location.

In this embodiment, the third network function may be a home SMF, for example, denoted as H-SMF. The fourth network function may be a home PCF, for example, denoted as H-PCF.

In the embodiment, the specific content of the seventh information received by the H-SMF from the H-PCF may refer to that in the above embodiments, and will not be repeatedly described here.

In the embodiment, the seventh information may be information at node granularity or node level. The node granularity or node level refers to related network functions that have an effect on information, actions, or processes at node granularity or node level, and the scope of effect of the information, actions, or processes is not limited to a certain session or UE, but is at the device level. For example, the seventh information is the information at node granularity or node level, which may mean that, for the network function (i.e., the first network function and/or the second network function) affected by the seventh information, the scope of effect of the seventh information is not limited to a specific UE or a specific session, but is valid for all or part of the session of the first network function, and/or all or part of the session of the second network function.

In some alternative embodiments, the operation that the third network function receives the seventh information from the fourth network function includes an operation that: the third network function calls a fifth service of the fourth network function, and receives the seventh information from the fourth network function; or, the third network function calls a sixth service of the third network function through the fourth network function, and receives the seventh information from the fourth network function.

Optionally, the fifth service and/or the sixth service is at least one of: a service for transmitting offloading information, a service for transmitting an offloading policy, a service for transmitting node level offloading information, a service for transmitting a node level offloading policy, a VPLMN specific offloading information service, a VPLMN Specific Offloading Policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

A specific description for the fifth service and/or the sixth service in the embodiment may refer to the specific description for the first service and/or the second service and/or the third service and/or the fourth service in the foregoing embodiments, and will not be repeatedly described here.

A detailed description of the technical solution of the embodiment may refer to the detailed description of the embodiment described in FIGS. 16 and 17, and will not be repeatedly described here.

An embodiment of the present disclosure further provides a method of processing information. The method is applied to a fourth network function, the method includes an operation that: the fourth network function transmits seventh information to a third network function. The seventh information includes at least one of the following: information of a second identifier, information indicating an identifier of a PLMN, an identifier of a PLMN, information indicating an identifier of a second session management function, and an identifier of a second session management function. The seventh information is information at node granularity or node level, and/or the fourth network function transmits the seventh information to the third network function through node granularity or node level.

In one implementation, the third network function and/or the fourth network function is a session management function. Optionally, the third network function is located at a visited location, and/or the fourth network function is located at a home location.

In this embodiment, the third network function may be a visited SMF, for example, denoted as a V-SMF. The fourth network function may be a home SMF, for example, denoted as an H-SMF.

In the embodiment, the V-SMF receives the seventh information from the H-SMF, and the seventh information includes at least one of: information of a second identifier, information indicating an identifier of a PLMN, an identifier of a PLMN, information indicating an identifier of a second session management function, and an identifier of a second session management function.

Here, the information indicating the identifier of the PLMN can be understood as a PLMN identifier itself. In other embodiments, the information indicating the identifier of the PLMN may also be understood as: a variation of the identifier of the PLMN. The variation of the identifier of the PLMN may be, for example, a part of contents of the identifier of the PLMN (such as MNC, MCC, etc.). In other embodiments, the information indicating the identifier of the PLMN may also be understood as information having a certain association relationship with the identifier of the PLMN, for example, the information may be used to acquire the corresponding PLMN identifier through a series of processing/derivation/mapping operations.

In the embodiment, the identifier of the PLMN may be a PLMN ID.

In the embodiment, the information indicating the identifier of the second session management function may be understood as an SMF (H-SMF) identifier itself, which may be, for example, information of an address of the SMF, an SMF ID, an SMF set ID, an SMF group ID, an identifier of an equivalent SMF, or the like. In other alternative embodiments, the information indicating the identifier of the second session management function may also be understood as a variation of the SMF (H-SMF) identifier, for example, a part of contents of the SMF identifier. In other alternative embodiments, the information indicating the identifier of the second session management function may also be understood as information having a certain association relationship with the SMF (H-SMF) identifier, for example, the information may be used to acquire the corresponding SMF identifier through a series of processing/derivation/mapping operations, and may be for example, one or more of the following information: information related to the location of the SMF, a DNN and/or S-NSSAI supported by the SMF, a service area of the SMF, one or more data network access identifiers (DNAIs) supported by/related to the SMF, addresses and/or identifiers of one or more UPFs related to the SMF, etc..

In the embodiment, the identifier of the second session management function may be a second SMF ID, such as an H-SMF ID.

In the embodiment, the information of the second identifier may include a second identifier. The second identifier may be an identifier for representing offloading policy information, and the second identifier may be an offload identifier (Offload ID).

In the embodiment, when the third network device is a V-SMF and the fourth network device is an H-SMF, all or part of the seventh information may be used to indicate information related to offloading.

In the embodiment, the information related to offloading may be understood as offloading policy information, VPLMN specific offloading information, a VPLMN specific offloading policy, etc., or may be understood as contents related to an offloading policy, and may include, for example, at least one of a FQDN range, an IP range, a session AMBR for the local part of a DN, a charging policy.

As another embodiment, the third network function is a session management function, and/or the fourth network function is a policy control function. Optionally, the third network function and/or the fourth network function are located at a home location.

In this embodiment, the third network function may be a home SMF, for example, denoted as H-SMF. The fourth network function may be a home PCF, for example, denoted as H-PCF.

In the embodiment, the specific content of the seventh information transmitted by the H-PCF to the H-SMF may refer to that in the above embodiments, and will not be repeatedly described here..

In some alternative embodiments, the operation that the fourth network function transmits the seventh information to the third network function, includes an operation that: the fourth network function calls a fifth service of the fourth network function through the third network function, and transmits the seventh information to the third network function; or, the fourth network function calls a sixth service of the third network function and transmits the seventh information to the third network function.

Optionally, the fifth service and/or the sixth service is at least one of: a service for transmitting offloading information, a service for transmitting an offloading policy, a service for transmitting node level offloading information, a service for transmitting a node level offloading policy, a VPLMN specific offloading information service, a VPLMN Specific Offloading Policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription..

A specific description for the fifth service and/or the sixth service in the embodiment may refer to the specific description for the first service and/or the second service and/or the third service and/or the fourth service in the foregoing embodiments, and will not be repeatedly described here.

A detailed description of the technical solution of the embodiment may refer to the detailed description of the embodiment described in FIGS. 16 and 17, and will not be repeatedly described here.

Hereinafter, a method of processing information according to an embodiment of the present disclosure will be described in detail with reference to specific examples.

### Example 5

FIG. 18 is a fifth schematic diagram of an interaction procedure of a method of processing information according to an embodiment of the present disclosure. As shown in FIG. 18, the method includes the following operations.

Operation 1101: An H-PCF determines an offloading policy and transmits it to an H-SMF.

Here, the offloading policy may be a VPLMN Specific Offloading Policy.

Here, this operation is an optional operation, and the H-SMF may also determine the offloading policy.

Operation 1102: the H-SMF determines offloading information. The offloading information may include at least one of an offload ID, a PLMN ID, a SMF ID, information related to an offloading policy, and a first association relationship. The first association relationship is an association relationship between at least two of the offload ID, the PLMN ID and/or the SMF ID, and the information related to an offloading policy.

The PLMN ID and/or the SMF ID correspond to the current SMF (i.e. H-SMF).

The first association relationship may include one or more association relationships between the offload ID, the PLMN ID and/or the SMF ID, and the information related to an offloading policy.

In some alternative embodiments, the PLMN ID and/or the SMF ID may be included in the offload ID.

In this example, the offloading information may be equivalent to the sixth information in the above embodiments. The offload ID may be equivalent to the second identifier in the above-described embodiments.

Operation 1103: The H-SMF transmits the offloading information to the V-SMF.

It should be noted that operations 1101 to 1103 may be executed in a procedure at node granularity or session granularity. Node granularity means that for this set of the H-PCF, the H-SMF, and the V-SMFs, the procedure is not limited to a certain session or UE, but is device-level. Or, the offloading policy can also be transmitted through a process at session granularity. Here, only the offloading policy effects in node granularity, that is, regardless of the process through which the offloading policy is issued, the offloading policy is valid for a plurality of (which may be partial or all) UEs and sessions served by the V-SMF.

The operations are executed in a procedure at node granularity, which refers to that the scope of effect of an action in the procedure and/or the information transmitted or processed in the procedure is not limited to a certain session or UE, but is at the device level. The above operations 1101-1103 are executed at node granularity or node level may specifically refer to the following:

In operation 1101, the H-PCF transmits the offloading policy to the H-SMF through a service not limited to a specific session or a specific UE. For example, the H-SMF calls a third service of the H-PCF and receives the offloading policy from the H-PCF. Alternatively, a fourth service of the H-SMF is called through the H-PCF, and the offloading policy is transmitted to the H-SMF. The third service or the fourth service is a service at node granularity or node level, which may be for example, one or more of the following services: a service for transmitting offloading information, a service for transmitting an offloading policy, a service for transmitting node level offloading information, a service for transmitting a node level offloading policy, and a local offloading service. The specific contents or meanings of these services are described in detail in the embodiments described in FIG. 16 or FIG. 17, and will not be repeatedly described here.

For operation 1102, the offloading information determined by the H-SMF may be offloading information at node granularity or node level, the offloading information may be used for all or part of sessions served by the H-SMF, or is valid for all or part of the sessions served by the H-SMF service. For example, the offloading information at node level or a portion of the offloading information at node level may be transmitted to a plurality of sessions of the H-SMF.

In operation 1103, the H-SMF transmits the offloading information to the V-SMF through a service not limited to a specific session or a specific UE. For example, the V-SMF calls a first service of the H-SMF to receive the offloading information from the H-SMF, alternatively, a second service of the V-SMF is called through the H-SMF to transmit the offloading information to the V-SMF. The first service or the second service is a service at node granularity or node level, which may be for example, one or more of the following services: a service for transmitting offloading information, a service for transmitting an offloading policy, a service for transmitting node level offloading information, a service for transmitting a node level offloading policy, and a local offloading service. The specific contents or meanings of these services are described in detail in the embodiments described in FIG. 16 or FIG. 17, and will not be repeatedly described here.

One or more or all of the above operations 1101 to 1103 may be executed at the node granularity or at the node level, or none of the operations 1101 to 1103 may be executed at the node granularity.

It should be noted that a plurality of H-PCFs and H-SMFs are drawn in the figure, which means that a plurality of operations 1101-1103 may be performed to the same V-SMF (or, if it is a non-session granularity, it cannot be strictly called V-SMF, but "SMF of a PLMN different from the sender"), and these sender SMFs and PCFs may be from different PLMNs, or may be from the same PLMN, or may be partially from the same PLMN and partially from different PLMNs.

In contrast to the foregoing operations 1101-1103, the following operations 1104-1106 are performed in a session establishment/modification procedure, for example, in an HR-SBO session establishment procedure or a session modification procedure, or other procedures, which are not limited in this example.

Similar to operations 1101-1102, most operations of session establishment/modification/other procedures are omitted here, and only operations related to embodiments of the present disclosure are retained.

Operation 1104: The H-SMF transmits fourth information to the V-SMF. The fourth information may include an offload ID, and include a PLMN ID and/or a SMF ID, instead of transmitting specific offloading information.

In other alternative embodiments, the fourth information may include only an offload ID, and the offload ID may include a PLMN ID and/or an SMF ID.

Operation 1105: The V-SMF determines the information related to offloading based on the offload ID and the PLMN ID and/or the SMF ID. The information related to offloading may be equivalent to the fifth information in the above-described embodiments.

In one possible implementation, the information required for the V-SMF to determine the information related to offloading in operation 1105 is not necessarily the same as that received from the H-SMF in operation 1104. For example, in operation 1104, the V-SMF receives the offload ID, the PLMN ID and the SMF ID, but it is possible to determine the information related to offloading only based on the offload ID and the PLMN ID. For another example, in operation 1104, the V-SMF receives the offload ID and the SMF ID, but the H-SMF only transmits an association relationship between the offload ID, the PLMN ID and/or the SMF ID, and the offloading policy-related information, to the V-SMF, so the V-SMF may determine the information related to offloading only based on the SMF ID.

Operation 1106: Remaining HR-SBO session establishment/modification procedures proceed.

### Example 6

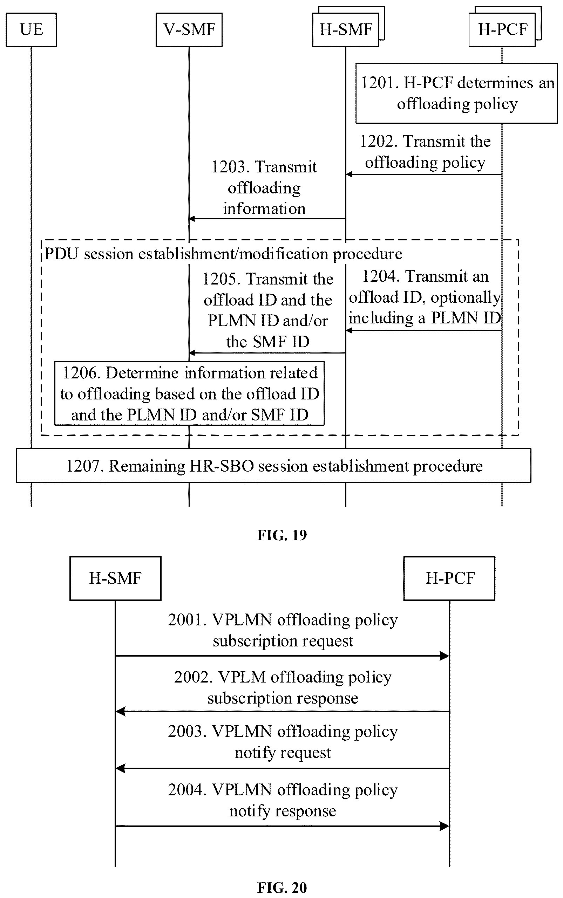

FIG. 19 is a sixth schematic diagram of an interaction procedure of a method of processing information according to an embodiment of the present disclosure. As shown in FIG. 19, the method includes the following operations.

Operation 1201: An H-PCF determines an offloading policy. The offloading policy may include at least one of an offload ID, a PLMN ID, a SMF ID, information related to an offloading policy, and a first association relationship. The first association relationship is an association relationship between at least two of the offload ID, the PLMN ID and/or the SMF ID, and the information related to an offloading policy.

Operation 1202: The H-PCF transmits an offloading policy to a H-SMF.

Operation 1203: The H-SMF transmits offloading information to a V-SMF.

Here, the offloading policy and the offloading information may refer to the same content or different contents. The operation that the H-SMF determines the offloading information according to the offloading policy belongs to the related art. In this example, both the offloading policy and the offloading information may be equivalent to the sixth information in the above-described embodiments.

Similar to Example 5, operations 1201-1203 may be performed in a procedure at a node granularity or session granularity, and operations 1204-1207 are performed in a session procedure.

The operations are executed in a procedure at node granularity, which refers to that the scope of effect of an action in the procedure and/or the information transmitted or processed in the procedure is not limited to a certain session or UE, but is at the device level. The above operations 1201-1203 are executed at node granularity or node level may specifically refer to the following:

For operation 1201, the offloading policy determined by the H-PCF may be an offloading policy at node granularity or node level, the offloading policy may be used for all or part of sessions served by the H-PCF or H-SMF, or is valid for all or part of the sessions served by the H-PCF or H-SMF. For example, the node level offloading policy or portions of the node level offloading policy may be transmitted to a plurality of sessions of the H-PCF.

For operation 1202, the H-PCF transmits the offloading policy to the H-SMF through a service not limited to a specific session or a specific UE. For example, the H-SMF calls a third service of the H-PCF and receives the offloading policy from the H-PCF, alternatively, the fourth service of the H-SMF is called through the H-PCF to transmit the offloading policy to the H-SMF. The third service or the fourth service is a service at node granularity or node level, which may be, for example, one or more of the following services: a service for transmitting offloading information, a service for transmitting an offloading policy, a service for transmitting node level offloading information, a service for transmitting a node level offloading policy, and a local offloading service. The specific contents or meanings of these services are described in detail in the embodiments described in FIG. 16 or FIG. 17, and will not be repeatedly described here.

For operation 1203, the H-SMF transmits the offloading information to the V-SMF through a service not limited to a specific session or a specific UE. For example, the V-SMF calls the first service of the H-SMF to receive the offloading information from the H-SMF. Alternatively, the second service of the V-SMF is called through the H-SMF, to transmit the offloading information to the V-SMF. The first service or the second service is a service at node granularity or node level, which may be for example, one or more of the following services: a service for transmitting offloading information, a service for transmitting an offloading policy, a service for transmitting node level offloading information, a service for transmitting a node level offloading policy, and a local offloading service. The specific contents or meanings of these services are described in detail in the embodiments described in FIG. 16 or FIG. 17, and will not be repeatedly described here.

It should be noted that, one or more or all of the above operations 1201 to 1203 may be executed at the node granularity or at the node level, or none of the operations may be executed at the node granularity.

Similar to Example 5, most operations of session establishment/modification/other processes are omitted here, and only operations related to embodiments of the present disclosure are retained.

Operation 1204: The H-PCF transmits an offload ID to the H-SMF. Optionally, the offload ID may include a PLMN ID.

Operation 1205: The H-SMF transmits fourth information to the V-SMF. The fourth information may include an offload ID and include a PLMN ID and/or a SMF ID instead of transmitting specific offloading information.

In other alternative embodiments, the fourth information may include only an offload ID, and the offload ID may include a PLMN ID and/or a SMF ID.

Operation 1206: The V-SMF determines the information related to offloading based on the offload ID and the PLMN ID and/or the SMF ID. The information related to offloading may be equivalent to the fifth information in the above embodiment.

This operation is the same as operation 1105 in Example 5.

Operation 1207: Remaining HR-SBO session establishment/modification procedures proceed.

### Example 7

FIG. 20 is a seventh schematic diagram of an interaction procedure of a method of processing information according to an embodiment of the present disclosure; As shown in FIG. 20, the method includes the following operations.

Operation 2001: An H-SMF subscribes to a VPLMN offloading policy from the H-PCF, which may be implemented through a VPLMN offloading policy subscription request (Npcf_VPLMNOffloadingPolicy_subscribe Request) message.

Here, the subscription is performed through node granularity or node level, that is, the H-PCF transmits a notification to the H-SMF regardless of which session's VPLMN offloading policy is created, updated or deleted.

The subscription message may be may be implemented by the H-SMF calling a node level service of the H-PCF, or by calling a node level service of the H-SMF through the H-PCF. The node level service in this operation may be any one of: a service for subscribing to offloading information, a service for subscribing to offloading policy, a service for subscribing to node level offloading information, a service for subscribing to a node level offloading policy, and a local offload subscription service.

The service for subscribing to the offloading information may be an offloading information subscription service, a VPLMN specific offloading information subscription service, or other services for subscribing to the offloading information, which are not limited in the embodiment.

The service for subscribing to the offloading policy may be an offloading policy subscription service, a VPLMN specific offloading policy subscription service, or other services for subscribing to the offloading policy, which are not limited in the embodiment.

The service for subscribing to the node level offloading information may be a node level offloading information subscription service, a node level VPLMN specific offloading information subscription service, or other services for subscribing to the node level offloading information, which are not limited in the embodiment.

The service for subscribing to the node level offloading policy may be a node level offloading policy subscription service, a node level VPLMN specific offloading policy subscription service, or other services for subscribing to the node level offloading policy, which are not limited in the embodiment.

The local offloading subscription service may be a VPLMN local offloading subscription service, a node level local offloading subscription service, a node level VPLMN local offloading subscription service, or other local offloading subscription services, which are not limited in the embodiment.

Operation 2002: The H-PCF transmits a response to subscribing to the VPLMN offloading policy to the H-SMF, which can be implemented through a VPLMN offloading policy subscription response (Npcf_VPLMNOffloadingPolicy_Subscribe Response) message.

Here, the response is performed through node granularity or node level.

The response message may be implemented by the H-SMF calling a node level service of the H-PCF, or by calling a node level service of the H-SMF through the H-PCF. The node level service in this operation may be any one of the following: a service for responding to subscribing to the offloading information, a service for responding to subscribing to the offloading policy, a service for responding to subscribing to the node level offloading information, a service for responding to subscribing the node level offloading policy, and a local offloading subscription response service.

The service for responding to subscribing to offloading information may be an offloading information subscription response service, a VPLMN specific offloading information subscription response service, or other services for responding to subscribing to the offloading information, which are not limited in the embodiment.

The service for responding to subscribing to the offloading policy may be an offloading policy subscription response service, a VPLMN specific offloading policy subscription response service, or other services for responding to subscribing to offloading policy, which are not limited in the embodiment.

The service for responding to subscribing to the node level offloading information may be a node level offloading information subscription response service, a node level VPLMN specific offloading information subscription response service, or other services for responding to the subscription node level offloading information, which are not limited in the embodiment.

The service for responding to subscribing to the node level offloading policy may be a node level offloading policy subscription response service, a node level VPLMN specific offloading policy subscription response service, or other services for responding to subscribing to the node level offloading policy, which are not limited in the embodiment.

The local offloading subscription response service may be a VPLMN local offloading subscription response service, a node level local offloading subscription response service, a node level VPLMN local offloading subscription response service, or other local offloading subscription response services, which are not limited in the embodiment.

Operation 2003: The H-PCF transmits a VPLMN offloading policy to the H-SMF, which can be implemented by a VPLMN offloading policy notify request (Npcf_VPLMNOffloadingPolicy_Notify Request) message.

Here, this information is transmitted through node granularity or node level.

The transmission of this information may be implemented by calling a node level service of the H-PCF through the H-SMF, or by calling a node level service of the H-SMF through the H-PCF. The node level service in this operation may be any one of: a service for transmitting offloading information, a service for transmitting an offloading policy, a service for transmitting node level offloading information, a service for transmitting a node level offloading policy, and a local offloading service.

The service for transmitting the offloading information may be an offloading information service (such as an offloading information request service, an offloading information response service, an offloading information notify service), or a VPLMN specific offloading information service (such as a VPLMN specific offloading information request service, a VPLMN specific offloading information response service, a VPLMN specific offloading information notify service), or other services for transmitting offloading information, which are not limited in the embodiment.

The service for transmitting the offloading policy may be an offloading policy service (such as an offloading policy request service, an offloading policy response service, an offloading policy notify service), or a VPLMN specific offloading policy service (such as a VPLMN specific offloading policy request service, a VPLMN specific offloading policy response service, a VPLMN specific offloading policy notify service), or other services for transmitting the offloading policy, which are not limited in the embodiment.

The service for transmitting the node level offloading information may be a node level offloading information service (such as a node level offloading information request service, a node level offloading information response service, a node level offloading information notify service), or a node level VPLMN specific offloading information service (such as a node level VPLMN specific offloading information request service, a node level VPLMN specific offloading information response service, a node level VPLMN specific offloading information notify service), or other services for transmitting the node level offloading information, which are not limited in the embodiment.

The service for transmitting the node level offloading policy may be a node level offloading policy service (such as a node level offloading policy request service, a node level offloading policy response service, a node level offloading policy notify service), or a node level VPLMN specific offloading policy service (such as a node level VPLMN specific offloading policy request service, a node level VPLMN specific offloading policy response service, a node level VPLMN specific offloading policy notify service), or other services for transmitting the node level offloading policy, which are not limited in the embodiment.

The local offloading service may be a VPLMN local offloading service (such as a VPLMN local offloading service request service, a VPLMN local offloading service response service, a VPLMN local offloading service notify service), or a node level local offloading service (such as a node level local offloading request service, a node level local offloading response service, a node level local offloading notify service), or a node level VPLMN local offloading service (such as a node level VPLMN local offloading request service, a node level VPLMN local offloading response service, a node level VPLMN local offloading notify service), or other local offloading services, which are not limited in the embodiment.

The H-SMF may store the fourth information at node granularity or node level.

Operation 2004: The H-SMF transmits a response to the H-PCF to indicate that the information transmitted in operation 2003 is received, which may be implemented by a VPLMN offloading policy notify response (Npcf_VPLMNOffloadingPolicy_Notify Response) message.

Here, the response is performed through node granularity or node level.

The response message may be implemented by an H-SMF calling a node level service of the H-PCF, or by calling a node level service of the H-SMF through the H-PCF. The node level service in this operation may be any one of: a service for responding to the transmission of the offloading information, a service for responding to the transmission of the offloading policy, a service for responding to the transmission of the node level offloading information, a service for responding to the transmission of the node level offloading policy, a service for responding to the transmission of the local offloading, a service for responding to the notifying of the offloading information, a service for responding to the notifying of the offloading policy, a service for responding to the notifying of the node level offloading information, a service for responding to the notifying of the node level offloading policy, and a local offloading notify response service.

The service for responding to the transmission of the offloading information may be an offloading information transmission response service, or a VPLMN specific offloading information transmission response service, or other services for responding to the transmission of the offloading information, which are not limited in the embodiment.

The service for responding to the transmission of the offloading policy may be an offloading policy transmission response service, a VPLMN specific offloading policy transmission response service, or other services for responding to the transmission of the offloading policy, which are not limited in the embodiment.

The service for responding to the transmission of the node level offloading information may be a node level offloading information transmission response service, a node level VPLMN specific offloading information transmission response service, or other services for responding to the transmission of the node level offloading information, which are not limited in the embodiment.

The service for responding to the transmission of the node level offloading policy may be a node level offloading policy transmission response service, a node level VPLMN specific offloading policy transmission response service, or other services for responding to the transmission of the node level offloading policy, which are not limited in the embodiment.

The service for responding to the transmission of the local offloading may be a VPLMN local offloading transmission response service, a node level local offloading transmission response service, a node level VPLMN local offloading transmission response service, or other services for responding to the transmission of the local offloading, which are not limited in the embodiment.

The service for responding to the notifying of the offloading information may be an offloading information notify response service, a VPLMN specific offloading information notify response service, or other services for responding to the notifying of the offloading information, which are not limited in the embodiment.

The service for responding to the notifying of the offloading policy may be an offloading policy notify response service, a VPLMN specific offloading policy notify response service, or other services for responding to the notifying of the offloading policy, which are not limited in the embodiment.

The service for responding to the notifying of the node level offloading information may be a node level offloading information notify response service, a node level VPLMN specific offloading information notify response service, or other services for responding to the notifying of the node level offloading information, which are not limited in the embodiment.

The service for responding to the notifying of the node level offloading policy may be a node level offloading policy notify response service, a node level VPLMN specific offloading policy notify response service, or other services for responding to the notifying of the node level offloading policy, which are not limited in the embodiment.

The local offloading notify response service may be a VPLMN local offloading notify response service, a node level local offloading notify response service, a node level VPLMN local offloading notify response service, or other local offloading notify response services, which are not limited in the embodiment.

It should be noted that, in the present example, operation 2003 is an essential operation, and all other operations are optional operations.

### Example 8

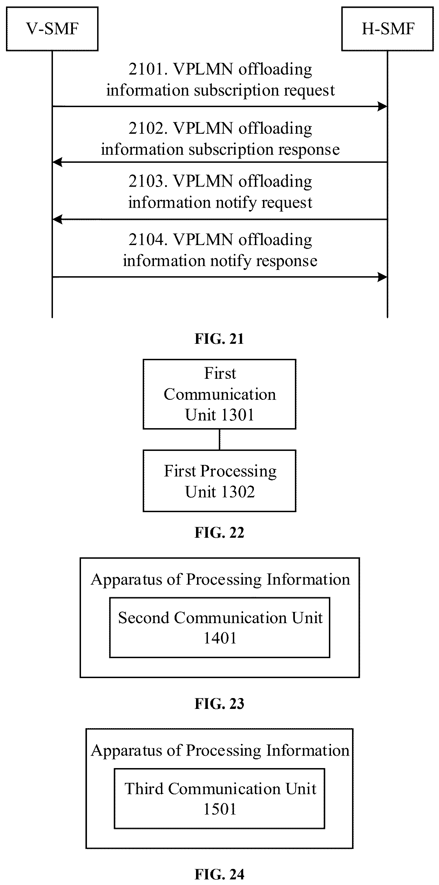

FIG. 21 is an eighth schematic diagram of an interaction procedure of a method of processing information according to an embodiment of the present disclosure. As shown in FIG. 21, the method includes the following operations.

Operation 2101: A V-SMF subscribes to VPLMN offloading information from an H-SMF, which may be specifically implemented through a VPLMN offloading information subscription request (Nsmf_VPLMNOffloadingInfo_Subscribe Request) message.

Here, the subscription is performed through node granularity or node level. That is, the H-SMF transmits a notification to the V-SMF regardless of which session's VPLMN offloading information is created, updated or deleted.

The subscription message may be implemented by the V-SMF calling a node level service of the H-SMF, or by calling the node level service of the V-SMF through the H-SMF. The node level service in this operation may be any one of: a service for subscribing to offloading information, a service for subscribing to offloading information, a service for subscribing to node level offloading information, a service for subscribing to node level offloading information, and a local offload subscription service.

The service for subscribing to the offloading information may be an offloading information subscription service, a VPLMN specific offloading information subscription service, or other services for subscribing the offloading information, which are not limited in the embodiment.

The service for subscribing to the offloading information may be an offloading information subscription service, a VPLMN specific offloading information subscription service, or other services for subscribing the offloading information, which are not limited in the embodiment.

The service for subscribing to the node level offloading information may be a node level offloading information subscription service, a node level VPLMN specific offloading information subscription service, or other services for subscribing to the node level offloading information, which are not limited in the embodiment.

The service for subscribing to the node level offloading information may be a node level offloading information subscription service, a node level VPLMN specific offloading information subscription service, or other services for subscribing to the node level offloading information, which are not limited in the embodiment.

The local offloading subscription service may be a VPLMN local offloading subscription service, a node level local offloading subscription service, a node level VPLMN local offloading subscription service, or other local offloading subscription services, which are not limited in the embodiment.

Operation 2102: The H-SMF transmits a response to subscribing to the VPLMN offloading information to the V-SMF, which can be implemented through a VPLMN offloading information subscription response (Nsmf_VPLMNOffloadingInfo_Subscribe Response) message.

Here, the response is performed through node granularity or node level.

The response message may be implemented by the V-SMF calling a node level service of the H-SMF, or by calling a node level service of the V-SMF through the H-SMF. The node level service in this operation may be any one of: a service for responding to subscribing to offloading information, a service for responding to subscribing to offloading information, a service for responding to subscribing to node level offloading information, a service for responding to subscribing to node level offloading information, and a local offloading subscription response service.

The service for responding to subscribing to the offloading information may be an offloading information subscription response service, a VPLMN specific offloading information subscription response service, or other services for responding to subscribing to the offloading information, which are not limited in this embodiment.

The service for responding to subscribing to the offloading information may be an offloading information subscription response service, a VPLMN specific offloading information subscription response service, or other services for responding to subscribing to the offloading information, which are not limited in this embodiment.

The service for responding to subscribing to the node level offloading information may be a node level offloading information subscription response service, a node level VPLMN specific offloading information subscription response service, or other services for responding to subscribing to the node level offloading information, which are not limited in the embodiment.

The service for responding to subscribing to the node level offloading information may be a node level offloading information subscription response service, a node level VPLMN specific offloading information subscription response service, or other services for responding to subscribing to the node level offloading information, which are not limited in the embodiment.

The local offloading subscription response service may be a VPLMN local offloading subscription response service, a node level local offloading subscription response service, a node level VPLMN local offloading subscription response service, or other local offloading subscription response services, which are not limited in the embodiment.

Operation 2103: The H-SMF transmits VPLMN offloading information to the V-SMF, which can be specifically implemented through a VPLMN offloading information notify request (Nsmf_VPLMNOffloadingInfo_Notify Request) message.

Here, this information is transmitted through node granularity or node level.

The transmission of this information may be realized by calling the node level service of the H-SMF through the V-SMF, or by calling the node level service of the V-SMF through the H-SMF. The node level service in this operation may be any one of: a service for transmitting offloading information, a service for transmitting offloading information, a service for transmitting node level offloading information, a service for transmitting node level offloading information, and a local offloading service.

The service for transmitting the offloading information may be an offloading information service (such as an offloading information request service, an offloading information response service, an offloading information notify service), a VPLMN specific offloading information service (such as a VPLMN specific offloading information request service, a VPLMN specific offloading information response service, a VPLMN specific offloading information notify service), or other services for transmitting offloading information, which are not limited in the embodiment.

The service for transmitting the offloading information may be an offloading information service (such as an offloading information request service, an offloading information response service, an offloading information notify service), a VPLMN specific offloading information service (such as a VPLMN specific offloading information request service, a VPLMN specific offloading information response service, a VPLMN specific offloading information notify service), or other services for transmitting offloading information, which are not limited in the embodiment.

The service for transmitting the node level offloading information may be a node level offloading information service (such as a node level offloading information request service, a node level offloading information response service, a node level offloading information notify service), a node level VPLMN specific offloading information service (such as a node level VPLMN specific offloading information request service, a node level VPLMN specific offloading information response service, a node level VPLMN specific offloading information notify service), or other services for transmitting the node level offloading information, which are not limited in the embodiment.

The service for transmitting the node level offloading information may be a node level offloading information service (such as a node level offloading information request service, a node level offloading information response service, a node level offloading information notify service), a node level VPLMN specific offloading information service (such as a node level VPLMN specific offloading information request service, a node level VPLMN specific offloading information response service, a node level VPLMN specific offloading information notify service), or other services for transmitting the node level offloading information, which are not limited in the embodiment.

The local offloading service may be a VPLMN local offloading service (such as a VPLMN local offloading service request service, a VPLMN local offloading service response service, a VPLMN local offloading service notify service), or a node level local offloading service (such as a node level local offloading request service, or a node level local offloading responseservice, a node level local offloading notify service), or a node level VPLMN local offloading service (such as a node level VPLMN local offloading request service, a node level VPLMN local offloading responseservice, a node level VPLMN local offloading notify service) or other local offloading services, which are not limited in this embodiment.

The V-SMF may store the fourth information at node granularity or at node level.

Operation 2104: The V-SMF transmits a response to the H-SMF to indicate that the information transmitted in operation 2103 is received, which can be implemented through a VPLMN offloading information notify response (Nsmf_VPLMNOffloadingInfo_Notify Response) message.

Here, the response is performed through node granularity or node level.

The response message may be implemented by the V-SMF calling a node level service of the H-SMF, or by calling a node level service of the V-SMF through the H-SMF. The node level service in this operation may be any one of: a service for responding to the transmission of the offloading information, a service for responding to the transmission of the offloading information, a service for responding to the transmission of the node level offloading information, a service for responding to the transmission of the node level offloading information, a local offloading transmission response service, a service for responding to the notifying of the offloading information, a service for responding to the notifying of the offloading information, a service for responding to the notifying of the node level offloading information, a service for responding to the notifying of the node level offloading information and a local offloading notify response service.

The service for responding to the transmission of the offloading information may be an offloading information transmission response service, a VPLMN specific offloading information transmission response service, or other services for responding to the transmission of the offloading information, which are not limited in the embodiment.

The service for responding to the transmission of the offloading information may be an offloading information transmission response service, a VPLMN specific offloading information transmission response service, or other services for responding to the transmission of the offloading information, which are not limited in the embodiment.

The service for responding to the transmission of the node level offloading information may be a node level offloading information transmission response service, a node level VPLMN specific offloading information transmission response service, or other services for responding to the transmission of the node level offloading information, which are not limited in the embodiment.

The service for responding to the transmission of the node level offloading information may be a node level offloading information transmission response service, a node level VPLMN specific offloading information transmission response service, or other services for responding to the transmission of the node level offloading information, which are not limited in the embodiment.

The local offloading transmission response service may be a VPLMN local offloading transmission response service, a node level local offloading transmission response service, a node level VPLMN local offloading transmission response service, or other local offloading transmission response services, which are not limited in the embodiment.

The service for responding to the notifying of the offloading information may be an offloading information notify response service, a VPLMN specific offloading information notify response service, or other services for responding to the notifying of the offloading information, which are not limited in the embodiment.

The service for responding to the notifying of the offloading information may be an offloading information notify response service, a VPLMN specific offloading information notify response service, or other services for responding to the notifying of the offloading information, which are not limited in the embodiment.

The service for responding to the notifying of the node level offloading information may be a node level offloading information notify response service, a node level VPLMN specific offloading information notify response service, or other services for responding to the notifying of the node level offloading information, which are not limited in the embodiment.

The service for responding to the notifying of the node level offloading information may be a node level offloading information notify response service, a node level VPLMN specific offloading information notify response service, or other services for responding to the notifying of the node level offloading information, which are not limited in the embodiment.

The local offloading notify response service may be a VPLMN local offloading notify response service, a node level local offloading notify response service, a node level VPLMN local offloading notify response service, or other local offloading notify response services, , which are not limited in the embodiment.

In this embodiment, operation 2103 is an essential operation, and all other operations are optional operations.

In the related technical solution, the DNS server returns application server addresses (such as an address of an edge application server (EAS IP)), but the returned application server addresses may include an application server address that the UE is not authorized to use (such as an address of an application server deployed in a VPLMN area), thereby causing the UE to be unable to access the application server normally.

Based on this, an embodiment of the present disclosure further provides a method of processing information. the method includes an operation that: a first network function constructs and/or transmits DNS request information. The DNS request information includes at least one of address information related to an HPLMN, address information of a home user plane function (H-UPF), and address information of a home PDU session anchor (H-PSA).

In the method provided by the embodiment of the present disclosure, the first network function constructs and/or transmits the DNS request information. The DNS request information includes at least one of the address information related to the HPLMN, the address information of the H-UPF, and the address information of the H-PSA. Then the DNS server returns addresses of the application servers deployed in the HPLMN area (such as the address information related to the HPLMN and/or the address information of the H-UPF) according to its own logical configuration, and the application server deployed in the HPLMN area is allowed to be accessed normally by the UE, thereby avoiding a situation that: because the returned application server addresses may include an application server address that the UE is not authorized to use, the UE cannot normally access the application server.

Here, optionally, the address information of the H-UPF may be address information of the H-PSA, or may be H-PSA address information or H-UPF address information. The PSA can be understood as a special UPF, or as a UPF with specific functions in a session, or may also be called PSA UPF.

In some alternative embodiments, at least one of the address information related to the HPLMN, the address information of the H-UPF, and the address information of the home PDU session anchor H-PSA is as an EDNS Client Subnet option (ECS option).

In some optional embodiments, the method further includes an operation that: the first network function receives first indication information transmitted by the second network function. The first indication information is used to instruct the first network function to construct and/or transmit the DNS request information.

In some alternative embodiments, the first network function is at least one of:

A edge application server discovery function (such as EASDF), a user plane function (such as UPF), a Uplink Classifier (UL CL), a PDU Session Anchor (PSA), a session management function (such as SMF); and/or the second network function is a session management function.

In some alternative embodiments, the first network function and/or the second network function is a network function of a VPLMN.

In this embodiment, the first network function constructs and/or transmits the DNS request information, which may be equivalent to that the first edge application server discovery function or the first user plane function constructs and/or transmits the DNS request in the foregoing embodiments, or which may be equivalent to a process in which the first session management function constructs the DNS request, and carries the DNS request through a first message to send it to the first edge application server discovery function or the first user plane function, and the first edge application server discovery function or the first user plane function transmits the DNS request.

In this embodiment, the first network function receives the first indication information transmitted by the second network function, which is specifically equivalent to that, when the second network function is the first session management function in the above embodiments and the first network function is equivalent to the first edge application server discovery function or the first user plane function in the above embodiments, the first session management function transmits a first message to the first edge application server discovery function or the first user plane function, and the first message includes indication information for instructing the first edge application server discovery function or the first user plane function to construct and/or transmit the DNS request.

In some optional embodiments, the first network function constructs and/or transmits the DNS request information, which includes an operation that: when an EAS IP included in the DNS response does not belong to an authorized/allowed/permitted IP range, the first network function constructs and/or transmits the DNS request information.

In the embodiment, the DNS response may specifically be a DNS response transmitted by the DNS server to the EASDF or the UPF, and the details may be found from operation 505 of Example 1 and operation 606 of Example 2.

An embodiment of the present disclosure also provides a method for processing information, wherein the method includes an operation that: a first network function constructs and/or transmits DNS request information to a second DNS server. The second DNS server is provided by an HPLMN.

In the method provided by the embodiment of the present disclosure, the first network function (such as UPF) constructs and/or transmits the DNS request information to a second DNS server, and the second DNS server is provided by the HPLMN. Under normal circumstances, a DNS server deployed in an HPLMN area (or a DNS server provided by the HPLMN) may return addresses of application servers deployed in the HPLMN area according to its own logical configuration, and the application servers deployed in the HPLMN area is allowed to be accessed normally by the UE, thereby avoiding a situation that: because the returned application server addresses may include an application server address that the UE is not authorized to use, the UE cannot normally access the application server.

In this embodiment, the first network function constructs and/or transmits the DNS request information, which may be equivalent to that the first edge application server discovery function or the first user plane function constructs and/or transmits the DNS request in the foregoing embodiments, or may be equivalent to a process in which the first session management function constructs a DNS request, carries the DNS request to the first edge application server discovery function or the first user plane function through a first message, and the first edge application server discovery function or the first user plane function transmits the DNS request.

In some optional embodiments, the operation that the first network function constructs and/or transmits the DNS request information to the second DNS server includes an operation that: when an EAS IP included in the DNS response does not belong to the authorized/allowed/permitted IP range, the first network function constructs and/or transmits the DNS request information to the second DNS server.

In the embodiment, the DNS response may specifically be a DNS response transmitted by the DNS server to the EASDF or the UPF, and the details may be found from operation 505 of Example 1 and operation 606 of Example 2.

In some alternative embodiments, the DNS request information includes a same full domain name (FQDN).

In the embodiment, the same FQDN means that the FQDN included in the DNS request information is the same as the FQDN corresponding to "the identifier of the edge application server that matches or does not match the first information" in the foregoing embodiment, or the FQDN included in the DNS request information is the same as the FQDN included in the DNS Response including " the identifier of the edge application server that matches or does not match the first information" in the foregoing embodiment, or the FQDN included in the DNS request information is the same as the FQDN included in the DNS Query corresponding to the DNS Response including " the identifier of the edge application server that matches or does not match the first information" in the foregoing embodiment.

In some alternative embodiments, the first network function is at least one of:
An edge application server discovery function (such as EASDF), a user plane function (such as UPF), a uplink classifier, a PDU session anchor, and a session management function (such as SMF).

In some alternative embodiments, the first network function is a network function of a VPLMN.

Based on the above-described embodiments, an embodiment of the present disclosure further provides an apparatus of processing information. FIG. 22 is a schematic diagram of a configuration of an apparatus of processing information according to an embodiment of the present disclosure. As shown in FIG. 22, the apparatus includes: a first communication unit 1301 and a first processing unit 1302.

The first communication unit 1301 is configured to acquire an identifier of an edge application server.

The first processing unit 1302 is configured to determine whether the identifier of the edge application server matches or does not match a first information. The first information includes a first identifier, the first identifier is one or more identifiers, or the first identifier is a range of identifiers.

In some alternative embodiments of the present disclosure, the apparatus is applied to a first network device. The first network device is at least one of a first session management function, a first edge application server discovery function, and a first user plane function.

In some alternative embodiments of the present disclosure, the first communication unit 1301 is further configured to transmit a first message in case that the first processing unit 1302 determines that the identifier of the edge application server matches or does not match the first information.

In some alternative embodiments of the present disclosure, the first communication unit 1301 is configured to: when the first identifier is one or more identifiers for which offloading in local and/or in a visited network is not authorized not permitted/not allowed, transmit the first message in case that the first processing unit 1302 determines that the identifier of the edge application server matches the first information; and/or when the first identifier is one or more identifiers for which offloading in local and/or in a visited network is authorized/permitted/allowed, transmit the first message in case that the first processing unit 1302 determines that the identifier of the edge application server does not match the first information.

In some alternative embodiments of the present disclosure, when the apparatus is applied to a first network device, and in case that the first network device is a first session management function, the first communication unit 1301 is configured to transmit the first message to a first edge application server discovery function or a first user plane function, the first message is used to instruct the first edge application server discovery function or the first user plane function to transmit a DNS request; transmit the first message to a first edge application server discovery function or a first user plane function, the first message includes second information used to instruct the first edge application server discovery function or the first user plane function to transmit a DNS request; or transmit the first message to a first edge application server discovery function or a first user plane function, so that the first edge application server discovery function or the first user plane function transmits a DNS request after receiving the first message.

In some alternative embodiments of the present disclosure, the first communication unit 1301 is configured to: construct the DNS request, and transmit the first message carrying the DNS request to the first edge application server discovery function or the first user plane function, the first message is used to instruct the first edge application server discovery function or the first user plane function to transmit the DNS request; or
construct the DNS request, and transmit the first message carrying the DNS request to the first edge application server discovery function or the first user plane function, herein, the first message includes second information used to instruct the first edge application server discovery function or the first user plane function to transmit the DNS request; or
construct the DNS request and transmit the first message carrying the DNS request to the first edge application server discovery function or the first user plane function, so that the first edge application server discovery function or the first user plane function transmits the DNS request after receiving the first message; or
transmit the first message to the first edge application server discovery function or the first user plane function, herein the first message is used to instruct the first edge application server discovery function or the first user plane function to construct the DNS request and/or transmit the DNS request; or
transmit the first message to the first edge application server discovery function or the first user plane function, herein the first message includes third information used to instruct the first edge application server discovery function or the first user plane function to construct the DNS request and/or transmit the DNS request; or
transmit the first message to the first edge application server discovery function or the first user plane function, so that the first edge application server discovery function or the first user plane function constructs the DNS request and/or transmits the DNS request after receiving the first message.

In some alternative embodiments of the present disclosure, when the DNS request carried in the first message includes information related to the H-PLMN, the operation that the first edge application server discovery function or the first user plane function transmits the DNS request includes: the first edge application server discovery function or the first user plane function transmits the DNS request to a H-DNS server or a V-DNS server; and/or
when the DNS request carried in the first message does not include information related to a H-PLMN, the operation that the first edge application server discovery function or the first user plane function transmits the DNS request includes: the first edge application server discovery function or the first user plane function transmits the DNS request to an H-DNS server.

In some alternative embodiments of the present disclosure, the method is applied to a first network device, in case that the first network device is a first edge application server discovery function or a first user plane function, the first communication unit 1301 is configured to transmit the first message to a DNS server.

In some alternative embodiments of the present disclosure, the first communication unit 1301 is configured to transmit the DNS request to the DNS server.

In some alternative embodiments of the present disclosure, the first communication unit 1301 is configured to: transmit the DNS request to an H-DNS server or a V-DNS server, the DNS request includes information related to an H-PLMN; and/or transmit the DNS request to an H-DNS server, the DNS request does not include information related to an H-PLMN.

In some alternative embodiments of the present disclosure, the first communication unit 1301 is configured to construct the DNS request and transmit the DNS request to the DNS server.

In some alternative embodiments of the present disclosure, the apparatus is applied to a first network device, and in case that the first network device is a first session management function, the first communication unit 1301 is configured to: transmit a first message to the first terminal, the first message is used to instruct the first terminal to retransmit a DNS request to a H-DNS server, or instruct the first terminal to transmit a DNS request to a H-DNS server; or, transmit the first message to a first edge application server discovery function or a first user plane function, herein the first message is used to instruct the first edge application server discovery function or the first user plane function to transmit a second message to the first terminal, or the first message is used to cause the first edge application server discovery function or the first user plane function to transmit a second message to the first terminal after receiving the first message.

In some alternative embodiments of the present disclosure, the second message is used to instruct the first terminal to retransmit the DNS request to the H-DNS server, or the second message is used to instruct the first terminal to transmit the DNS request to the H-DNS server.

In some alternative embodiments of the present disclosure, the first processing unit 1302 is configured to: in case that the first processing unit 1302 determines that the identifier of the edge application server matches or does not match the first information, determine to instruct the first terminal to retransmit the DNS request or determining to instruct the first terminal to transmit the DNS request; and
the first communication unit 1301 is configured to transmit the first message.

In some alternative embodiments of the present disclosure, when the apparatus is applied to a first network device, and the first network device is a first edge application server discovery function or a first user plane function, the first communication unit 1301 is configured to transmit the first message to the first terminal, the first message is used to instruct the first terminal to retransmit a DNS request to an H-DNS server, or the first message is used to instruct the first terminal to transmit a DNS request to an H-DNS server.

In some alternative embodiments of the present disclosure, the first processing unit 1302 is configured to: in case of determining that the identifier of the edge application server matches or does not match the first information, determine to instruct the first terminal to retransmit the DNS request or determine to instruct the first terminal to transmit the DNS request; and
the first communication unit 1301 is configured to transmit the first message to the first terminal.

In some alternative embodiments of the present disclosure, in case that the apparatus is applied to a first network device and the first network device is the first session management function, the identifier of the edge application server is from a first edge application server discovery function or a first user plane function;
in case that the method is applied to a first network device and the first network device is a first edge application server discovery function or a first user plane function, the identifier of the edge application server is from a DNS server or a L-DNS server.

In some alternative embodiments of the present disclosure, in case that the apparatus is applied to a first network device and the first network device is a first session management function, the first communication unit 1301 is further configured to: receive the first information from a second session management function; and/or,
in case that the apparatus is applied to a first network device and the first network device is a first edge application server discovery function or a first user plane function, the first communication unit 1301 is further configured to receive the first information transmitted by a first session management function.

In some alternative embodiments of the present disclosure, the first session management function, the first edge application server discovery function, and the first user plane function are all located at a visited location; and/or the second session management function is located at a home location.

In an embodiment of the present disclosure, the first processing unit 1302 in the apparatus may be implemented by a Central Processing Unit (CPU), a Digital Signal Processor (DSP), a Microcontroller Unit (MCU) or a Field-Programmable Gate Array (FPGA) in practical applications. The first communication unit 1301 in the apparatus can be implemented by a communication module (including a basic communication kit, an operating system, a communication module, a standardized interface, a protocol, etc.) and a transmitting/receiving antenna in practical applications.

An embodiment of the present disclosure further provides an apparatus of processing information. The apparatus is applied to a first edge application server discovery function or a first user plane function. FIG. 23 is a second schematic structural diagram of the apparatus of processing information according to the embodiment of the present disclosure. As shown in FIG. 23, the apparatus includes: a second communication unit 1401 configured to receive a first message transmitted by a first session management function. The first message is configured to instruct the first edge application server discovery function or the first user plane function to transmit a DNS request; or, the first message includes second information used to instruct the first edge application server discovery function or the first user plane function to transmit a DNS request; or, the first message causes the first edge application server discovery function or the first user plane function to transmit a DNS request after receiving the first message. The second communication unit 1401 is also configured to transmit the DNS request to a DNS server.

In some alternative embodiments of the present disclosure, the second communication unit 1401 is configured to receive the first message carrying the DNS request transmitted by the first session management function. The first message is used to instruct the first edge application server discovery function or the first user plane function to transmit the DNS request; or, the first message includes second information used to instruct the first edge application server discovery function or the first user plane function to transmit the DNS request; or, the first message causes the first edge application server discovery function or the first user plane function to transmit the DNS request after receiving the first message; or, the second communication unit 1401 is configured to receive the first message transmitted by the first session management function and construct the DNS request based on the first message, herein the first message is used to instruct the first edge application server discovery function or the first user plane function to construct the DNS request and transmit the DNS request; or, the first message includes third information used to instruct the first edge application server discovery function or the first user plane function to construct the DNS request and/or transmit the DNS request; or, the first message causes the first edge application server discovery function or the first user plane function to construct the DNS request and transmit the DNS request after receiving the first message.

In some alternative embodiments of the present disclosure, the second communication unit 1401 is configured to receive the first message carrying the DNS request transmitted by the first session management function. The first message is used to instruct the first edge application server discovery function or the first user plane function to transmit the DNS request; or, the first message includes second information used to instruct the first edge application server discovery function or the first user plane function to transmit the DNS request; or, the first message causes the first edge application server discovery function or the first user plane function to transmit the DNS request after receiving the first message; or, the second communication unit 1401 is configured to receive the first message transmitted by the first session management function and construct the DNS request based on the first message, herein the first message is used to instruct the first edge application server discovery function or the first user plane function to construct the DNS request and transmit the DNS request; or, the first message includes third information used to instruct the first edge application server discovery function or the first user plane function to construct the DNS request and/or transmit the DNS request; or, the first message causes the first edge application server discovery function or the first user plane function to construct the DNS request and transmit the DNS request after receiving the first message.

In some alternative embodiments of the present disclosure, if the DNS request carried in the first message includes information related to a home public land mobile network (H-PLMN), the second communication unit 1401 is configured to transmit the DNS request to a H-DNS server or a V-DNS server; and/or,
When the DNS request carried in the first message does not include information related to a H-PLMN, the second communication unit 1401 is configured to transmit the DNS request to the H-DNS server.

In some alternative embodiments of the present disclosure, the second communication unit 1401 is configured to: when the constructed DNS request includes information related to a H-PLMN, transmit the DNS request to an H-DNS server or a V-DNS server; and/or when the constructed DNS request does not include information related to a H-PLMN, transmit the DNS request to the H-DNS server.

In some alternative embodiments of the present disclosure, the first session management function, the first edge application server discovery function, and the first user plane function are all located at a visited location.

In an embodiment of the present disclosure, the second communication unit 1401 in the apparatus may be implemented by a communication module (including a basic communication kit, an operating system, a communication module, a standardized interface, a protocol, etc.) and a transmitting/receiving antenna in practical applications.

An embodiment of the present disclosure further provides an apparatus of processing information. The apparatus is applied to a first edge application server discovery function or a first user plane function. FIG. 24 is a third schematic structural diagram of the apparatus of processing information according to the embodiment of the present disclosure. As shown in FIG. 24, the apparatus includes: a third communication unit 1501 configured to receive a first message transmitted by a first session management function, the first message is used to to instruct the first edge application server discovery function or the first user plane function to transmit a second message to a first terminal, or the first message is used to cause the first edge application server discovery function or the first user plane function to transmit a second message to a first terminal after receiving the first message; third communication unit 1501 is further configured to transmit the second message to the first terminal.

In some alternative embodiments of the present disclosure, the second message is used to instruct the first terminal to retransmit a DNS request to a H-DNS server, or the second message is used to instruct the first terminal to transmit a DNS request to a H-DNS server.

In some alternative embodiments of the present disclosure, the first session management function, the first edge application server discovery function, and the first user plane function are all located at a visited location.

In an embodiment of the present disclosure, the third communication unit 1501 in the apparatus can be implemented by a communication module (including a basic communication kit, an operating system, a communication module, a standardized interface, a protocol, etc.) and a transmitting/receiving antenna in practical applications.

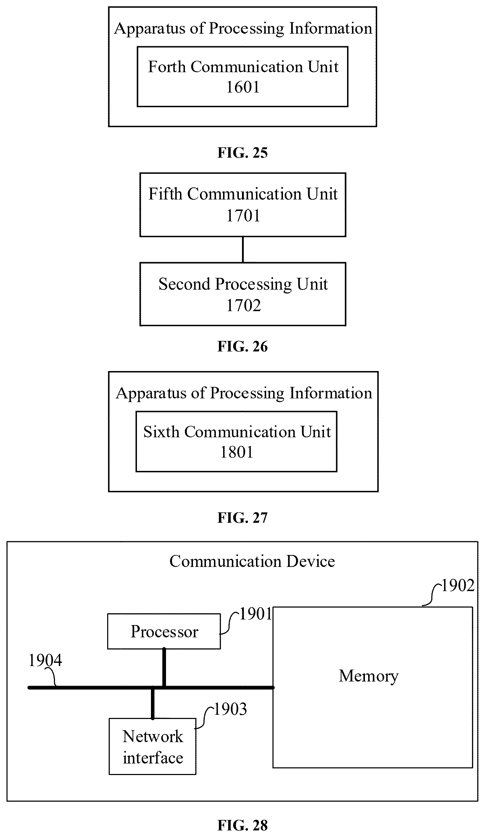

An embodiment of the present disclosure further provides an apparatus of processing information, and the apparatus is applied to a first terminal. FIG. 25 is a fourth schematic structural diagram of the apparatus of processing information according to the embodiment of the present disclosure. As shown in FIG. 25, the apparatus includes: a fourth communication unit 1601 configured to receive a first message transmitted by a first network device or a second message transmitted by a first edge application server discovery function or a first user plane function. The first message and the second message are used to instruct the first terminal to retransmit a DNS request to an H-DNS server, or are used to instruct the first terminal to transmit a DNS request to an H-DNS server. The first network device is at least one of a first session management function, the first edge application server discovery function or the first user plane function. The fourth communication unit 1601 is further configured to transmit the DNS request to the H-DNS server, or retransmit the DNS request to the H-DNS server.

In an embodiment of the present disclosure, the fourth communication unit 1601 in the apparatus can be implemented by a communication module (including a basic communication kit, an operating system, a communication module, a standardized interface, a protocol, etc.) and a transmitting/receiving antenna in practical applications.

An embodiment of the present disclosure further provides an apparatus of processing information. The apparatus is applied to a first session management function. FIG. 26 is a fifth schematic structural diagram of the apparatus of processing information according to the embodiment of the present disclosure. As shown in FIG. 26, the apparatus includes: a fifth communication unit 1701 configured to receive fourth information transmitted by a second session management function. The fourth information includes at least one of information of a second identifier, information indicating an identifier of a PLMN, an identifier of a PLMN, information indicating an identifier of a second session management function, or an identifier of the second session management function; or, the fourth information includes a second identifier, and the second identifier includes at least one of information indicating an identifier of a PLMN or information indicating an identifier of the second session management function.

In some alternative embodiments of the present disclosure, the fourth information is information at node granularity or node level, and/or the fourth information transmitted by the second session management function is received through node granularity or node level.

In some alternative embodiments of the present disclosure, the fifth communication unit 1701 is configured to: call a first service of the second session management function, to receive the fourth information from the second session management function, or, call a second service of a first session management function through the second session management function, to receive the fourth information is received from the second session management function.

In some alternative embodiments of the present disclosure, the first service and/or the second service is at least one of the following services: a service for transmitting offloading information, a service for transmitting an offloading policy, a service for transmitting node level offloading information, a service for transmitting a node level offloading policy, a VPLMN specific offloading information service, a VPLMN specific offloading policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

In some alternative embodiments, the first session management function is located at a visited location, and/or the second session management function is located at a home location.

In some alternative embodiments of the present disclosure, all or part of the fourth information is used to represent fifth information, and the fifth information is information related to offloading.

In some alternative embodiments of the present disclosure, the fifth information includes first information.

In some alternative embodiments of the present disclosure, the fifth communication unit 1701 is further configured to receive sixth information from the second session management function. The sixth information includes at least one of a second identifier, information indicating an identifier of a PLMN, information indicating an identifier of a second session management function, information related to an offloading policy, or a first association relationship. The first association relationship is an association relationship between at least two of the second identifier, the information indicating the identifier of the PLMN, the information indicating the identifier of the second session management function, or the information related to the offloading policy.

In some alternative embodiments of the present disclosure, the sixth information is determined by the second session management function and transmitted to the first session management function; or, the sixth information is determined by a first policy management function and forwarded to the first session management function through the second session management function; or, a part of contents of the sixth information is determined by the first policy management function, and the other part of the contents of the sixth information is determined by the second session management function, and the second session management function transmits contents determined by the first policy management function and contents determined by the second session management function to the first session management function.

In some alternative embodiments of the present disclosure, the fourth information is provided by the second session management function and transmitted to the first session management function; or, the fourth information is provided by a first policy management function and transmitted to the first session management function through the second session management function; or, a part of contents of the fourth information is provided by a first policy management function, and the other part of the contents of the fourth information is provided by the second session management function, and the second session management function transmits contents provided by the first policy management function and contents provided by the second session management function to the first session management function.

In some alternative embodiments of the present disclosure, the first session management function is located at a visited location; and/or the second session management function is located at a home location; and/or the first policy management function is located at a home location.

In an embodiment of the present disclosure, the fifth communication unit 1701 in the apparatus can be implemented by a communication module (including a basic communication kit, an operating system, a communication module, a standardized interface, a protocol, etc.) and a transmitting/receiving antenna in practical applications.

An embodiment of the present disclosure further provides an apparatus of processing information. The apparatus is applied to a second session management function. FIG. 27 is a sixth schematic structural diagram of the apparatus of processing information according to the embodiment of the present disclosure. As shown in FIG. 27, the apparatus includes: a sixth communication unit 1801 configured to transmit fourth information to a first session management function. The fourth information includes at least one of information of a second identifier, information indicating an identifier of a PLMN, an identifier of a PLMN, information indicating an identifier of a second session management function, or an identifier of the second session management function; or, the fourth information includes a second identifier, and the second identifier includes at least one of information indicating an identifier of a PLMN or information indicating an identifier of the second session management function.

In some alternative embodiments of the present disclosure, all or part of the fourth information is used to indicate fifth information, and the fifth information is information related to offloading.

In some alternative embodiments of the present disclosure, the fifth information includes first information.

In some alternative embodiments of the present disclosure, the sixth communication unit 1801 is further configured to transmit sixth information to the first session management function. The sixth information includes at least one of a second identifier, information indicating an identifier of a PLMN, information indicating an identifier of the second session management function, information related to an offloading policy, or a first association relationship. The first association relationship is an association relationship between at least two of the second identifier, the information indicating the identifier of the PLMN, the information indicating the identifier of the second session management function, or the information related to the offloading policy.

In some alternative embodiments of the present disclosure, the sixth information is determined by the second session management function and transmitted to the first session management function; or,
the sixth information is determined by a first policy management function and forwarded to the first session management function through the second session management function; or,
a part of contents of the sixth information is determined by the first policy management function, and the other part of the contents of the sixth information is determined by the second session management function, and the second session management function transmits contents determined by the first policy management function and contents determined by the second session management function to the first session management function.

In some alternative embodiments of the present disclosure, the fourth information is provided by the second session management function and transmitted to the first session management function; or,
the fourth information is provided by the first policy management function and transmitted to the first session management function through the second session management function; or,
a part of contents of the fourth information is provided by the first policy management function, and the other part of the contents of the fourth information is provided by the second session management function, and the second session management function transmits contents provided by the first policy management function and contents provided by the second session management function to the first session management function.

In some alternative embodiments of the present disclosure, the fourth information or a part of the contents of the fourth information is information at node granularity or node level, and/or the fourth information or a part of the contents of the fourth information is provided by the first policy management function through node granularity or node level.

In some alternative embodiments of the present disclosure, the sixth communication unit 1801 is further configured to: call a third service of the first policy control function, to receive the fourth information or a part of the content of the fourth information from the first policy control function; or, call a fourth service of the second session management function through a first policy control function, to receive the fourth information or a part of the contents of the fourth information from the first policy control function.

In some alternative embodiments of the present disclosure, the third service and/or the fourth service is at least one of the following services: a service for transmitting offloading information, a service for transmitting an offloading policy, a service for transmitting node level offloading information, a service for transmitting a node level offloading policy, a VPLMN specific offloading information service, a VPLMN specific offloading policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

In some alternative embodiments of the present disclosure, the first session management function is located at a visited location; and/or the second session management function is located at a home location; and/or the first policy management function is located at the home location.

In an embodiment of the present disclosure, the sixth communication unit 1801 in the apparatus can be implemented by a communication module (including a basic communication kit, an operating system, a communication module, a standardized interface, a protocol, etc.) and a transmitting/receiving antenna in practical applications.

An embodiment of the present disclosure further provides an apparatus of processing information. The apparatus is applied to a first network function, the apparatus including: a second processing unit and/or a seventh communication unit.

The second processing unit is configured to construct and/or transmit DNS request information through the seventh communication unit. The DNS request information includes at least one of address information related to an HPLMN, address information of a home user plane function (H-UPF), and address information of a home PDU session anchor (H-PSA).

In some alternative embodiments of the present disclosure, at least one of the address information related to the HPLMN, the address information of the H-UPF and the address information of the H-PSA is used as an Extended DNS Client Subnet option (ECS option).

In some alternative embodiments of the present disclosure, the seventh communication unit is further configured to receive first indication information transmitted by the second network function, and the first indication information is used to instruct the first network function to construct and/or transmit the DNS request information.

In some alternative embodiments of the present disclosure, the second processing unit is configured to construct and/or transmit the DNS request information by the first network function when an EAS IP included in the received DNS response does not belong to an authorized/allowed/possible IP range.

In some alternative embodiments of the present disclosure, the first network function is at least one of the following:
an edge application server discovery function, a user plane function, a uplink classifier, a PDU session anchor, or a session management function, and/or the second network function is a session management function.

In some alternative embodiments of the present disclosure, the first network function and/or the second network function is a network function of a VPLMN.

In an embodiment of the present disclosure, the second processing unit in the apparatus may be implemented by a CPU, a DSP, an MCU, or an FPGA in practical applications. The seventh communication unit in the device can be realized by a communication module (including a basic communication kit, an operating system, a communication module, a standardized interface, a protocol, etc.) and a transmitting/receiving antenna in practical application.

An embodiment of the present disclosure further provides an apparatus of processing information. The apparatus is applied to a first network function. the apparatus includes: a third processing unit and/or an eighth communication unit.

The third processing unit is configured to construct DNS request information and/or transmit the DNS request information to a second DNS server through the eighth communication unit, the second DNS server is provided by a HPLMN.

In some alternative embodiments of the present disclosure, the third processing unit is configured to construct the DNS request information and/or transmit the DNS request information to the second DNS server through the eighth communication unit when the EAS IP included in the DNS response does not belong to an authorized/allowed/possible IP range.

In some alternative embodiments of the present disclosure, the DNS request information includes a same full domain name (FQDN).

The DNS request information includes the same FQDN, which means at least one of the following situations:
a FQDN included in the DNS request information is the same as a FQDN corresponding to an Edge Application Server (EAS) Internet Protocol (IP) included in a DNS response;
a FQDN included in the DNS request information is the same as a FQDN included in a DNS response; or
a FQDN included in the DNS request information is the same as a FQDN included in a DNS request corresponding to a DNS response.

In some alternative embodiments of the present disclosure, the first network function is at least one of:
an edge application server discovery function, a user plane function, a uplink classifier, a PDU session anchor, or a session management function.

In some alternative embodiments of the present disclosure, the first network function is a network function of a VPLMN.

In an embodiment of the present disclosure, the third processing unit in the apparatus may be implemented by a CPU, a DSP, an MCU, or an FPGA in practical applications. The eighth communication unit in the device can be realized by a communication module (including a basic communication kit, an operating system, a communication module, a standardized interface, a protocol, etc.) and a transmitting/receiving antenna in practical application.

An embodiment of the present disclosure further provides an apparatus of processing information. The apparatus is applied to a third network function. The apparatus includes: a ninth communication unit configured to receive seventh information from a fourth network function. The seventh information includes at least one of: information of a second identifier, information indicating a PLMN identifier, an identifier of a PLMN, information indicating an identifier of a second session management function, or an identifier of a second session management function.

The seventh information is information at node granularity or node level, and/or the third network function receives the seventh information from the fourth network function through node granularity or node level.

In some alternative embodiments of the present disclosure, the ninth communication unit is configured to: call a fifth service of the fourth network function, to receive the seventh information from the fourth network function; or, call a sixth service of the third network function through the fourth network function, to receive the seventh information from the fourth network function.

In some alternative embodiments of the present disclosure, the fifth service and/or the sixth service is at least one of the following services: a service for transmitting offloading information, a service for transmitting an offloading policy, a service for transmitting node level offloading information, a service for transmitting a node level offloading policy, a VPLMN specific offloading information service, a VPLMN Specific Offloading Policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

In some alternative embodiments of the present disclosure, the third network function and/or the fourth network function is a session management function.

In some alternative embodiments, the third network function is located at a visited location, and/or the fourth network function is located at a home location.

In some alternative embodiments of the present disclosure, the third network function is a session management function, and/or the fourth network function is a policy control function.

In some alternative embodiments, the third network function and/or the fourth network function are located at a home location.

In an embodiment of the present disclosure, the ninth communication unit in the apparatus can be implemented by a communication module (including a basic communication kit, an operating system, a communication module, a standardized interface, a protocol, and the like) and a transmitting/receiving antenna in practical application.

An embodiment of the present disclosure further provides an apparatus of processing information. The apparatus is applied to a fourth network function. The apparatus includes: a tenth communication unit configured to transmit seventh information to a third network function. The seventh information includes at least one of: information of a second identifier, information indicating an identifier of a PLMN, an identifier of a PLMN, information indicating an identifier of a second session management function, or an identifier of a second session management function.

The seventh information is information at node granularity or node level, and/or the fourth network function transmits the seventh information to the third network function through node granularity or node level.

In some alternative embodiments of the present disclosure, the tenth communication unit is configured to: call a fifth service of the fourth network function through the third network function, to transmit the seventh information to the third network function; or, call a sixth service of the third network function, to transmit seventh information to the third network function.

In some alternative embodiments of the present disclosure, the fifth service and/or the sixth service is at least one of the following services: a service for transmitting offloading information, a service for transmitting an offloading policy, a service for transmitting node level offloading information, a service for transmitting a node level offloading policy, a VPLMN specific offloading information service, a VPLMN specific offloading policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

In some alternative embodiments of the present disclosure, the third network function and/or the fourth network function is a session management function.

In some alternative embodiments, the third network function is located at a visited location, and/or the fourth network function is located at a home location.

In some alternative embodiments of the present disclosure, the third network function is a session management function, and/or the fourth network function is a policy control function.

In some alternative embodiments of the present disclosure, the third network function and/or the fourth network function are located at a home location.

In an embodiment of the present disclosure, the tenth communication unit in the apparatus can be implemented by a communication module (including a basic communication kit, an operating system, a communication module, a standardized interface, a protocol, and the like) and a transmitting/receiving antenna in practical application.

It should be noted that, when the apparatus of processing information provided in the above-described embodiments perform information processing, the description is made by taking only the division of the above-described program modules as an example. In practical application, the above-described processing may be assigned to different program modules as necessary. That is, the internal structure of the apparatus may be divided into different program modules to complete all or part of the above-described processing. Further, the apparatus of processing information provided in the above-described embodiments have a same concept as the embodiments the method of processing information, and the specific implementation process thereof is detailed in the method embodiment, and will not be repeated herein.

Embodiments of the present disclosure further provide a communication device, and the communication device may be a first network device (such as at least one of a first session management function, a first edge application server discovery function, and a first user plane function), a first session management function, a first edge application server discovery function, a first user plane function, a first terminal, a second session management function, a first network function, a second network function, a third network function, or a fourth network function. FIG. 28 is a schematic structural diagram of a hardware of a communication device according to an embodiment of the present disclosure. As shown in FIG. 28, the communication device includes a memory 1902, a processor 1901, and a computer program stored in the memory 1902 and executable on the processor 1901. The processor 1901, when executing the program, implement the operations of methods of processing information applied to a first network device (such as at least one of a first session management function, a first edge application server discovery function, and a first user plane function), a first session management function, a first edge application server discovery function, a first user plane function, a first terminal, or a second session management function are implemented.

Optionally, the communication device further includes at least one network interface 1903. Therein, various components in the communication device are coupled together by a bus system 1904. It will be appreciated that the bus system 1904 is used to enable connected communication between these components. The bus system 1904 includes a power bus, a control bus, and a status signal bus in addition to a data bus. However, for clarity of illustration, various buses are designated as bus system 1904 in FIG. 28.

It will be appreciated that the memory 1902 may be a volatile memory or a non-volatile memory, or may include both volatile and non-volatile memory. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory (Flash Memory), a magnetic surface memory, an optical disc, or a Compact Disc Read-Only Memory (CD-ROM). The magnetic surface memory may be a magnetic disk memory or a magnetic tape memory. The volatile memory may be a Random Access Memory (RAM), which serves as an external cache. By way of example, but not limitation, many forms of RAM are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRAM), an Enhanced Synchronous Dynamic Random Access Memory (ESDRAM), a SyncLink Dynamic Random Access Memory (SLDRAM) and a Direct Rambus Random Access Memory (DRRAM). The memory 1902 described in the embodiments of the present disclosure is intended to include, but is not limited to, these and any other suitable types of memory.

The methods disclosed in the above-described embodiments of the present disclosure may be applied to or implemented by the processor 1901. The processor 1901 may be an integrated circuit chip having signal processing capabilities. In implementation, the operations of the above methods may be accomplished by integrated logic circuitry of hardware in the processor 1901 or instructions in the form of software. The processor 1901 described above may be a general-purpose processor, a DSP, or other programmable logic device, a discrete gate or transistor logic device, a discrete hardware component, or the like. The processor 1901 may implement or execute the methods, operations, and logical block diagrams disclosed in embodiments of the present disclosure. The general-purpose processor may be a microprocessor or any conventional processor or the like. The operations of the methods disclosed in combination with the embodiments of the present disclosure can be directly embodied as execution by the hardware decoding processor, or execution by combination of hardware and software modules in the decoding processor. The software module may be located in a storage medium located in the memory 1902, and the processor 1901 reads the information in the memory 1902 to complete the operations of the aforementioned methods in combination with its hardware.

In exemplary embodiments, the communication device may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, microprocessors, or other electronic components for performing the foregoing methods.

In an exemplary embodiment, an embodiment of the present disclosure further provides a computer-readable storage medium, such as a memory 1902 including a computer program executable by a processor 1901 of a communication device to complete the operations of the aforementioned methods. The computer-readable storage medium may be a memory such as a FRAM, a ROM, a PROM, an EPROM, an EEPROM, a Flash Memory, a magnetic surface memory, an optical disc, or a CD-ROM, or may also be a variety of devices including one or any combination of the memories described above.

The computer-readable storage medium according to an embodiment of the present disclosure has a computer program stored thereon. The program, when executed by a processor, implements operations of methods of processing information applied to a first network device (such as at least one of a first session management function, a first edge application server discovery function, and a first user plane function), a first session management function, a first edge application server discovery function, a first user plane function, a first terminal, or a second session management function.

The methods disclosed in several method embodiments provided by the present disclosure can be arbitrarily combined without conflict to acquire new method embodiments.

The features disclosed in several product embodiments provided by the present disclosure can be arbitrarily combined without conflict to acquire new product embodiments.

The features disclosed in several method or device embodiments provided by the present disclosure can be arbitrarily combined without conflict to acquire a new method or device embodiment.

In several embodiments provided by the present disclosure, it should be understood that the disclosed apparatus and methods may be implemented in other ways. The device embodiments described above are merely schematic. For example, the division of units is only a logical function division. In actual implementation, there may be other division methods, such as: multiple units or components may be combined, or may be integrated into another system, or some features may be ignored, or may not be implemented. Additionally, the coupling, or direct coupling, or communication connection between the components shown or discussed may be indirect coupling or communication connection through some interface, devices or units, and may be electrical, mechanical, or otherwise.

The units described above as separate units may or may not be physically separated, and the parts displayed as units may or may not be physical units, that is, they may be located in one place or may be distributed over a plurality of network units. Some or all of the units may be selected according to actual needs to achieve the purpose of implementing the solution of the embodiments.

In addition, in each embodiment of the present disclosure, each functional unit may be all integrated into one processing unit, each unit may be separately used as one unit, or two or more units may be integrated into one unit. The above integrated unit may be implemented in the form of hardware or in the form of hardware plus software functional units.

One of ordinary skill in the art will understand that all or part of the operations of implementing the above-described method embodiments can be completed by hardware related to program instructions, the aforementioned program can be stored in a computer-readable storage medium. The program, when executed, performs the operations including the above-described method embodiments. The storage medium includes various media capable of storing program codes, such as a removable storage device, a ROM, a RAM, a magnetic disk, or an optical disk.

Alternatively, the integrated unit of the present disclosure, if implemented in the form of a software function module and sold or used as an independent product, may be stored in a computer-readable storage medium. Based on such an understanding, the technical solutions of the embodiments disclosed herein, or the portions that constitute contributions to the prior art, may be embodied as a software product. This computer software product is stored on a storage medium and includes a plurality of instructions for causing a computer device (which may be a personal computer, server, or network device, etc.) to execute all or part of the methods described in the various embodiments of the present disclosure. The storage medium includes various media capable of storing program codes, such as a removable storage device, a ROM, a RAM, a magnetic disk, or an optical disk.

The above description merely provides specific embodiments of the present disclosure, but the scope of the present disclosure is not limited thereto. Any change or substitution which can be easily obtained by the person skilled in the art within the technical scope of the present disclosure should be covered within the scope of the present disclosure. Therefore, the scope of the present disclosure should be based on the scope of the claims.

## Claims

1. A method of processing information, comprising:
acquiring an identifier of an edge application server; and
determining that the identifier of the edge application server matches or does not match first information, the first information comprising a first identifier, the first identifier being one or more identifiers, or the first identifier being a range of identifiers.

2. The method of claim 1, wherein the method is applied to a first network device, the first network device is at least one of a first session management function, a first edge application server discovery function, or a first user plane function.

3. The method of claim 1 or 2, further comprising:
transmitting a first message in case of determining that the identifier of the edge application server matches or does not match the first information.

4. The method of claim 3, wherein transmitting the first message in the case that determining that the identifier of the edge application server matches or does not match the first information comprises at least one of:
if the first identifier is one or more identifiers for which offloading in local and/or in a visited network is not authorized, not permitted/not allowed, then in case of determining that the identifier of the edge application server matches the first information, transmitting the first message; or,
if the first identifier is one or more identifiers for which offloading in local and/or in a visited network is authorized/permitted/allowed, then in case of determining that the identifier of the edge application server does not match the first information, transmitting the first message.

5. The method of claim 3 or 4, wherein the method is applied to a first network device, and in case that the first network device is a first session management function, transmitting the first message comprises:
transmitting the first message to a first edge application server discovery function or a first user plane function, wherein the first message is used to instruct the first edge application server discovery function or the first user plane function to transmit a Domain Name System (DNS) request; or
transmitting the first message to a first edge application server discovery function or a first user plane function, wherein the first message comprises second information used to instruct the first edge application server discovery function or the first user plane function to transmit a DNS request; or
transmitting the first message to a first edge application server discovery function or a first user plane function, so that the first edge application server discovery function or the first user plane function transmits a DNS request after receiving the first message.

6. The method of claim 5, wherein transmitting the first message comprises:
constructing, by the first session management function, the DNS request, and transmitting the first message carrying the DNS request to the first edge application server discovery function or the first user plane function, wherein the first message is used to instruct the first edge application server discovery function or the first user plane function to transmit the DNS request; or
constructing, by the first session management function, the DNS request, and transmitting the first message carrying the DNS request to the first edge application server discovery function or the first user plane function, wherein the first message comprises the second information used to instruct the first edge application server discovery function or the first user plane function to transmit the DNS request; or
constructing, by the first session management function, the DNS request and transmitting the first message carrying the DNS request to the first edge application server discovery function or the first user plane function, so that the first edge application server discovery function or the first user plane function transmits the DNS request after receiving the first message; or
transmitting, by the first session management function, the first message to the first edge application server discovery function or the first user plane function, wherein the first message is used to instruct the first edge application server discovery function or the first user plane function to construct the DNS request and/or transmit the DNS request; or
transmitting, by the first session management function, the first message to the first edge application server discovery function or the first user plane function, wherein the first message comprises third information used to instruct the first edge application server discovery function or the first user plane function to construct the DNS request and/or transmit the DNS request; or
transmitting, by the first session management function, the first message to the first edge application server discovery function or the first user plane function, so that the first edge application server discovery function or the first user plane function constructs the DNS request and/or transmits the DNS request after receiving the first message.

7. The method of claim 6, wherein when the DNS request carried in the first message comprises information related to a Home Public Land Mobile Network (H-PLMN), the operation that the first edge application server discovery function or the first user plane function transmits the DNS request comprises: the first edge application server discovery function or the first user plane function transmits the DNS request to a Home DNS (H-DNS) server or a visited DNS (V-DNS) server; and/or
when the DNS request carried in the first message does not comprise information related to a Home Public Land Mobile Network (H-PLMN), the operation that the first edge application server discovery function or the first user plane function transmits the DNS request comprises: the first edge application server discovery function or the first user plane function transmits the DNS request to a Home DNS (H-DNS) server.

8. The method of claim 6, wherein when the DNS request constructed by the first edge application server discovery function or the first user plane function comprises information related to a Home Public Land Mobile Network (H-PLMN), the operation that the first edge application server discovery function or the first user plane function transmits the DNS request comprises: the first edge application server discovery function or the first user plane function transmits the DNS request to a Home DNS (H-DNS) server or a visited DNS (V-DNS) server; and/or
when the DNS request constructed by the first edge application server discovery function or the first user plane function does not comprise information related to a Home Public Land Mobile Network (H-PLMN), the operation that the first edge application server discovery function or the first user plane function transmits the DNS request comprises: the first edge application server discovery function or the first user plane function transmits the DNS request to a Home DNS (H-DNS) server.

9. The method of claim 3 or 4, wherein the method is applied to a first network device, in case that the first network device is a first edge application server discovery function or a first user plane function, transmitting the first message comprises:
transmitting the first message to a Domain Name System (DNS) server.

10. The method of claim 9, wherein transmitting the first message to the DNS server comprises:
transmitting a DNS request to the DNS server.

11. The method of claim 10, wherein the operation that the DNS request is transmitted to the DNS server comprises at least one of:
transmitting the DNS request to a Home DNS (H-DNS) server or a visited DNS (V-DNS) server, wherein the DNS request comprises information related to a Home Public Land Mobile Network (H-PLMN); or
transmitting the DNS request to a Home DNS (H-DNS) server, wherein the DNS request does not comprise information related to a Home Public Land Mobile Network (H-PLMN).

12. The method of claim 9 or 10, wherein transmitting the first message to the DNS server comprises:
constructing the DNS request and transmitting the DNS request to the DNS server.

13. The method of claim 3 or 4, wherein the method is applied to a first network device, in case that the first network device is a first session management function, transmitting the first message comprises:
transmitting the first message to a first terminal, the first message being used to instruct the first terminal to retransmit a Domain Name System (DNS) request to a Home DNS (H-DNS) server, or instruct the first terminal to transmit a Domain Name System (DNS) request to a Home DNS (H-DNS) server; or,
transmitting the first message to a first edge application server discovery function or a first user plane function, wherein the first message is used to instruct the first edge application server discovery function or the first user plane function to transmit a second message to the first terminal, or the first message is used to cause the first edge application server discovery function or the first user plane function to transmit a second message to the first terminal after receiving the first message.

14. The method of claim 13, wherein the second message is used to instruct the first terminal to retransmit the DNS request to the H-DNS server, or the second message is used to instruct the first terminal to transmit the DNS request to the H-DNS server.

15. The method of claim 13, wherein transmitting the first message comprises:
in case of determining that the identifier of the edge application server matches or does not match the first information, determining to instruct the first terminal to retransmit the DNS request or determining to instruct the first terminal to transmit the DNS request, and transmitting the first message.

16. The method of claim 3 or 4, wherein the method is applied to a first network device, in case that the first network device is a first edge application server discovery function or a first user plane function, transmitting the first message comprises:
transmitting the first message to the first terminal, wherein the first message is used to instruct the first terminal to retransmit a Domain Name System (DNS) request to a Home DNS (H-DNS) server, or the first message is used to instruct the first terminal to transmit a Domain Name System (DNS) request to a Home DNS (H-DNS) server.

17. The method of claim 16, wherein transmitting the first message comprises:
in case of determining that the identifier of the edge application server matches or does not match the first information, determining to instruct the first terminal to retransmit the DNS request or determining to instruct the first terminal to transmit the DNS request, and transmitting the first message to the first terminal.

18. The method of claim 1, wherein in case that the method is applied to a first network device and the first network device is a first session management function, the identifier of the edge application server is from a first edge application server discovery function or a first user plane function;
in case that the method is applied to a first network device and the first network device is a first edge application server discovery function or a first user plane function, the identifier of the edge application server is from a Domain Name System (DNS) server or a Local Domain Name System (L-DNS) server.

19. The method of claim 1, wherein in case that the method is applied to a first network device and the first network device is a first session management function, the method further comprises:
receiving the first information from a second session management function; and/or,
in case that the first network device is a first edge application server discovery function or a first user plane function, the method further comprises:
receiving the first information transmitted by a first session management function.

20. The method of claim 19, wherein the first session management function, the first edge application server discovery function, and the first user plane function are all located at a visited location; and/or,
the second session management function is located at a home location.

21. A method of processing information, applied to a first edge application server discovery function or a first user plane function, the method comprising:
receiving a first message transmitted by a first session management function, the first message being used to instruct the first edge application server discovery function or the first user plane function to transmit a Domain Name System (DNS) request; or, the first message comprising second information used to instruct the first edge application server discovery function or the first user plane function to transmit a Domain Name System (DNS) request; or, the first message causes the first edge application server discovery function or the first user plane function to transmit a Domain Name System (DNS) request after receiving the first message; and
transmitting the DNS request to a DNS server.

22. The method of claim 21, wherein receiving the first message transmitted by the first session management function comprises:
receiving the first message carrying the DNS request transmitted by the first session management function, wherein the first message is used to instruct the first edge application server discovery function or the first user plane function to transmit the DNS request; or, the first message comprises second information used to instruct the first edge application server discovery function or the first user plane function to transmit the DNS request; or, the first message causes the first edge application server discovery function or the first user plane function to transmit the DNS request after receiving the first message; or
receiving the first message transmitted by the first session management function and constructing the DNS request based on the first message, wherein the first message is used to instruct the first edge application server discovery function or the first user plane function to construct the DNS request and transmit the DNS request; or, the first message comprises third information used to instruct the first edge application server discovery function or the first user plane function to construct the DNS request and/or transmit the DNS request; or, the first message causes the first edge application server discovery function or the first user plane function to construct the DNS request and transmit the DNS request after receiving the first message.

23. The method of claim 21 or 22, wherein transmitting the DNS request comprises at least one of:
when the DNS request carried in the first message comprises information related to a Home Public Land Mobile Network (H-PLMN), transmitting the DNS request to a Home DNS (H-DNS) server or a visited DNS (V-DNS) server; or,
when the DNS request carried in the first message does not comprise information related to a Home Public Land Mobile Network (H-PLMN), transmitting the DNS request to a Home DNS (H-DNS) server.

24. The method of claim 21 or 22, wherein transmitting the DNS request comprises at least one of:
when the DNS request constructed by the first edge application server discovery function or the first user plane function comprises information related to a Home Public Land Mobile Network (H-PLMN), transmitting the DNS request to a Home DNS (H-DNS) server or a visited DNS (V-DNS) server; or,
when the DNS request constructed by the first edge application server discovery function or the first user plane function does not comprise information related to a Home Public Land Mobile Network (H-PLMN), transmitting the DNS request to a Home DNS (H-DNS) server.

25. The method of claim 21, wherein the first session management function, the first edge application server discovery function, and the first user plane function are all located at a visited location.

26. A method of processing information, applied to a first edge application server discovery function or a first user plane function, the method comprising:
receiving a first message transmitted by a first session management function, the first message being used to instruct the first edge application server discovery function or the first user plane function to transmit a second message to a first terminal, or the first message being used to cause the first edge application server discovery function or the first user plane function to transmit a second message to a first terminal after receiving the first message; and
transmitting the second message to the first terminal.

27. The method of claim 26, wherein the second message is used to instruct the first terminal to retransmit a Domain Name System (DNS) request to a Home DNS (H-DNS) server, or the second message is used to instruct the first terminal to transmit a Domain Name System (DNS) request to a Home DNS (H-DNS) server.

28. The method of claim 26, wherein the first session management function, the first edge application server discovery function, and the first user plane function are all located at a visited location.

29. A method of processing information, applied to a first terminal, the method comprising:
receiving a first message transmitted by a first network device, or receiving a second message transmitted by a first edge application server discovery function or a first user plane function, the first message and the second message being used to instruct the first terminal to retransmit a Domain Name System (DNS) request to a Home DNS (H-DNS) server, or the first message and the second message being used to instruct the first terminal to transmit a Domain Name System (DNS) request to a Home DNS (H-DNS) server, the first network device being at least one of a first session management function, the first edge application server discovery function or the first user plane function; and
transmitting the DNS request to the H-DNS server, or retransmitting the DNS request to the H-DNS server.

30. A method of processing information, applied to a first session management function, the method comprising:
receiving fourth information transmitted by a second session management function, the fourth information comprising at least one of information of a second identifier, information indicating an identifier of a Public Land Mobile Network (PLMN), an identifier of a PLMN, information indicating an identifier of a second session management function, or an identifier of the second session management function; or, the fourth information comprising a second identifier, and the second identifier comprising at least one of information indicating an identifier of a PLMN or information indicating an identifier of the second session management function.

31. The method of claim 30, wherein
the fourth information is information at node granularity or node level, and/or the fourth information transmitted by the second session management function is received through node granularity or node level.

32. The method of claim 31, wherein receiving the fourth information transmitted by the second session management function comprises:
calling, by the first session management function, a first service of the second session management function, to receive the fourth information from the second session management function; or,
calling, by the first session management function, a second service of a first session management function through the second session management function, to receive the fourth information from the second session management function.

33. The method of claim 32, wherein
at least one of the first service or the second service is at least one of the following services: a service for transmitting offloading information, a service for transmitting an offloading policy, a service for transmitting node level offloading information, a service for transmitting a node level offloading policy, a Visited PLMN (VPLMN) specific offloading information service, a VPLMN specific offloading policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

34. The method of any one of claims 31-33, wherein
the first session management function is located at a visited location, and/or the second session management function is located at a home location.

35. The method of claim 30, wherein all or part of the fourth information is used to indicate fifth information, and the fifth information is information related to offloading.

36. The method of claim 35, wherein the fifth information comprises the first information.

37. The method of claim 30, further comprising:
receiving sixth information from the second session management function, wherein the sixth information comprises at least one of a second identifier, information indicating an identifier of a PLMN, information indicating an identifier of a second session management function, information related to an offloading policy, or a first association relationship, the first association relationship is an association relationship between at least two of the second identifier, the information indicating the identifier of the PLMN, the information indicating the identifier of the second session management function, or the information related to the offloading policy.

38. The method of claim 37, wherein
the sixth information is determined by the second session management function and transmitted to the first session management function; or,
the sixth information is determined by a first policy management function and forwarded to the first session management function through the second session management function; or,
a part of contents of the sixth information is determined by the first policy management function, and the other part of the contents of the sixth information is determined by the second session management function, and the second session management function transmits contents determined by the first policy management function and contents determined by the second session management function to the first session management function.

39. The method of claim 30, wherein
the fourth information is provided by the second session management function and transmitted to the first session management function; or,
the fourth information is provided by a first policy management function and transmitted to the first session management function through the second session management function; or,
a part of contents of the fourth information is provided by a first policy management function, and the other part of the contents of the fourth information is provided by the second session management function, and the second session management function transmits contents provided by the first policy management function and contents provided by the second session management function to the first session management function.

40. The method of claim 38 or 39, wherein
the first session management function is located at a visited location; and/or the second session management function is located at a home location; and/or the first policy management function is located at the home location.

41. A method of processing information, applied to a second session management function, the method comprising:
transmitting fourth information to a first session management function, the fourth information comprising at least one of: information of a second identifier, information indicating an identifier of a Public Land Mobile Network (PLMN), an identifier of a PLMN, information indicating an identifier of the second session management function, or an identifier of a second session management function; or, the fourth information comprising a second identifier, and the second identifier comprises at least one of information indicating an identifier of a PLMN or information indicating an identifier of the second session management function.

42. The method of claim 41, wherein all or part of the fourth information is used to indicate fifth information, and the fifth information is information related to offloading.

43. The method of claim 42, wherein the fifth information comprises the first information.

44. The method of claim 41, further comprising:
transmitting sixth information to the first session management function, wherein the sixth information comprises at least one of a second identifier, information indicating an identifier of a PLMN, information indicating an identifier of the second session management function, information related to an offloading policy, or a first association relationship, the first association relationship is an association relationship between at least two of the second identifier, the information indicating the identifier of the PLMN, the information indicating the identifier of the second session management function, or the information related to the offloading policy.

45. The method of claim 44, wherein the sixth information is determined by the second session management function and transmitted to the first session management function; or,
the sixth information is determined by a first policy management function and forwarded to the first session management function through the second session management function; or,
a part of contents of the sixth information is determined by the first policy management function, and the other part of the contents of the sixth information is determined by the second session management function, and the second session management function transmits contents determined by the first policy management function and contents determined by the second session management function to the first session management function.

46. The method of claim 41, wherein the fourth information is provided by the second session management function and transmitted to the first session management function; or,
the fourth information is provided by the first policy management function and transmitted to the first session management function through the second session management function; or,
a part of contents of the fourth information is provided by the first policy management function, and the other part of the contents of the fourth information is provided by the second session management function, and the second session management function transmits contents provided by the first policy management function and contents provided by the second session management function to the first session management function.

47. The method of claim 46, wherein
the fourth information or a part of the contents of the fourth information is information at node granularity or node level, and/or the fourth information or a part of the contents of the fourth information is provided by the first policy management function through node granularity or node level.

48. The method of claim 46, further comprising:
calling, by the second session management function, a third service of a first policy control function, to receive the fourth information or a part of the contents of the fourth information from the first policy control function; or,
calling, by the second session management function, a fourth service of the second session management function through a first policy control function, to receive the fourth information or a part of the contents of the fourth information from the first policy control function.

49. The method of claim 48, wherein,
at least one of the third service or the fourth service is at least one of the following services: a service for transmitting offloading information, a service for transmitting an offloading policy, a service for transmitting node level offloading information, a service for transmitting a node level offloading policy, a Visited PLMN (VPLMN) specific offloading information service, a VPLMN specific offloading policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

50. The method of any one of claims 44-48, wherein the first session management function is located at a visited location; and/or the second session management function is located at a home location; and/or the first policy management function is located at the home location.

51. A method of processing information, comprising:
constructing and/or transmitting, by a first network function, Domain Name System (DNS) request information, the DNS request information comprising at least one of: address information related to a Home Public Land Mobile Network (HPLMN), address information of a Home User Plane Function (H-UPF), or address information of Home Protocol Data Unit (PDU) Session Anchor (H-PSA).

52. The method of claim 51, wherein at least one of the address information related to the HPLMN, the address information of the H-UPF and the address information of the H-PSA is used as an Extended DNS Client Subnet option (ECS option).

53. The method of claim 51, further comprising:
receiving, by the first network function, first indication information transmitted by a second network function, the first indication information is used to instruct the first network function to construct and/or transmit the DNS request information.

54. The method of claim 51, wherein constructing and/or transmitting, by the first network function, the DNS request information comprises:
constructing and/or transmitting, by the first network function, the DNS request information when an Edge Application Server (EAS) Internet Protocol (IP) comprised in a DNS response does not belong to an authorized/permitted/allowed IP range.

55. The method of claim 51, wherein the first network function is at least one of:
an edge application server discovery function, a user plane function, a uplink classifier, a PDU session anchor, or a session management function.

56. The method of claim 51 or 53, wherein the second network function is a session management function.

57. The method of claim 51, wherein the first network function is a network function of a Visited Public Land Mobile Network (VPLMN).

58. The method of claim 51 or 53, wherein the second network function is a network function of a Visited Public Land Mobile Network (VPLMN).

59. A method of processing information, comprising:
constructing and/or transmitting, by a first network function, Domain Name System (DNS) request information to a second DNS server, the second DNS server being provided by a Home Public Land Mobile Network (HPLMN).

60. The method of claim 59, wherein constructing and/ or transmitting, by the first network function, the DNS request information to the second DNS server comprises:
constructing and/or transmitting, by the first network function, the DNS request information to the second DNS server when an Edge Application Server (EAS) Internet Protocol (IP) comprised in a DNS response does not belong to an authorized/permitted/allowed IP range.

61. The method of claim 59 or 60, wherein the DNS request information comprises a same Full Qualified Domain Name (FQDN);
and wherein the DNS request information comprises the same FQDN, which means at least one of the following situations:
a FQDN comprised in the DNS request information is the same as a FQDN corresponding to an Edge Application Server (EAS) Internet Protocol (IP) comprised in a DNS response;
a FQDN comprised in the DNS request information is the same as a FQDN comprised in a DNS response; or
a FQDN comprised in the DNS request information is the same as a FQDN comprised in a DNS request corresponding to a DNS response.

62. The method of claim 59, wherein the first network function is at least one of:
an edge application server discovery function, a user plane function, a uplink classifier, a PDU session anchor, or a session management function.

63. The method of claim 59, wherein the first network function is a network function of a Visited Public Land Mobile Network (VPLMN).

64. A method of processing information, applied to a third network function, the method comprising:
receiving, by a third network function, seventh information from a fourth network function, the seventh information comprising at least one of: information of a second identifier, information indicating a Public Land Mobile Network (PLMN) identifier, an identifier of a PLMN, information indicating an identifier of a second session management function, or an identifier of a second session management function,
wherein the seventh information is information at node granularity or node level, and/or the third network function receives the seventh information from the fourth network function through node granularity or node level.

65. The method of claim 64, wherein receiving, by the third network function, the seventh information from the fourth network function comprises:
calling, by the third network function, a fifth service of the fourth network function, to receive the seventh information from the fourth network function; or,
calling, by the third network function, a sixth service of the third network function through the fourth network function, to receive the seventh information from the fourth network function.

66. The method of claim 65, wherein
at least one of the fifth service or the sixth service is at least one of the following services: a service for transmitting offloading information, a service for transmitting an offloading policy, a service for transmitting node level offloading information, a service for transmitting a node level offloading policy, a Visited PLMN (VPLMN) specific offloading information service, a VPLMN Specific Offloading Policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

67. The method of any one of claims 64-66, wherein
at least one of the third network function or the fourth network function is a session management function.

68. The method of claim 67, wherein
the third network function is located at a visited location, and/or the fourth network function is located at a home location.

69. The method of any one of claims 64-66, wherein
the third network function is a session management function and/or the fourth network function is a policy control function.

70. The method of claim 69, wherein
at least one of the third network function or the fourth network function is located at a home location.

71. A method of processing information, applied to a fourth network function, the method comprising:
transmitting, by the fourth network function, seventh information to a third network function, the seventh information comprising at least one of: information of a second identifier, information indicating an identifier of a Public Land Mobile Network (PLMN), an identifier of a PLMN, information indicating an identifier of a second session management function, or an identifier of a second session management function,
wherein the seventh information is information at node granularity or node level, and/or the fourth network function transmits the seventh information to the third network function through node granularity or node level.

72. The method of claim 71, wherein transmitting, by the fourth network function, the seventh information to the third network function comprises:
calling, by the fourth network function, a fifth service of the fourth network function through the third network function, to transmit the seventh information to the third network function; or,
calling, by the fourth network function, a sixth service of the third network function, to transmit the seventh information to the third network function.

73. The method of claim 72, wherein at least one of the fifth service or the sixth service is at least one of the following services: a service for transmitting offloading information, a service for transmitting an offloading policy, a service for transmitting node level offloading information, a service for transmitting a node level offloading policy, a Visited PLMN (VPLMN) specific offloading information service, a VPLMN specific offloading policy service, an offloading information service, an offloading policy service, a local offloading service, a VPLMN local offloading service, a node offloading information service, a node offloading policy service, a service for transmitting an offloading information subscription, a service for transmitting an offloading policy subscription, a service for transmitting a node level offloading information subscription, or a service for transmitting a node level offloading policy subscription.

74. The method of any one of claims 71-73, wherein at least one of the third network function or the fourth network function is a session management function.

75. The method of claim 74, wherein the third network function is located at a visited location and/or the fourth network function is located at a home location.

76. The method of any one of claims 71-73, wherein the third network function is a session management function and/or the fourth network function is a policy control function.

77. The method of claim 76, wherein at least one of the third network function or the fourth network function is located at a home location.

78. An apparatus of processing information, the apparatus comprising:
a first communication unit, configured to acquire an identifier of an edge application server; and
a first processing unit, configured to determine that the identifier of the edge application server matches or does not match first information, the first information comprising a first identifier, the first identifier being one or more identifiers, or the first identifier being a range of identifiers.

79. An apparatus of processing information, applied to a first edge application server discovery function or a first user plane function, the apparatus comprising: a second communication unit, configured to:
receive a first message transmitted by a first session management function, the first message being used to instruct the first edge application server discovery function or the first user plane function to transmit a Domain Name System (DNS) request; or, the first message comprising second information used to instruct the first edge application server discovery function or the first user plane function to transmit a Domain Name System (DNS) request; or, the first message causes the first edge application server discovery function or the first user plane function to transmit a Domain Name System (DNS) request after receiving the first message; and
transmit the DNS request.

80. An apparatus of processing information, applied to a first edge application server discovery function or a first user plane function, the apparatus comprising: a third communication unit, configured to:
receive a first message transmitted by a first session management function, the first message being used to instruct the first edge application server discovery function or the first user plane function to transmit a second message to a first terminal, or the first message being used to cause the first edge application server discovery function or the first user plane function to transmit a second message to a first terminal after receiving the first message; and
transmit the second message to the first terminal.

81. An apparatus of processing information, applied to a first terminal, the apparatus comprising: a fourth communication unit, configured to:
receive a first message transmitted by a first network device, or receiving a second message transmitted by a first edge application server discovery function or a first user plane function, the first message and the second message being used to instruct the first terminal to retransmit a Domain Name System (DNS) request to a Home DNS (H-DNS) server, or the first message and the second message being used to instruct the first terminal to transmit a Domain Name System (DNS) request to a Home DNS (H-DNS) server, the first network device being at least one of a first session management function, the first edge application server discovery function or the first user plane function; and
transmit the DNS request to the H-DNS server, or retransmitting the DNS request to the H-DNS server.

82. An apparatus of processing information, applied to a first session management function, the apparatus comprising:
a fifth communication unit, configured to receive fourth information transmitted by a second session management function, the fourth information comprising at least one of information of a second identifier, information indicating a Public Land Mobile Network (PLMN) identifier, an identifier of a PLMN, information indicating an identifier of a second session management function, or an identifier of a second session management function; or, the fourth information comprising a second identifier, and the second identifier comprising at least one of information indicating an identifier of a PLMN or information indicating an identifier of a second session management function.

83. An apparatus of processing information, applied to a second session management function, the apparatus comprising:
a sixth communication unit, configured to transmit fourth information to a first session management function, the fourth information comprising at least one of: information of a second identifier, information indicating a Public Land Mobile Network (PLMN) identifier, an identifier of a PLMN, information indicating an identifier of a second session management function, or an identifier of a second session management function; or, the fourth information comprising a second identifier, and the second identifier comprises at least one of information indicating an identifier of a PLMN or information indicating an identifier of a second session management function.

84. An apparatus of processing information, applied to a first network function, the apparatus comprising at least one of: a second processing unit or a seventh communication unit, wherein
the second processing unit is configured to construct Domain Name System (DNS) request information and/or transmit the DNS request information through the seventh communication unit, the DNS request information comprises at least one of: address information related to a Home Public Land Mobile Network (HPLMN), address information of a Home User Plane Function (H-UPF), or address information of Home Protocol Data Unit (PDU) Session Anchor (H-PSA).

85. An apparatus of processing information, applied to a first network function, the apparatus comprising at least one of: a third processing unit or an eighth communication unit, wherein
the third processing unit is configured to construct Domain Name System (DNS) request information and/or transmit the DNS request information to a second DNS server through the eighth communication unit, the second DNS server is provided by a Home Public Land Mobile Network (HPLMN).

86. An apparatus of processing information, applied to a third network function, the apparatus comprising:
a ninth communication unit, configured to receive seventh information from a fourth network function, the seventh information comprising at least one of: information of a second identifier, information indicating an identifier of a Public Land Mobile Network (PLMN), an identifier of a PLMN, information indicating an identifier of a second session management function, or an identifier of a second session management function,
wherein the seventh information is information at node granularity or node level, and/or the third network function receives the seventh information from the fourth network function through node granularity or node level.

87. An apparatus of processing information, applied to a fourth network function, the apparatus comprising:
a tenth communication unit, configured to transmit seventh information to a third network function, the seventh information comprising at least one of: information of a second identifier, information indicating an identifier of a Public Land Mobile Network (PLMN), an identifier of a PLMN, information indicating an identifier of a second session management function, or an identifier of a second session management function,
wherein the seventh information is information at node granularity or node level, and/or the fourth network function transmits the seventh information to the third network function through node granularity or node level.

88. A computer-readable storage medium, having stored thereon a computer program, wherein the program, when executed by a processor, implements the operations of the method of any one of claims 1-20; or,
the program, when executed by a processor, implements the operations of the method of any one of claims 21-25; or,
the program, when executed by a processor, implements the operations of the method of any one of claims 26-28; or,
the program, when executed by a processor, implements the operations of the method of claim 29; or, the program, when executed by a processor, implements the operations of the method of any one of claims 30-40; or,
the program, when executed by a processor, implements the operations of the method of any one of claims 41-50; or,
the program, when executed by a processor, implements the operations of the method of any one of claims 51-58; or,
the program, when executed by a processor, implements the operations of the method of any one of claims 59-63; or,
the program, when executed by a processor, implements the operations of the method of any one of claims 64-70; or,
the program, when executed by a processor, implements the operations of the method of any one of claims 71-77.

89. A communication device, comprising a memory, a processor and a computer program stored in the memory and executable on the processor, wherein the processor, when executing the program, implements the operations of the method of any one of claims 1-20; or,
the processor, when executing the program, implements the operations of the method of any one of claims 21-25; or,
the processor, when executing the program, implements the operations of the method of any one of claims 26-28; or,
the processor, when executing the program, implements the operations of the method of claim 29; or, the processor, when executing the program, implements the operations of the method of any one of claims 30-40; or,
the processor, when executing the program, implements the operations of the method of any one of claims 41-50; or,
the processor, when executing the program, implements the operations of the method of any one of claims 51-58; or,
the processor, when executing the program, implements the operations of the method of any one of claims 59-63; or,
the processor, when executing the program, implements the operations of the method of any one of claims 64-70; or,
the processor, when executing the program, implements the operations of the method of any one of claims 71-77.
